Europäisches Patentamt

European Patent Office

Office européen des brevets

(19)

(11) EP 0 793 184 A2

(12) EUROPEAN PATENT APPLICATION

(43) Date of publication:
03.09.1997 Bulletin 1997/36

(51) Int Cl.⁶: **G06F 17/60**

(21) Application number: 96304008.4

(22) Date of filing: 03.06.1996

(84) Designated Contracting States:
**AT BE CH DE DK ES FI FR GB GR IE IT LI LU MC NL PT SE**

(30) Priority: 07.06.1995 US 475575

(71) Applicant: **Dun & Bradstreet Software Services, Inc.**
Atlanta, Georgia 30326-1276 (US)

(72) Inventors:
• **Rossi, Charles**
Nesthborough, Massachusetts 01532 (US)
• **Vinter, Stephen P.**
Ashland, Massachusetts 01721 (US)

• **Ancona, James P.**
Boylston, Massachusetts 01505 (US)
• **Morrison, Ed**
Brockton, Massachusetts 02402 (US)
• **Diebboll, Robert**
Lincoln, Massachusetts 01773 (US)
• **Delvecchio, Paul**
Medway, Massachusetts 02053 (US)
• **Eddy, Jonathan**
Shrewsbury, Massachusetts 01545 (US)

(74) Representative: **Brunner, Michael John**
**GILL JENNINGS & EVERY**
**Broadgate House**
**7 Eldon Street**
**London EC2M 7LH (GB)**

(54) **Method and apparatus for distributing work flow processes among a plurality of users**

(57)    A multi-user, client-server computer system utilizes information flow technology, where information in an organization is logically and automatically routed through a predefined sequence of activities to appropriate users who need the information, or who must enter needed information. After a first user completes an activity, the system evaluates the activity performed by the first user and, based upon that activity, routes information to a second user for performing a second activity. In accordance with the invention, data utilized in connection with the activities is stored at a central storage facility. Portions of this data are duplicatively replicated among a plurality of remote storage facilities for access by users. Similarly, Portions of this data are distributed among a plurality of remote storage facilities for access by users. This replication and distribution of data enhances system performance and efficiency.

FIG. 1F

## Description

This invention relates generally to automated information flow technology and, in particular, to a system for maintaining and distributing information between a plurality of users in a transactional based information flow environment.

The use of computer systems as a means of gathering and distributing information has become commonplace in modern organizations. Prior art computer systems typically use "document based" technology to gather and distribute the organization's information in the form of computer documents stored as files.

In recent years, advancements in "document based" computer system technology have been made which facilitate the flow of information between individuals within the organization. One common procedure, known as "work flow" allows work-related information to flow among individuals within the organization. The information flows in a "document-based" form that typically follows a model of a manual work flow process, where documents are physically routed from one individual to another. Further, the "document based" computing procedure provides a means for the individuals (users of the computer system) to add, delete or change information within the computer document. The revised document is then disseminated or flowed to other users within the organization following the manual work flow model.

An example of such a work flow is the routing of a document within an organization for the purpose of obtaining an approval. In a computer system for implementing a purchase order flow, a first user, such as a purchasing agent, initially creates a purchase order document. The creation of the purchase order document may include adding purchase order information to a computerized purchase order document image, drafting a purchase order computer document or a combination of both. After the purchase order document is created and at the command of the purchasing agent, the document may then be electronically routed to the second user, such as the purchasing manager, who could simply approve/disapprove the document or may add, delete or change information in the document prior to giving his/her approval. Finally, the document may be electronically routed to a third user, such as a finance or engineering manager, who may either approve or disapprove the purchase order document. The document may then be electronically routed back to the purchasing agent, who may then act upon the document accordingly.

A drawback associated with the above prior art technology is that an entire document image, or at least all the information contained within the document, must be accessed by each individual in the information flow. This will occur even if any one of the individuals is only interested in some, but not all, of the information in the document. For example, the purchasing manager might only be interested in information related to the quantity and vendor of a requested part, while the finance manager might only be interested in the quantity and cost of the part. Nonetheless, both the original paper order system and its computerized implementation provide all of the information in the purchase order to everyone, rather than only the information relevant to each individuals specific needs. Where large documents are involved, each individual may be then forced to sift through much information irrelevant to his or her job function.

Moreover, where documents contain sensitive information, which typically is reserved for only for specific individuals, prior art information flow systems require the creation of multiple documents with varying security authorizations and particular routing schemes for each of these documents. Thus, the prior art computerized information flow technologies are riddled with inefficiencies.

Another shortcoming associated with the above prior art technology is that the "document based" information is routed on an "ad hoc" basis. In other words, the routing of the "document based" information is controlled exclusively by the user who last added, deleted or changed information in the document. Therefore, the prior art systems rely on the users using the system to promptly and correctly route the documents to other individuals within the organization.

Limitations related to this prior art "ad hoc" technology include the possibility of users losing, misplacing, or misdirecting documents. Moreover, this prior art technology may result in time lags, procedural steps being missed, and people being left out of the process. Accountability is also a problem since many prior art systems provide no effective way to determine who is responsible for the problems caused with improper routing of a document.

Certain of the shortcomings of prior art systems have been improved upon by recent developments in work flow technology, including the invention disclosed and claimed in co-pending U.S. Patent Application Serial No. 08/213,022, filed March 14, 1994, and commonly assigned to the assignee of the present patent application. U.S. Patent Application Serial No. 08/213,022 is incorporated herein by reference thereto.

U.S. Patent Application Serial No. 08/213,022 is directed to a new work flow technology which introduces a process and apparatus for facilitating the flow of information between various computer users of networked computers to complete predefined procedures within an organization. The invention of this prior co-pending patent application facilitates the flow of information by providing a unique method for logically and automatically routing information through a predefined sequence of activities to users who need the information and can act on the information. While the invention of Application Serial No. 08/213,022 represents a significant improvement over prior art work flow techniques, it is still limited in certain respects. For example, although the work flow processes using this prior invention allow users on various interconnected computers to all participate in the defined work flow, the actual work flow definitions must generally be created on a central computer system (server), resulting in the possibility of bottlenecks. Moreover, if this central computer system becomes inoperational for some reason, the entire work flow processes risk coming to a halt, even though other computers scattered throughout the network remain operational.

The above illustrates just some of the problems associated with the prior art technology. These drawbacks and other shortcomings are effectively overcome by the present invention, as described in further detail below.

In accordance with the teachings of the present invention, a new computerized information flow distribution technology is provided. The present invention improves on a new method and apparatus for distributing information between a plurality of individuals with an organization, which was disclosed in co-pending patent application Serial No. 08/213,022, and which is incorporated herein by reference. This new method and apparatus is referred to as "transactional based automated information flow" technology.

The technology is "transactional based" because it is based on relational database transaction technology, providing fine-grained serializability correctness for concurrent and atomic access to widely dynamic and diverse data elements stored in distributed repositories. This technology improves on the prior art "document based" technology which provides access to document-based data only. . Therefore, the "transactional based" technology improves on the "document based" technology because it provides diverse types of interrelated data to be concurrently accessible using a high-capacity, highly performant implementation.

The technology is "automated" because the information entered by one user is logically and automatically distributed through a predefined sequence to users who need the information. This technology improves on the "ad hoc" technology which only distributes information to other users designated by the user who last added, deleted or changed the information and only upon specific instructions from the user. Therefore, the "automated" technology improves on the "ad hoc" information flow technology because it allows information within an organization to be promptly, accurately, and sequentially routed to users through an information flow process predefined by the organization.

The "transactional based automated information flow" computer system of the present invention may be used in almost any organization, regardless of the location of the users within the organization. For example, users may be located across the country or even around the world.

In a preferred embodiment, the present invention may include one or more storage facilities (e.g., servers) located at each location within the organization. Further, in order to optimize the distribution of the "transactional based automated information flow" across the various storage facilities, the present invention uses replication techniques. These techniques are used to ensure that the storage facilities within the organization are periodically updated with information needed by the users of the computer system. In a preferred embodiment, the computer system includes a central storage facility, zero or more remote storage facilities, and a means for replicating data periodically. The central storage facility may be connected to the remote storage facilities through a hard-wired connection, a telecommunications link, or the like.

In a preferred embodiment, the computer system provide 'Platform data" which is used to provide a common set of services to applications, including workflow and security. Platform data consists of two types of data elements: "replicated data", for which identical copies reside at each storage facility in the computer system, and "distributed data", which is partitioned and dispersed among each storage facility.

The central storage facility is used to store original copies of replicated platform data which is generally information that all or most of the users need to access in a primarily read-only mode. Specifically, the platform data often contains administration data used by the entire organization. An organization may locate the central storage facility anywhere within the organization but typically will choose a location in close proximity to the administrator of the computer system.

The remote storage facilities are used to store read-only copies of the replicated platform data, as well as original copies of the application data. The application data is typically application programs and data that only certain users or groups of users need to access. Since the remote storage facilities store platform and application data, an organization will typically locate a remote storage facility in close proximity to the certain users who utilize the application data.

Distributed platform data is the data that is associated with each user, such as their desktop. Initially, all users and their corresponding platform data are located on the central storage facility. Tools enable administrators to move users to remote storage facilitaties, thereby moving their corresonding platform data to these locations. Only one copy of a user's platform data exists at a time.

The means for replicating is preferably a computer program which periodically distributes updated platform data from the central storage facility to the remote storage facilities. The preferred replicating means is the proprietary replication service provided by the database vendor. In the case of Sybase, this is the Sybase Replication Server. Additionally, an Asynchronous Remote Procedure Call (ARPC) mechanism is used to ensure reliable updates involving data in a remote or multiple storage facilities.. Whenever the platform data is scheduled for replication, the platform data from the original copy stored at the central storage facility is copied to the to each remote storage facility.

Accordingly, the present invention eliminates problems associated with many prior art computer systems in which all users within an organization access the same copy of platform data from the same central storage facility. Specifically, the "single point of failure" drawback experienced with these prior art systems is practically eliminated in that a failure at the central storage facility will have little effect on a user accessing platform data from a particular remote storage facility providing no application data from the central storage facility is needed. Further, the bottleneck problems experienced when many users of the prior art computer systems attempt to access platform data at the central storage facility at the same time is substantially diminished. This results because smaller groups of users are now able to access the platform data from particular remote storage facilities assigned to the group. Moreover, the computer time for accessing the platform data from a central storage facility at a geographically remote location in the prior art computer systems is also diminished as platform data may now be stored on remote storage facilities located in close proximity to particular groups of users.

The aforementioned and other aspects of the present invention are described in the detailed description and attached illustrations which follow.

FIGS. 1A, 1E, 1F and 1H depict various configurations of a client/server network, on which the present invention may be implemented.

FIG. 2 depicts a flow diagram of the basic information flow process according to the present invention.

FIG. 3 depicts a computer screen, according to a preferred embodiment of the present invention, displaying a user's drawer, folders and lists.

FIG. 4 depicts a computer screen, according to a preferred embodiment of the present invention, displaying an activity window.

FIG. 5 depicts an example of an activity and associated events.

FIG. 6 depicts the primary information contained in a next step according to a preferred embodiment of the present invention.

FIG. 7 depicts a computer screen, according to a preferred embodiment of the present invention, displaying a user's To Do Lists in the user's To Do List folder and an exemplary user's personalized To Do list containing next activities.

FIG. 8 depicts a computer screen, according to a preferred embodiment of the present invention, displaying a user's To Do Lists in the user's To Do list folder and an exemplary work group To Do list containing next activities.

FIG. 9 depicts an illustrative example of the basic information flow process depicted in FIG. 2.

FIG. 10 depicts the structure of a table according to a preferred embodiment of the present invention.

FIGS. 11-15 depict illustrative examples of tables used in a preferred embodiment of the present invention, including the tables relationships.

FIG. 16A depicts a computer screen, according to a preferred embodiment of the present invention, displaying the File mode where the user may select the New command to create an activity list.

FIG. 16B depicts a computer screen, according to a preferred embodiment of the present invention, displaying the New Browser Objects window, where the user may name an activity list and select the location for the activity list.

FIG. 16C depicts a computer screen, according to a preferred embodiment of the present invention, displaying the Browser mode which reveals all folders and lists for a user's drawer, where a user may select to add lists to folders.

FIG. 16D depicts a computer screen, according to a preferred embodiment of the present invention, displaying the Browser list window, where the user may select the Customize Activity List command to add an activity to an activity list.

FIG. 16E depicts a computer screen, according to a preferred embodiment of the present invention, displaying the Customize Activity List window, where the window reveals a list of activities the user may access.

FIG. 16F depicts a computer screen, according to a preferred embodiment of the present invention, displaying the New Browser Objects window where the user may name a To Do List and Select the location for the To Do list.

FIG. 16G depicts a computer screen, according to a preferred embodiment of the present invention, displaying the Browser mode which reveals all folders and lists for a user's drawer, where the user may select a To Do List in which to add a next activity category.

FIG. 16H depicts a computer screen, according to a preferred embodiment of the present invention, displaying a To Do List containing a plurality of next activity categories.

FIG. 16I depicts a computer screen, according to a preferred embodiment of the present invention, displaying the Browser list window, where the user may select the Move command to move a next activity category from the current To Do List to another To Do List.

FIG. 16J depicts a computer screen, according to a preferred embodiment of the present invention, displaying the Move mode list window which reveals a list of possible To Do Lists for the user to choose to move a next activity category.

FIG. 16K depicts a computer screen, according to a preferred embodiment of the present invention, displaying a To Do List containing a next activity which has been moved by the user to this To Do List.

FIG. 16L depicts a computer screen, according to a preferred embodiment of the present invention, displaying a To Do List containing individual next activities, where the user may select to move an individual next activity to another To Do List.

FIG. 16M depicts a computer screen, according to a preferred embodiment of the present invention, displaying the Browser list window, where the user may select the Move command to move an individual next activity from the current To Do List to another To Do List.

FIG. 16N depicts a computer screen, according to a preferred embodiment of the present invention, displaying the Move mode list window which reveals a list of possible To Do Lists for the user to choose to move an individual next activity.

FIG. 16O depicts a computer screen, according to a preferred embodiment of the present invention, displaying a To Do List after an individual next activity has been moved to another To Do List.

FIG. 16P depicts a computer screen, according to a preferred embodiment of the present invention, displaying a To Do List containing an individual next activity which has been moved to the To Do List from another To Do List.

FIG. 17A depicts a computer screen, according to a preferred embodiment of the present invention, displaying the Browser mode which reveals all folders and lists for a user's drawer, where a user may select to access a list, where the Sample Class Registration list has been selected and revealed, and where the Class Registration activity has been selected.

FIG. 17B depicts a computer screen, according to a preferred embodiment of the present invention, displaying an illustrative example of a Class Registration activity window.

FIG. 17C depicts a computer screen, according to a preferred embodiment of the present invention, displaying the Set Task Priority option in the Options mode, where the user creating a task may set the priority of the task as low, medium or high.

FIG. 17D depicts a flow diagram of a preferred embodiment for saving information in connection with an activity, determining the event associated with the activity, and accessing the Trigger Event function stored procedure.

FIG. 18 depicts a flow diagram of a preferred embodiment of the Trigger Event function stored procedure which determines the next steps for the flow of information process, in particular next activity(s) and user(s) responsible for performing the next activity(s).

FIG. 19 depicts a computer screen, according to a preferred embodiment of the present invention, displaying an illustrative example of a second Class Registration activity window.

FIG. 20 depicts a computer screen, according to a preferred embodiment of the present invention, displaying the Browser mode list window where the user may access a To Do List, where the "New To Do List" To Do List has been accessed, and where a list of next activity categories for the To Do List is revealed in the Summary To Do Category window.

FIG. 21 depicts a computer screen, according to a preferred embodiment of the present invention, displaying the Browser mode list window where the user may access a To Do List, where the "New To Do List" To Do List has been accessed, and where a list of next activities for the To Do List is revealed in the Detailed To Do Category window.

FIG. 22A depicts a computer screen, according to a preferred embodiment of the present invention, displaying the Summary To Do Category window where the "Select Payment Type for Class" next activity has been selected.

FIG. 22B depicts a computer screen, according to a preferred embodiment of the present invention, displaying an illustrative example of a Class Payment next activity window.

FIG. 22C depicts a computer screen, according to a preferred embodiment of the present invention, displaying an Options mode list accessed from the Class Registration activity window, where the user may select the Next Step command to access the next activity that occurs sequentially after the Class Registration activity and which the user is responsible for performing.

FIG. 23 depicts a flow diagram of a preferred embodiment of the Next Step procedure which determines the next activity that occurs sequentially after the just completed activity or next activity and which the user is responsible for performing.

FIG. 24 depicts a computer screen, according to a preferred embodiment of the present invention, displaying an illustrative example of a Class Payment next activity window which is the sequentially subsequent next activity after the just completed Class Registration activity and which the user is also responsible for performing.

FIG. 25 depicts a computer screen, according to a preferred embodiment of the present invention, displaying an Options mode list accessed from the Class Registration activity window, where the user may select the Next Task command to access a next activity to the computer screen based on priority settings.

FIG. 26 depicts a flow diagram of a preferred embodiment of the Next Task procedure which determines a next activity to display on the computer screen based on priority settings.

FIG. 27 depicts a computer screen, according to a preferred embodiment of the present invention, displaying an illustrative example of a Class Payment next activity which was selected by the Next Task procedure as a next activity that the user is responsible for performing.

FIG. 28 depicts a computer screen, according to a preferred embodiment of the present invention, displaying an illustrative example of a "New To Do List" To Do List containing two class payment activities, represented by the "Select payment type for Class" Category, which have been completed (done).

FIG. 29 depicts a computer screen, according to a preferred embodiment of the present invention, displaying the Workflow Workbench mode accessed by an administrator of the computer system of the present invention which displays an activity or corresponding event so that the administrator may define information flow procedures.

FIG. 30 depicts a computer screen, according to a preferred embodiment of the present invention, displaying the Zoom options list window, where the administrator may select an option to set up next steps in defining an information flow procedure.

FIG. 31 depicts a computer screen, according to a preferred embodiment of the present invention, displaying the Step Assignments window which was selected from the Zoom options list window, where next steps may be assigned by the administrator.

FIG. 32 depicts a computer screen, according to a preferred embodiment of the present invention, displaying the Step Assignments window of FIG. 31, where the administrator has partially selected next steps for the given activity.

FIG. 33 depicts a computer screen, according to a preferred embodiment of the present invention, displaying the Options mode list, where the Zoom option has been selected so that a next activity may be selected.

FIG. 34 depicts a computer screen, according to a preferred embodiment of the present invention, displaying a To Do Category window accessed from the Zoom option, where a next activity is selected by the administrator.

FIG. 35 depicts a computer screen, according to a preferred embodiment of the present invention, displaying the Step Assignments window of FIG. 31, where the users responsible for the next activity have been selected by the administrator.

FIG. 36 depicts a computer screen, according to a preferred embodiment ofthe present invention, displaying an illustrative example of a Workflow Workbench window where next steps have been defined to complete an information flow procedure.

FIG. 37 depicts a computer screen, according to a preferred embodiment of the present invention, displaying the Preferences window which allows the user to select specific features relevant to his or her To Do List, including refresh task counts at certain time intervals and notify the user when a new next activity has been added to his or her To Do List.

FIG. 38A depicts a computer screen, according to a preferred embodiment of the present invention, displaying a Summary To Do Category window, where completed next activities may be deleted manually.

FIG. 38B depicts a computer screen, according to a preferred embodiment of the present invention, displaying a Detailed To Do Category window, where completed next activities may be deleted manually.

FIG. 39 depicts a computer screen, according to a preferred embodiment of the present invention, displaying a Summary To Do Category window, where the user may obtain detailed information on a particular next activity.

FIG. 40 depicts a computer screen, according to a preferred embodiment of the present invention, displaying a To Do Informational window which reveals detailed information on a particular next activity.

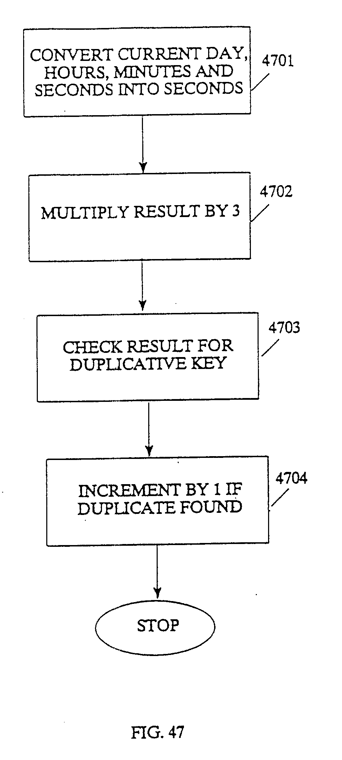

FIGS. 41 through 52 depict various diagrams illustrating how the present invention may be implemented in a distributed manner.

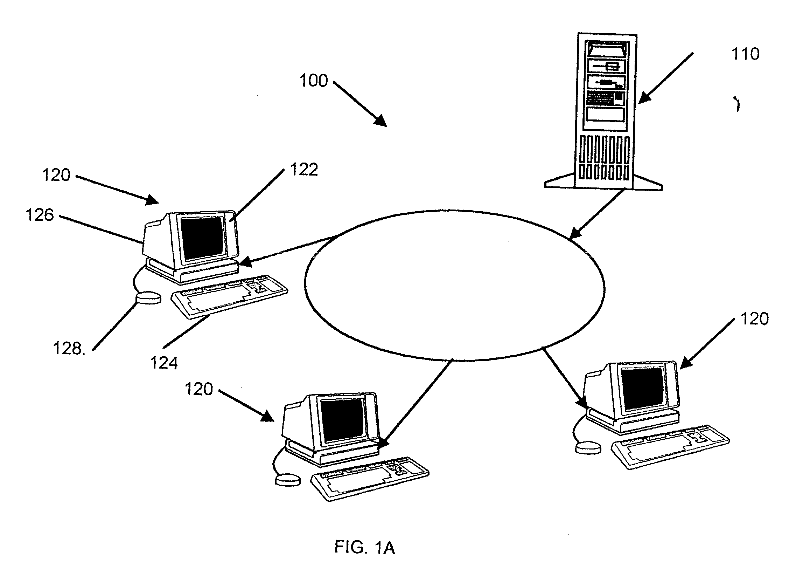

The computer system 100 of the present invention is preferably implemented on a client/server network 100 as shown in FIG. 1A. The client/server network 100 includes a server 110, such as an HP/UX, Data General DG-UX, Microsoft NT, IBM RS/6000, or an OS/2 server, connected to a plurality of clients 120, also known as end user workstations. Each end user workstation preferably includes a monitor 126, a screen 122, a keyboard 124, a mouse 128, and a memory device. The end user workstations 120 may be an IBM compatible PC running MS-DOS and Microsoft Windows or their equivalent. The preferred client/server network of the present invention is a Novell Netware or a PC LAN. Though these are the preferred clients, servers, and client/server networks, as may be appreciated by one of ordinary skill in the art, suitable equivalents may be used.

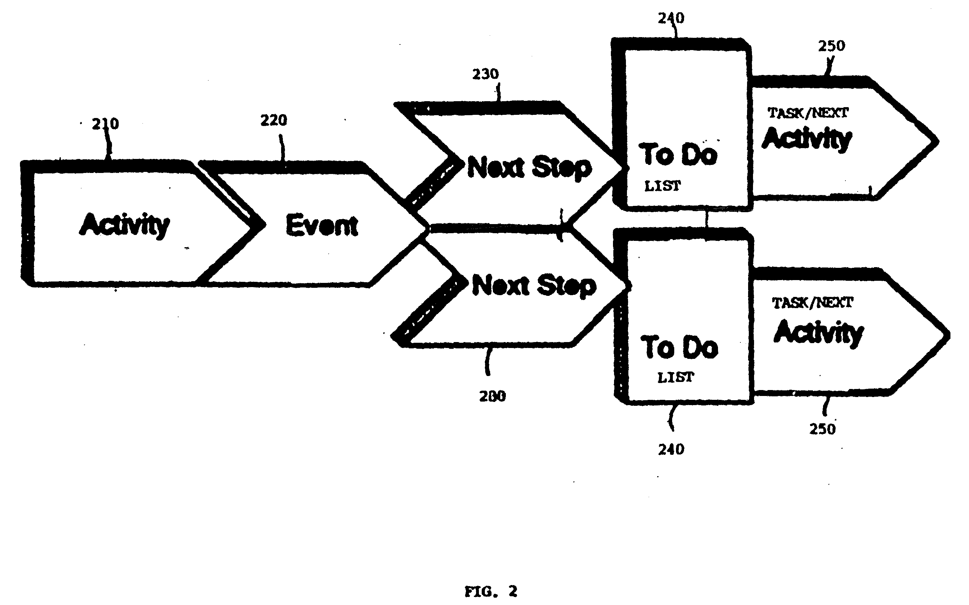

Referring to FIG. 2, a flow chart is shown which depicts the basic flow process for the present invention. This flow process assures that information is routed through the organization's predefined information flow path to the users who need it.

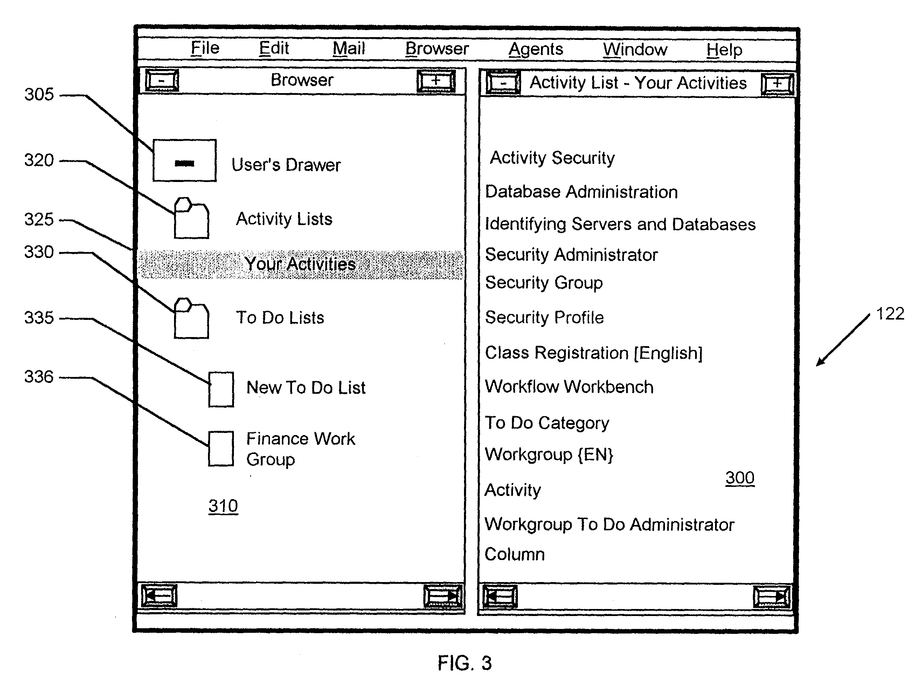

In a preferred embodiment, a user may access the computer system 100 of the present invention from an end user workstation 120 (see FIG. 1A), utilizing the particular user interface, such as the Windows Graphical User Interface (GUI), provided by the computer workstation's 120 operating system and environment. As shown in FIG. 3, the computer system of the present invention searches the user's drawer 305 to provide an Activity Lists folder 320 and a To Do List folder 330 on the user's computer terminal screen 122. These are preferably displayed in a Browser mode window 310.

The Activity Lists folder 320 may contain one or more lists of activities that the user may select and act upon. In this example, the Activity Lists folder 320 contains a "Your Activities" To Do List 325. The To Do Lists folder 330 may contain one or more lists of tasks to be completed by the user or the user's work group. In this example, the To Do List folder 330 contains a "New To Do List" To Do List 335 and a "Finance Workgroup" To Do List 336. The Activity Lists folder 320, To Do Lists folder 330 and the contents of both folders may be displayed using a commercially available graphic user interface such as Microsoft Windows.

In this example, the user selects a list from either the Activity Lists folder 320 or To Do Lists folder 330. If the user selects the "Your Activities" list 325, the system provides a list of available activities 300 for the "Your Activities" list 325. This selection may be made, for example, by clicking over the chosen activity 210 with the mouse 128 or by cursoring over the chosen activity 210 with the tab key and hitting the return key on the keyboard 124.

In response to the user's selection of a list, the system displays a list 300 of available activities or tasks. For this example, the user's "Your Activities" list 325 contains such activities as Activity Security, Database Administration and Class Registration [English]. The user may then select an activity 210 from the list 300. The system responds to the selection by displaying a screen relating to the activity 210 to be acted upon.

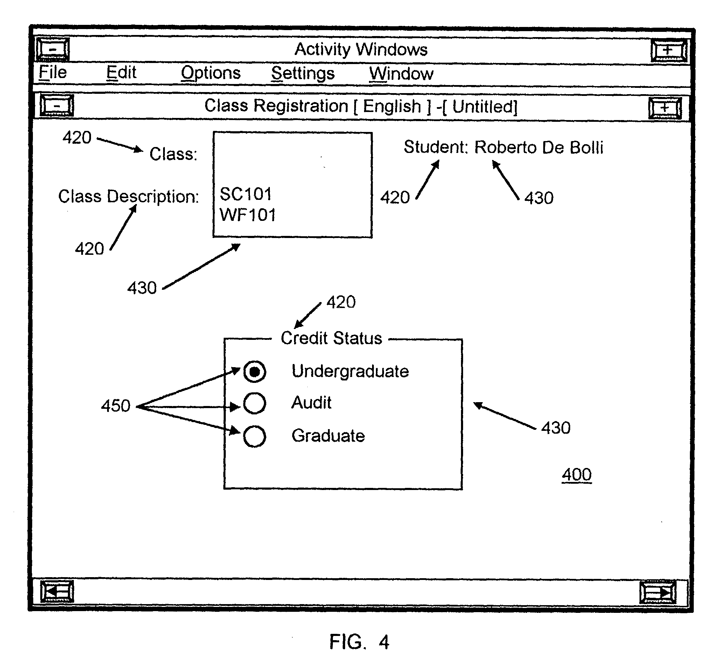

FIG. 4 illustrates a screen which the system displays in response to the user choosing the Class Registration [English] activity 210 from his or her "Your Activities" list 325 (see FIG. 3). The Class Registration activity is displayed in an activity window 400, which preferably reveals information in the form of headings 420 and values 430.

To illustrate, the activity window 400 for a user attempting to register for a class may reveal the headings 420 as class, student, class description and credit status. Examples of values 430 associated with the credit status heading 420 are undergraduate, graduate, and audit. The activity window 400 also typically includes prompts, also referred to as blank fields, 450. Examples of prompts 450 in the activity window 400 are shown to the left of the undergraduate, graduate, and audit values 430 under the credit status heading 420. These prompts 450 may be filled in to represent information input by the user. In this example, the student/user has filled in the prompt 450 to the left of the undergraduate value 430. In a preferred embodiment of the present invention, other information may be entered by the student/user by simply clicking over the chosen value 430 with the mouse 128 (see FIG. 1A) or cursoring over the chosen value 430 with the tab key on the keyboard 124 (see FIG. 1A).

Referring back to FIG. 2, after all of the information or data required for activity 210 has been entered by the user, the user acts to indicate to the system that the chosen activity 210 has been completed and the data supplied by the user during performance of activity 210 should be saved. In a preferred embodiment, the user may make their indication using the mouse 128 to "click over" a "save file" icon on the computer screen 122 which, in a preferred embodiment, resembles a floppy disk (not shown). Alternatively, the user may depress the keyboard "Control" and "S" keys simultaneously (see FIG. 1A). After the data relating to activity 210 has been saved and the user indicates that the activity 210 has been completed, the system triggers one of the events 220 associated with the activity 210.

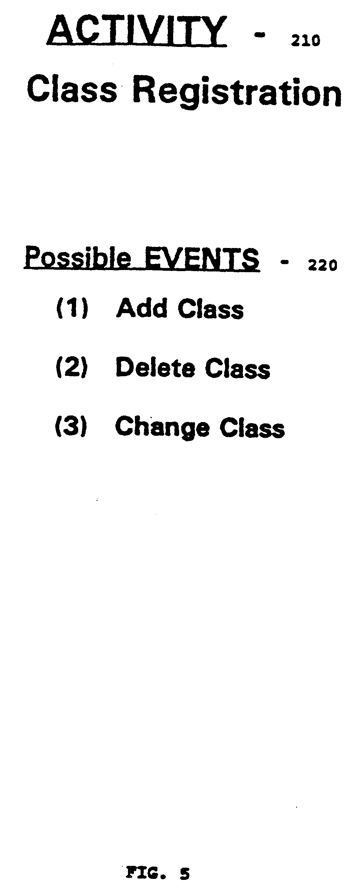

An event 220 is a representation of a set of conditions stored in the computer system in accordance with the present invention. Whenever the set of conditions for an event is satisfied, the corresponding event is triggered. Each activity 210 has one or more events 220 associated with it. Additional software stored in the computer system, which, for example, may be written in Power Builder, COBOL, or C programming languages, chooses an appropriate one of the events 220 for execution. Three events that may be executed during the course of the performance of an activity are, for example, "add," "delete" and "change." As illustrated in FIG. 5, three events identified when a user has selected the class registration activity may be "add class," "delete class," or "change class." Each of these events may be chosen for execution in response to a corresponding action by the user.

Referring back to FIG. 2, when an event 220 is chosen, a stored procedure makes a determination of all possible next steps 230 which are associated with that event 220. After the event 220 determines which next steps 230 are associated with it, the event makes a further determination as to which next steps 230 are to be chosen. This determination assures that a next user or group of users is able to perform a next activity 250, also referred to as a task 250, associated with the information entered by the user and/or data input from an automated process, such as an MRP system.

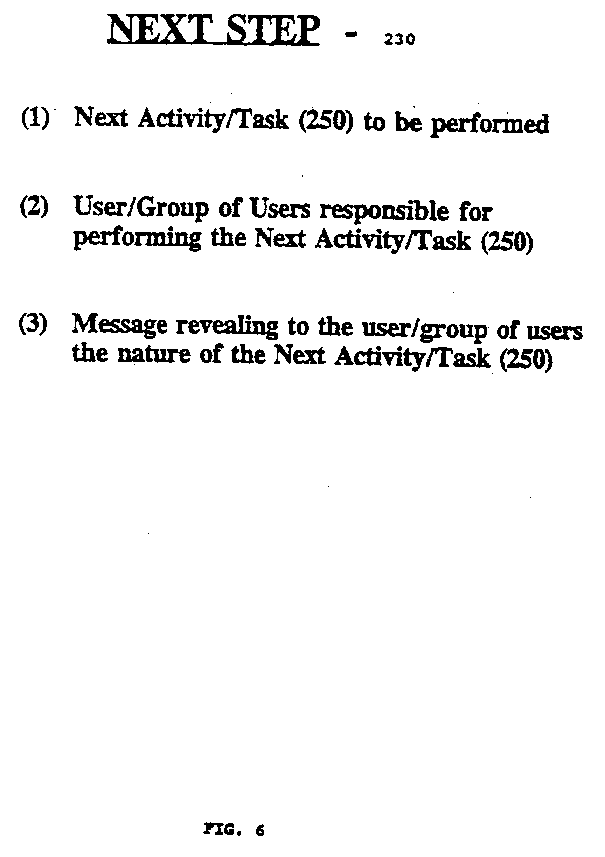

As shown in FIG. 6, a next step 230 may include the following information: (1) the next activity/task 250 to be performed; (2) the user/group of users responsible for performing the next activity/task 250; and (3) a message revealing to the user/group of users the nature of the next activity/task 250 to be acted upon. The next step 230 may also contain information or data disclosing the name of the entity within the organization in which the user/group of users fall under, which is ultimately responsible for performing the next activity/task 250. The list of information shown in FIG. 6, as described, is merely exemplary of the types of information that may be included in the next step 230.

Referring back to FIG. 2, based on the information contained in the chosen next steps 230, the computer system sends a message, representative of an associated category of next activity/task 250, to the To Do List 240 of the user or the group of users responsible for performing the next activity/task 250. Once the message is added to the To Do List 240 for the user or the group of users, the next activity/task 250 may be selected, viewed, and acted upon by the user associated with the To Do List 240 in a similar fashion as described for selecting the initial activity 210 which started the flow of the current information.

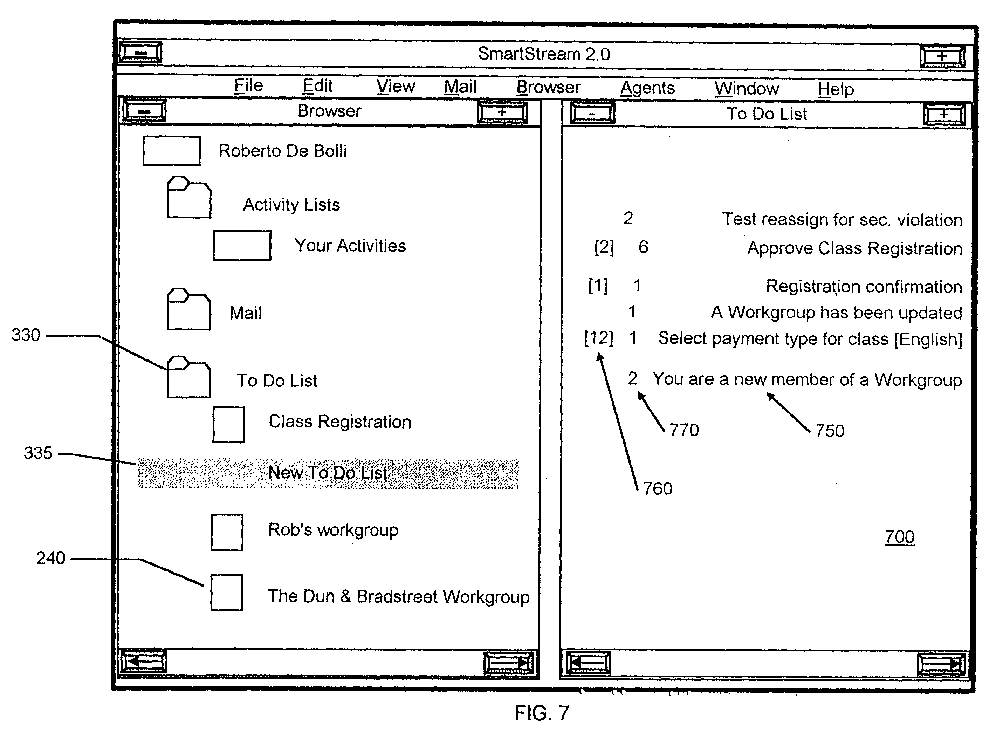

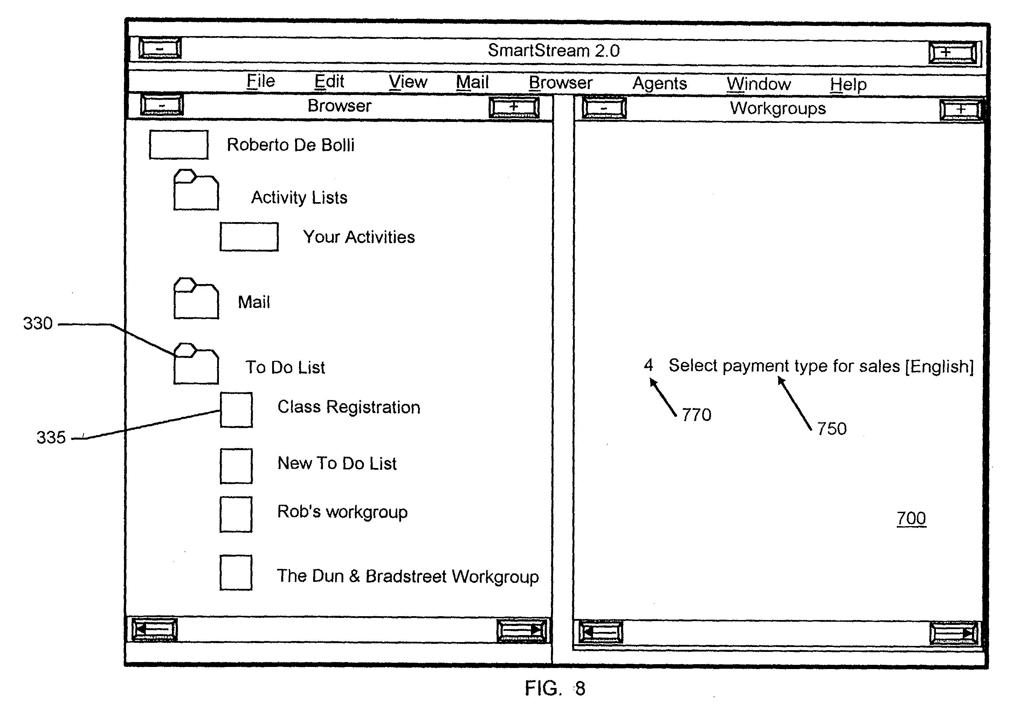

As shown in FIG. 7, a user may select a next activity/task 250 (see FIG. 2) from one or more To Do lists 240 located in the user's To Do List folder 330. In a preferred embodiment, a user may select a message 750 from a user's To Do List 700 personalized for the user. Alternatively, he or she may select a message 750 from the work group's To Do List 800 (see FIG. 8). In this example, the user selects the "New To Do List" 335 from the To Do Lists Folder 330.

To illustrate, the "New To Do List" 335 represents the user's personalized To Do List 700 set up for the user. Types of next activities/tasks 250 represented as messages 750 available to this user in his or her "New To Do List" To Do List window 700 are "Approve class registrations", "Registration confirmation," and "Select payment type for class [English]". These messages 750 represent next activities/tasks 250 categories subsequent to the initial activity 210 of class registration. In a preferred embodiment, the To Do list window 700 also displays the number of done/completed 760 and new 770 next activities/tasks 250 to the left of each message 750. In this example, the To Do list window 700, to the left of the "Approve class registrations" message 750, reveals that there are eight next activities/tasks 250 for this category, where six are new 770 and two are done 760.

Referring to FIG. 8, the user may also select a next activity/task 250 from a work group To Do List 700. This work group To Do List may be used when it does not matter which user among a group of users completes the next activity/task 250. For this example, the user has selected the Class Registration work group To Do List 336 from the To Do Lists folder 330. The message 750 revealed in the Class Registration work group To Do List is "Select payment type for class." This message 750 represents a next activity/task 250 subsequent to a prior user registering for a class. The user has four new 770 next activity/tasks 250 associated with this message 750.

Once the user selects the next activity/task 250 from the user's personalized To Do List 700 (see FIG. 7) or the user's work group To Do List 700 (see FIG. 8), referring to FIG. 2, the process for the flow of information which occurred after the initial activity 210 was selected may be repeated. As described above, the process would include the user entering relevant information into the activity window 400 (see FIG. 4) for the next activity/task 250, the user triggering an event 220, one or more next steps 230 being determined, and a corresponding message 750 (see FIG. 7) being added to the To Do List 240 of the user or work group responsible for performing the next activity/task 250. This cycle, inclusive of the user accessing the next activity/ task 250 from the relevant To Do List 240, may continue until each piece of information is pushed entirely through the organization's predefined information flow path.

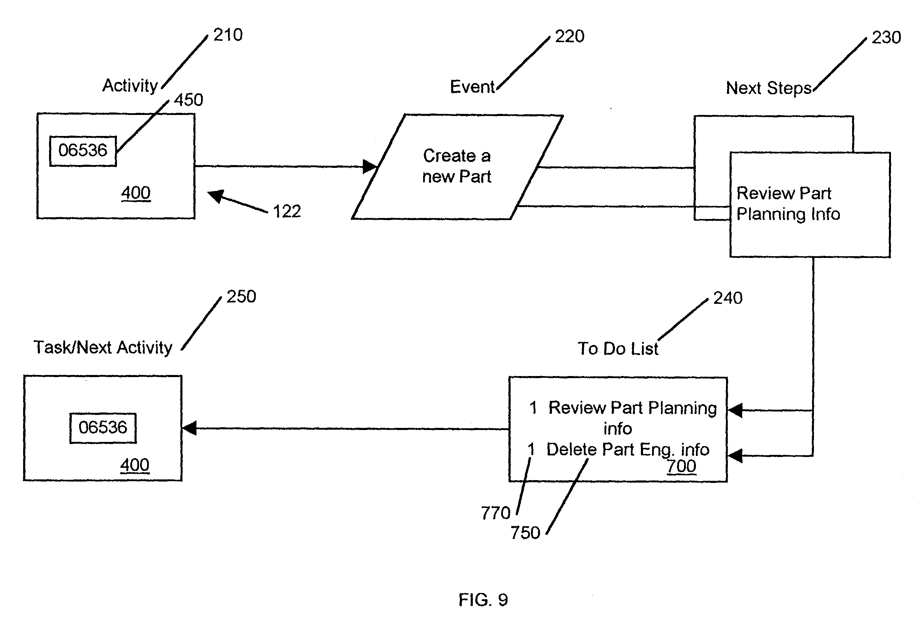

An example of the information flow process of the present invention is illustrated in FIG. 9. This example shows how the information flow process of the present invention is implemented, where the activity to be performed is to add a new part to a system for controlling a manufacturing operation.

In this example, the user (e.g., an engineer) chooses the "Part" activity 210 from his or her activity list (not shown) in order to create a new part for a manufacturing process within the organization. In response to this choice, the system displays a "Part" activity screen on the engineer's terminal screen 122 within activity window 400. This window 400 includes a prompt area 450, in which the engineer enters the number of the part (i.e., "06536").

When the engineer appropriately signals the system that the activity 210 is complete, the system responds by triggering execution of one of the events 220 associated with the activity 210. In this example, the event 220 triggered is the "Create a new Part" event 220.

The software "create a new part" event 220 then makes decisions based upon the addition of the part number to determine the next steps 230 to be undertaken in this flow process. For this example, the next steps 230 are "Review Part Planning information" to be done by the manufacturing manager and "approve part planning" (not shown) to be done by the quality department manager.

The "review part planning information" message 750, representative of a next activity/task 250 category, is then displayed by the system in the manufacturing manager's To Do List 240. In this example, the manufacturing manager has two messages 750, "Review part planning info" and "Define Part Eng. info.", listed in his personalized ("Things to do") To Do List window 700. The manufacturing manager may then select the "Review Part Planning info." message from his To Do List window 700, and the next activity/task 250 associated with this message is displayed in the manager's next activity/task window 400. Finally, this process for the flow of information through the organization is repeated as the manager enters relevant information into the window 400 for the next activity/task 250. The present invention then triggers an event 220 for determining the next steps 230 in the organizations procedure, and a message 750 representative of a next activity/task 250 category is added to another user's or work group's To Do List 240. As discussed above, this cycle continues until each piece of information is routed entirely through the organization's predefined information flow path (i.e., appropriately acted upon by all appropriate personnel in the organization in the proper sequence).

Set forth below is a description of the computer software for implementing a presently preferred embodiment of the present invention. As one of ordinary skill in the art would understand and appreciate, the following is merely one way of implementing the invention and many equivalent ways exist to achieve the same functions and results of the invention.

Referring to FIG. 1A, application programs are created using PowerBuilder code (application development software available from Powersoft, of Burlington, Massachusetts) and are stored on the client side 120 of the client/server network 100.

Tables and stored procedures are created using SQL (Structured Query Language) code and are stored on the server side 110. Though PowerBuilder and SQL are the preferred software tools for the present invention, one of ordinary skill in the art would appreciate that the present invention could be implemented with many other equivalent types of software and/or development tools.

In a preferred embodiment, the PowerBuilder software is the preferred tool for creating the main application program of the present invention and the specific application programs to execute the windows 400 (see FIG. 4) for each activity 210 and next activity/task 250 (see FIG. 2). On the other hand, the SQL software is used primarily to create tables and stored procedures which interact with the tables and the PowerBuilder application programs to send information (e.g., data) back and forth on the network 100 (see FIG. 1A). In a preferred embodiment, the stored procedures are compiled and then interpreted by SQL engines.

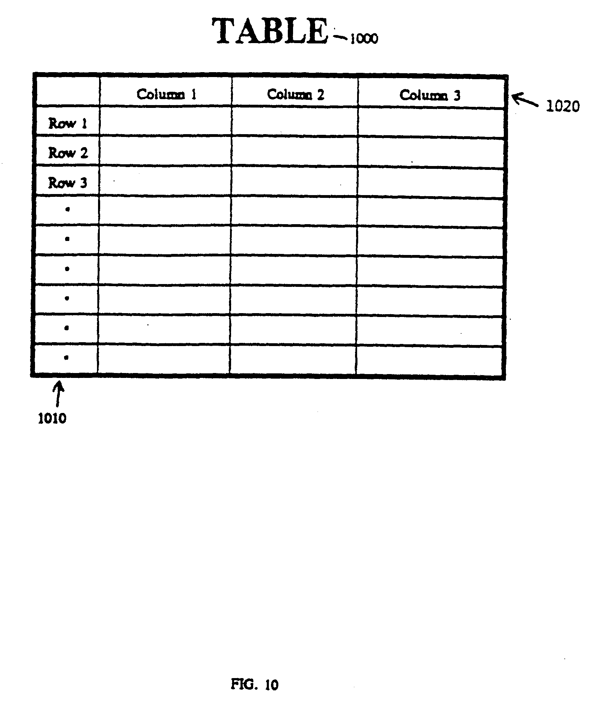

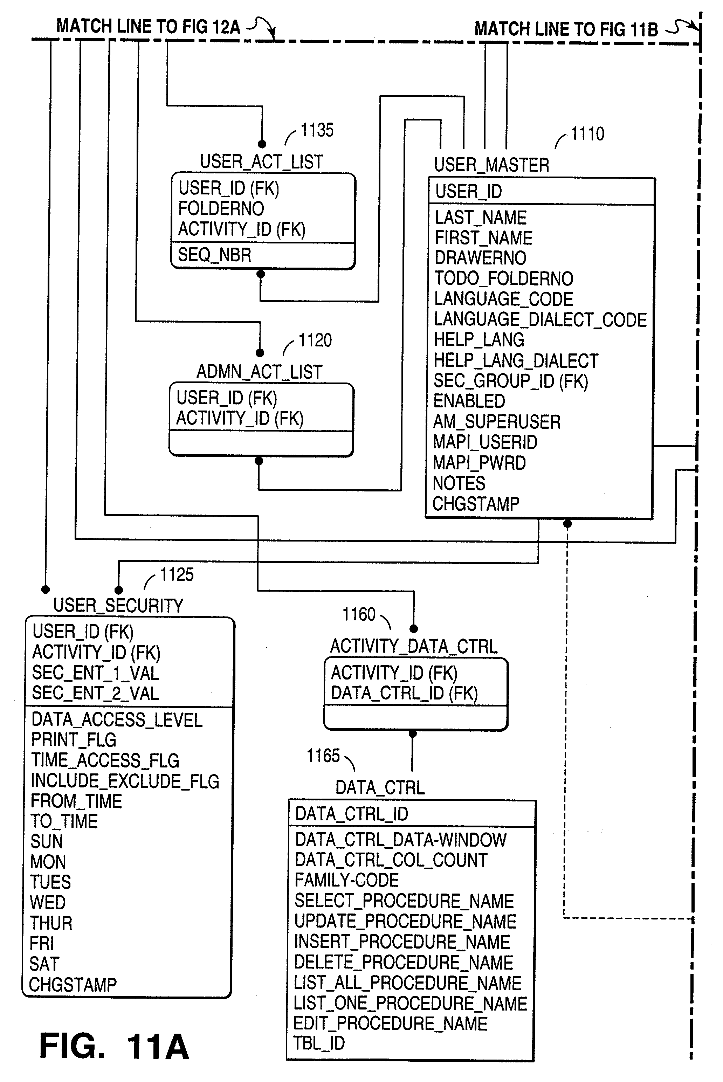

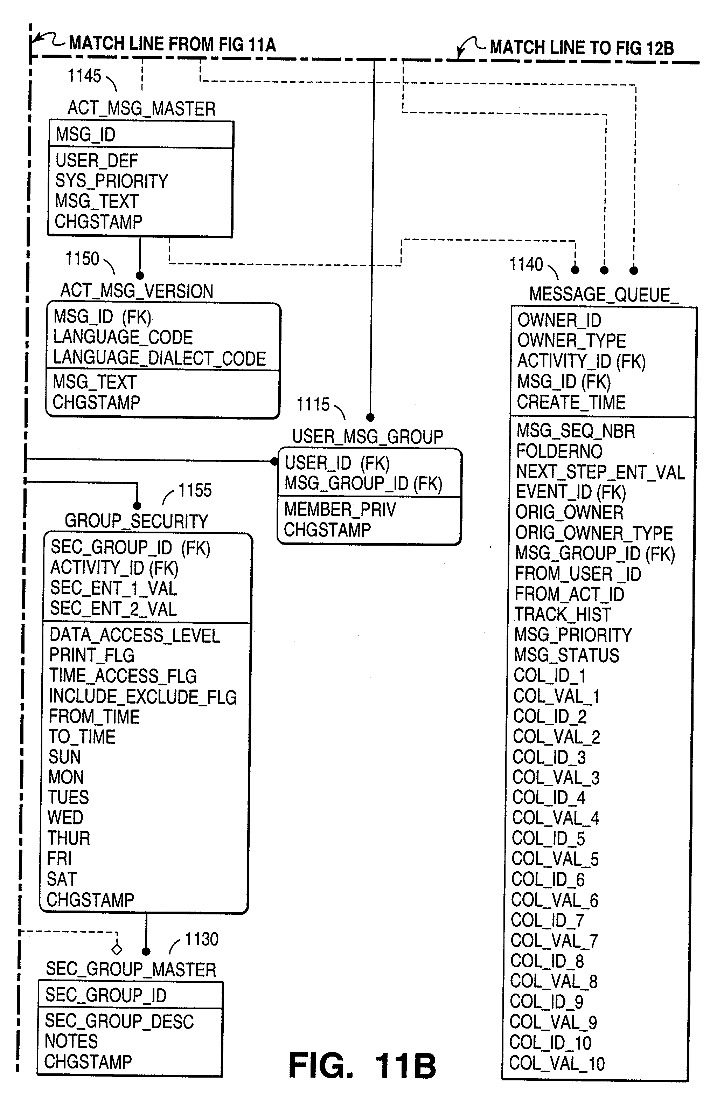

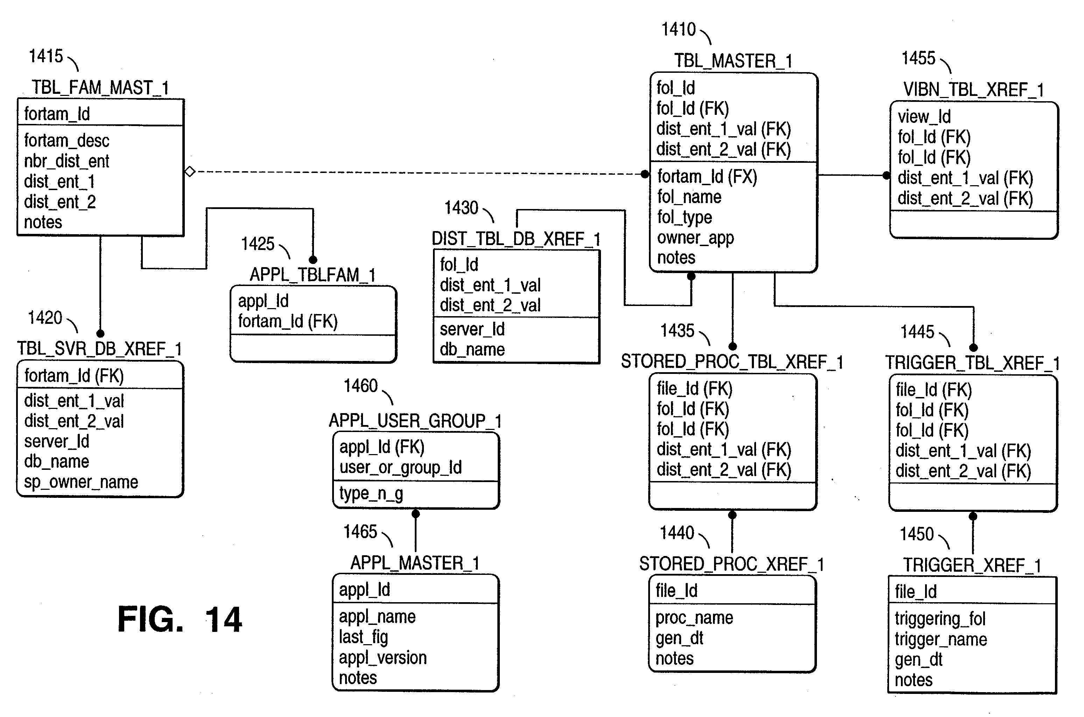

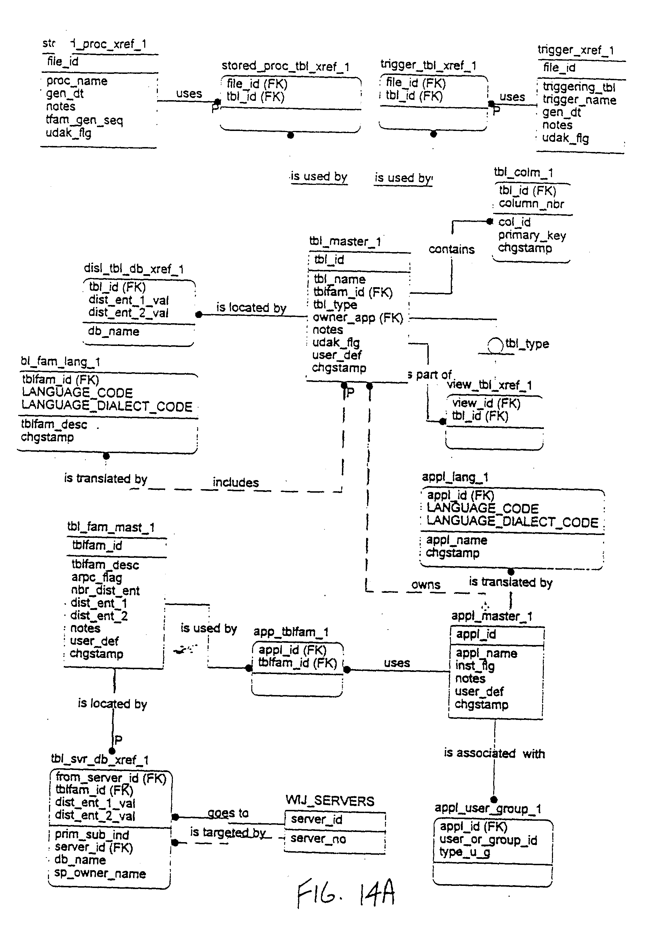

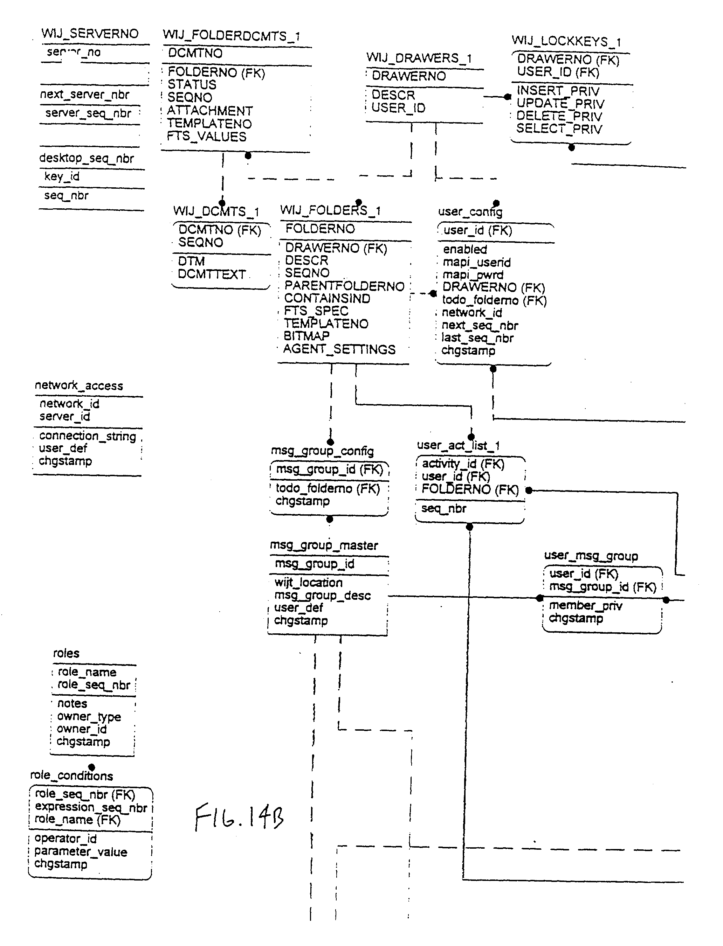

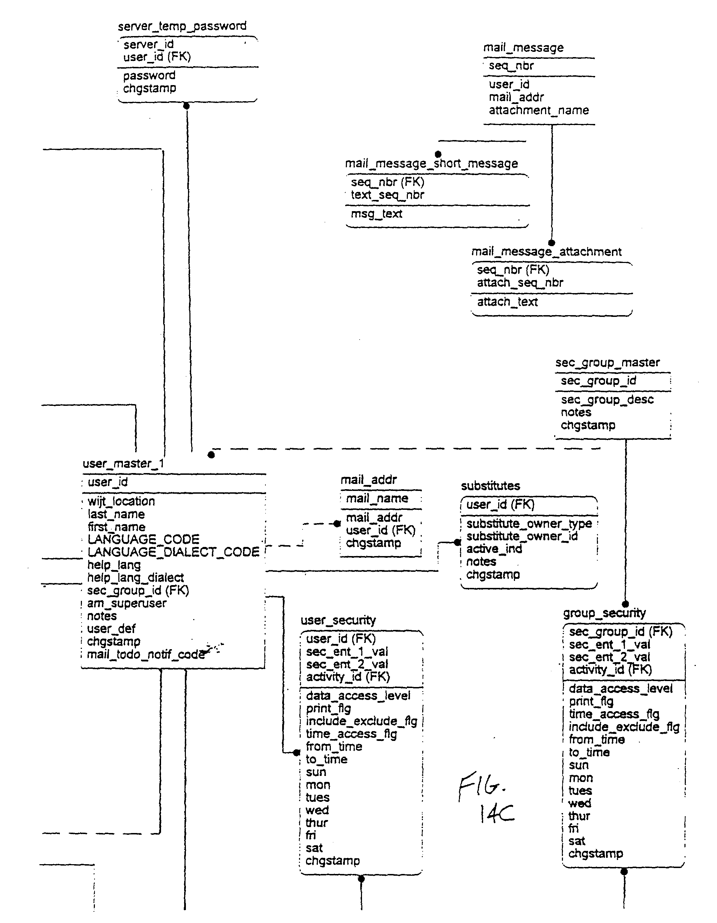

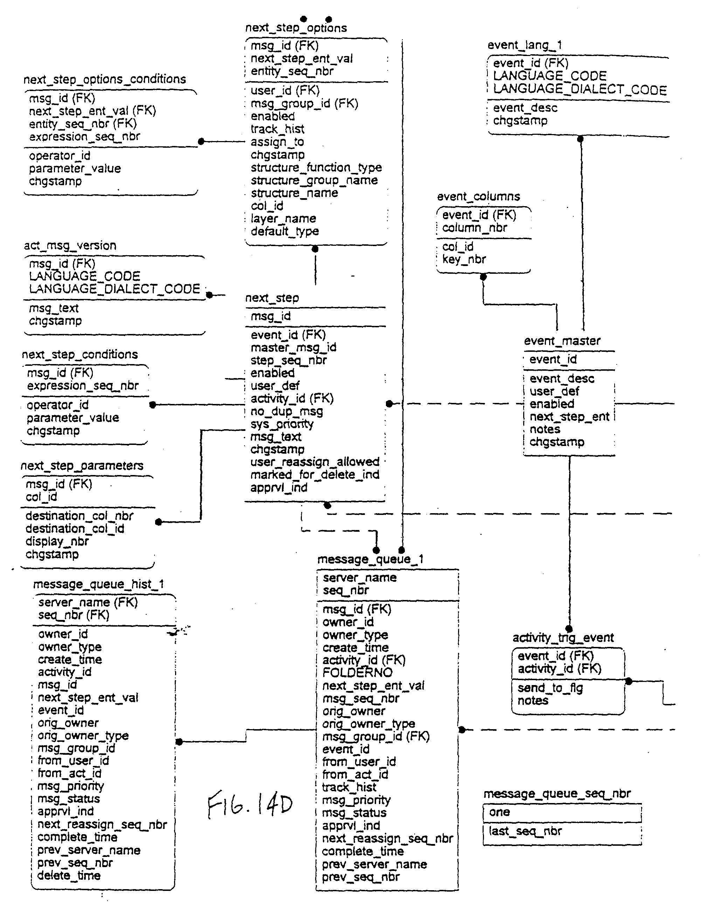

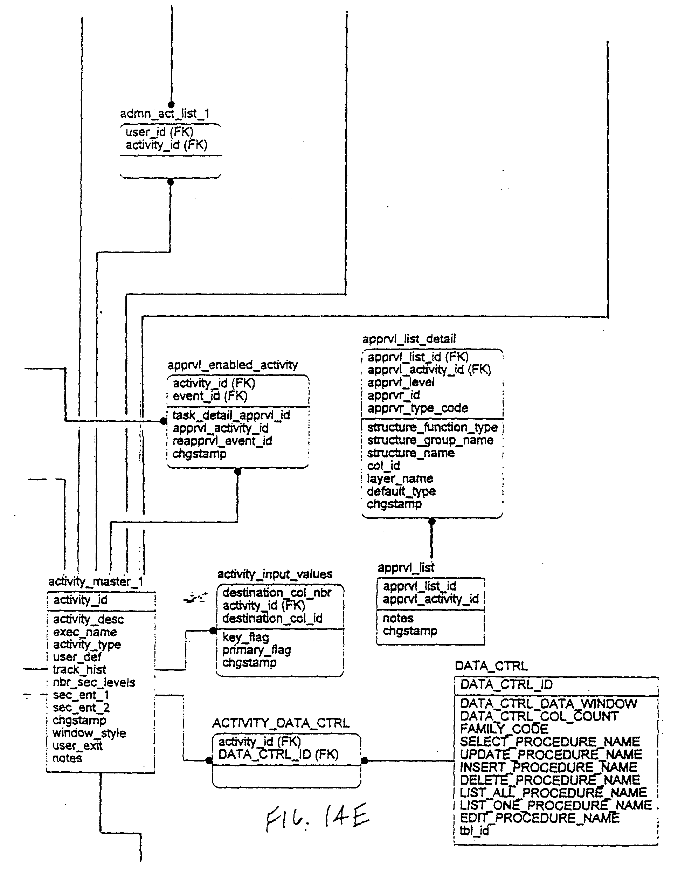

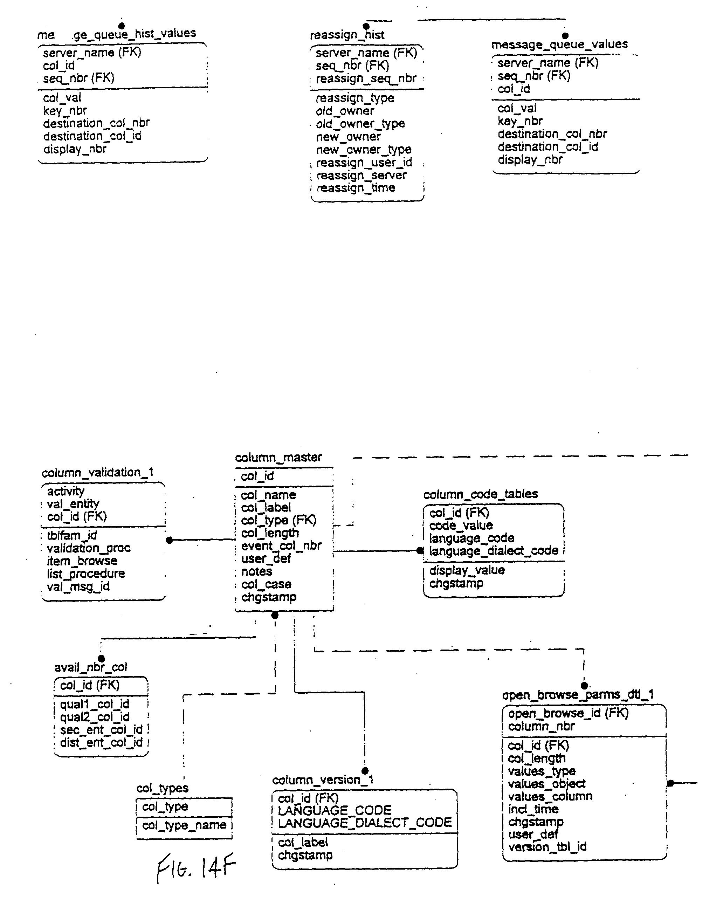

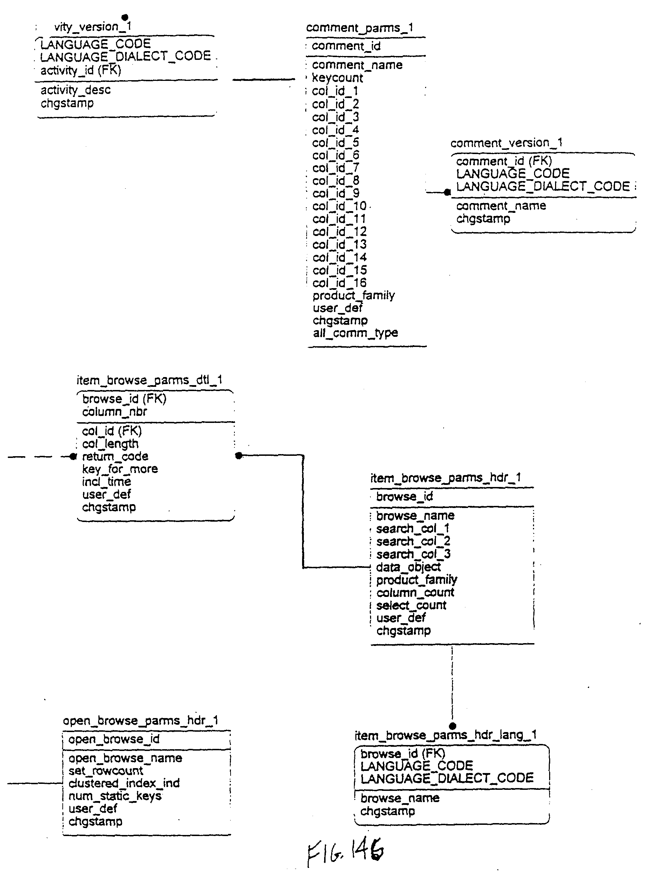

Referring to FIG. 10, data may be stored in a table 1000, also known as a database structure, in rows 1010, also referred to as records, and columns 1020, also referred to as fields. Examples of tables utilized by the present invention and the relationships of these tables with one another are illustrated by FIGS. 11, 12, 13, 14 and 15. In yet another embodiment, the tables that are utilized by the present invention and the relationships of these tables with one another are illustrated in FIGS. 14A, 14B, 14C, 14D, 14E, 14F and 14G, whereby like-named tables from FIGS. 11, 12, 13, 14 and 15 share a similar function as those depicted in FIGS. 14A, 14B, 14C, 14D, 14E, 14F and 14G.

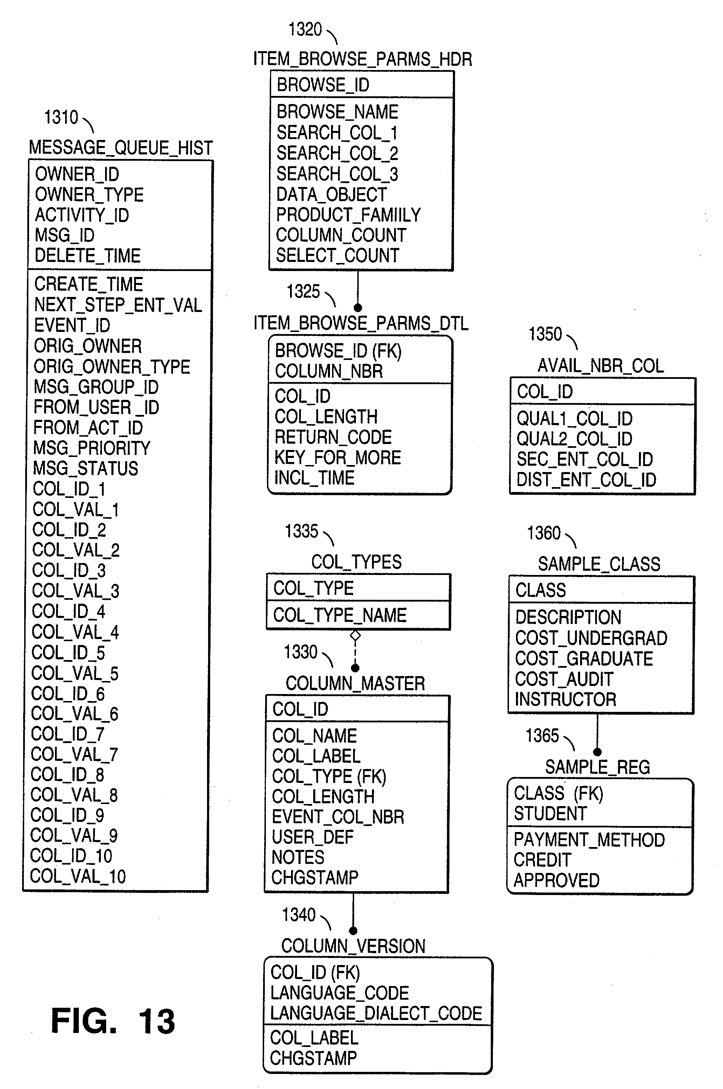

The COLUMN_MASTER table 1330 (see FIG. 13) is used for mapping most of the columns in the tables by having certain information related to the columns in each table stored in this table. In a preferred embodiment, information on the column includes the column identifier (COL_ID), which is a numerical value representative of the position for that column in the COLUMN_MASTER table 1330; the column name (COL_NAME), which is the name the column is referred to in the other tables; the column label (COL_LABEL), which is the label used for viewing in the various windows; the column type (COL_TYPE), such as database datatype (i.e., character, integer, datetime, etc.); the column length (COL_LENGTH), which represents the size of the column; and the event column number (EVENT_COL_NBR), which is used to correlate an event identifier (EVENT_ID) in the EVENT_MASTER table 1220 with its particular column identifiers (COL_Ids).

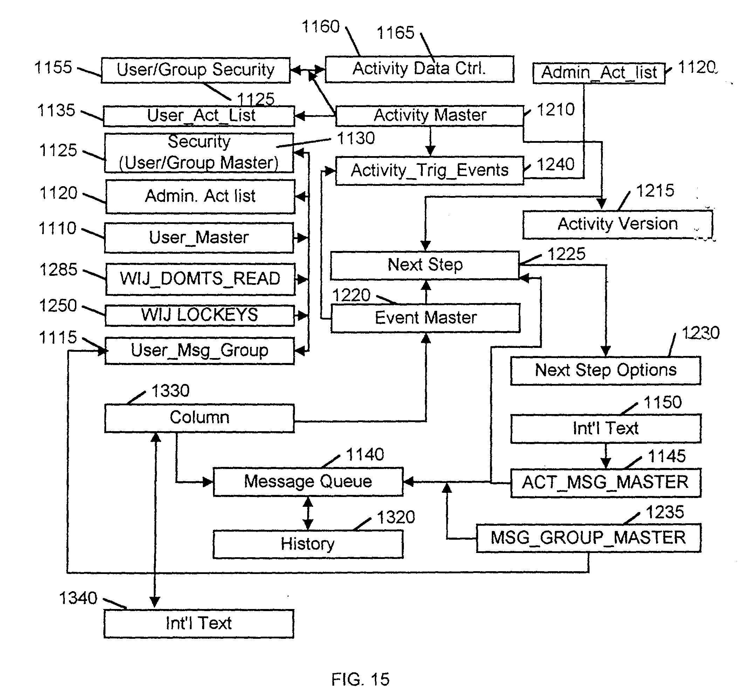

FIG. 15 shows some of the primary tables 1000 used in a preferred embodiment of the present invention. Each line between two tables indicates that information (e.g., data) between these tables 1000 is shared in a one-to-many relationship. The head of the arrow (black dots in FIGS. 11-14) at one end of each line positioned next to one of the tables 1000 indicates that the table may have many rows (records) which are associated with one row (record) of the table 1000 positioned at the other end of the line.

Set forth below is a description of how, in a preferred embodiment, the applications programs, stored procedures, and tables 1000 interact to implement the information flow process of the present invention.

The software of the present invention is activated to begin executing when a user logs onto the computer system (e.g., client/server network) 100 from his or her end user workstation (e.g., an IBM compatible PC) 120 as described for FIG. 1A. After the user logs onto the system, the screen 122 on the user's terminal 126, as shown in FIG. 3, reveals the Browser mode window 310 which is preferably created with PowerBuilder software.

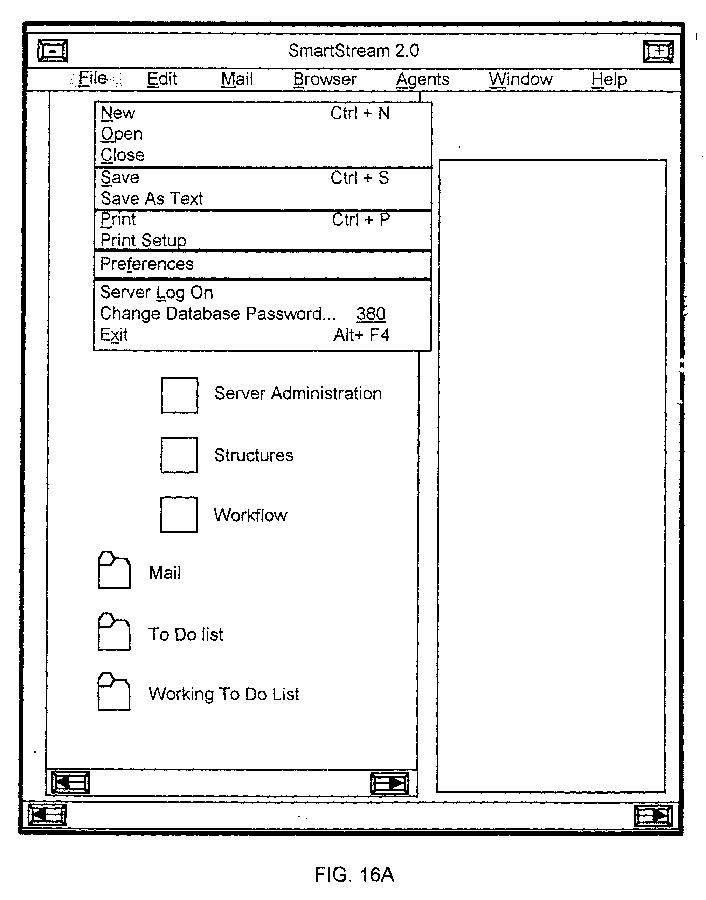

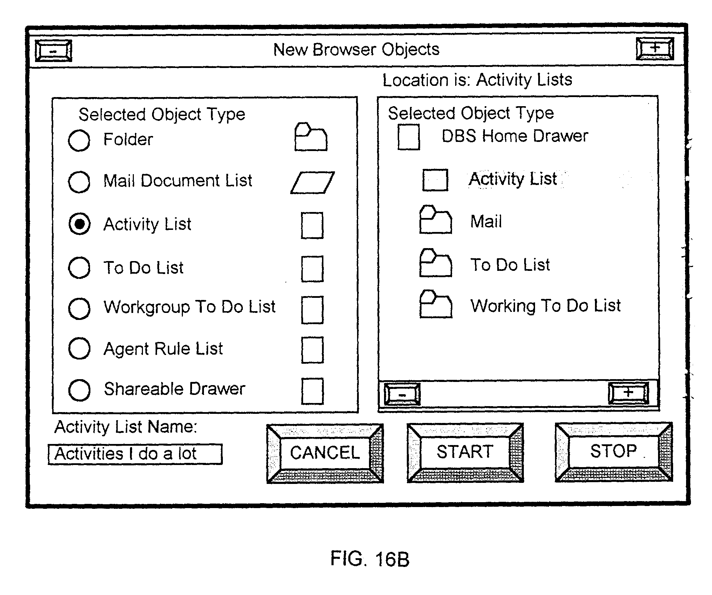

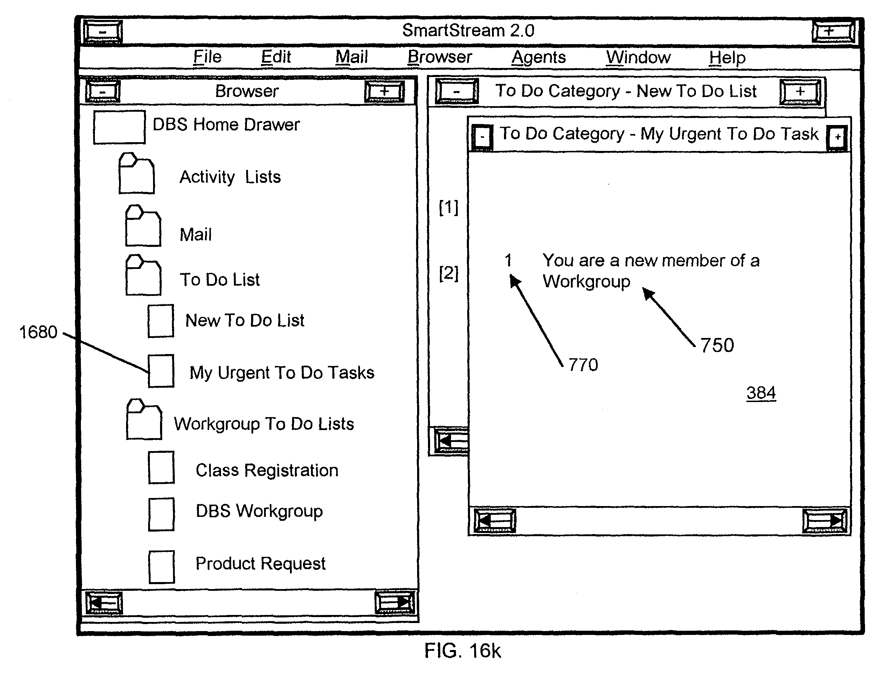

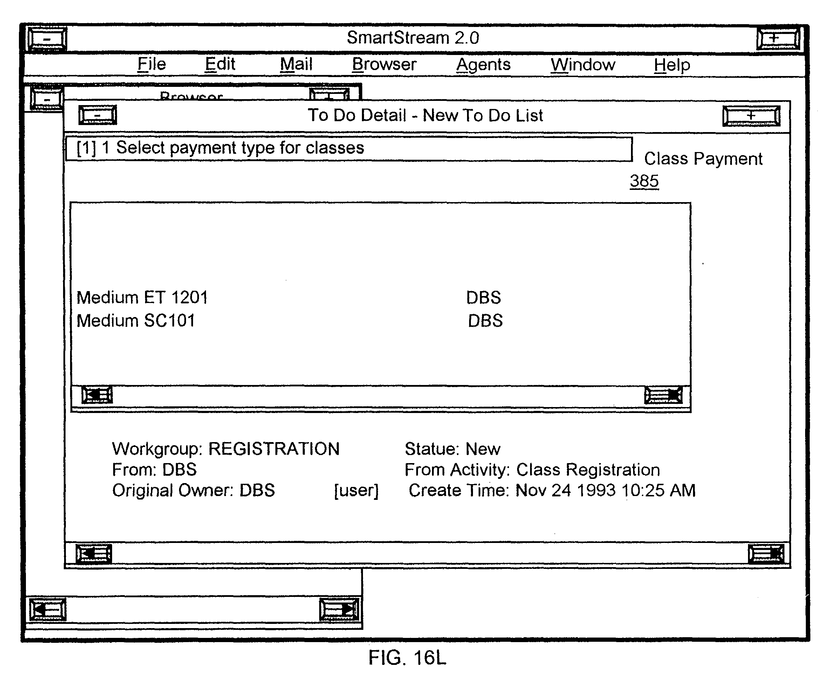

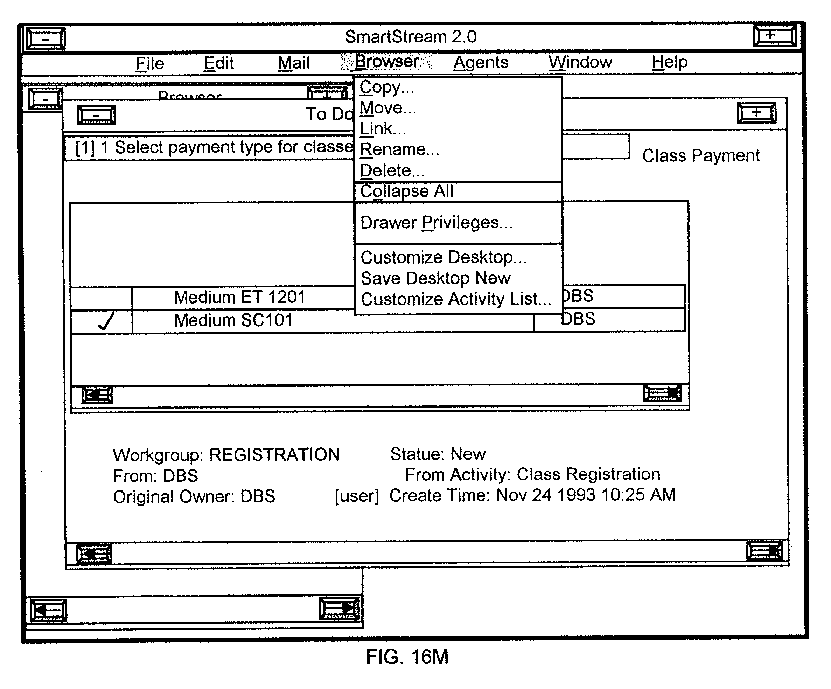

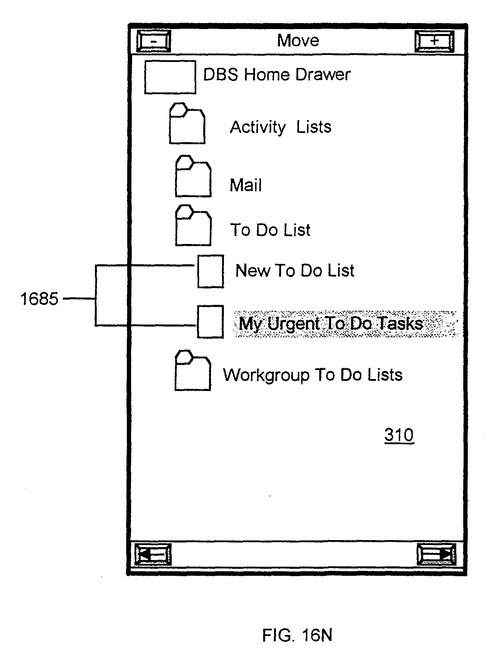

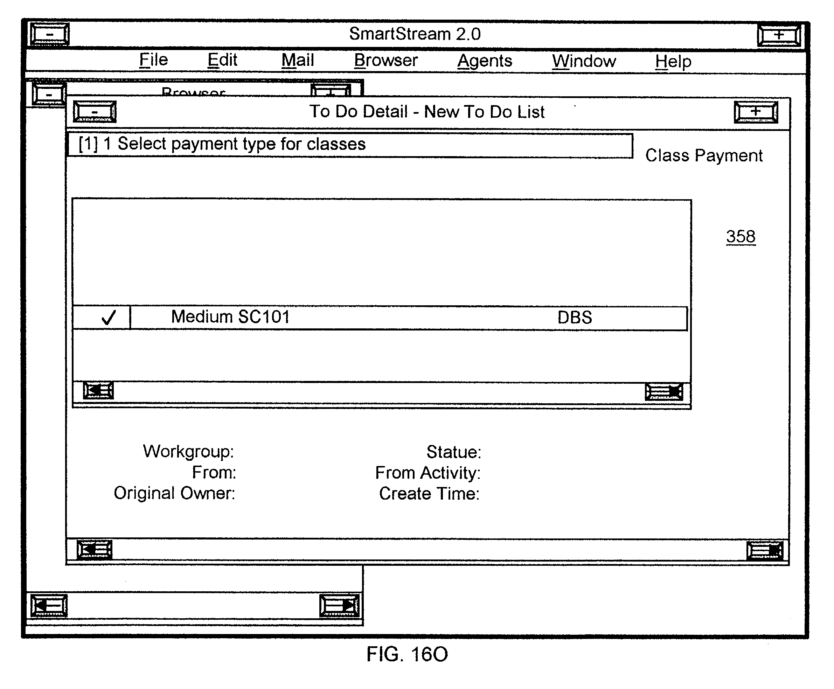

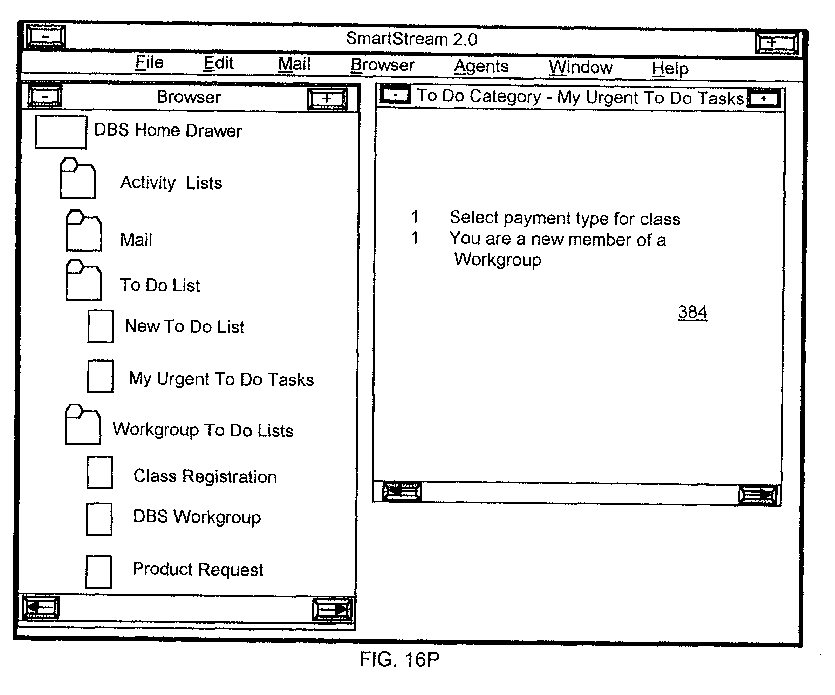

Referring to FIG. 16A_ a user may create an activity list for his or her Activity Lists folder 320 by accessing the File mode and choosing the New (Ctrl + N) selection from the File list window 380. As shown in FIG. 16B, a "New Browser Objects" window 381 is displayed by the system in response to the above action by the user. The user then selects the "Activity List" as the new object type and enters the new activity list name (e.g., "Activities I do a lot") in the bottom left hand corner of the window. Finally, the user chooses which drawer (e.g., "DBS Home Drawer") and folder (e.g., "Activity List Folder") in which to put the activity list. The user also has the option to put the activity list in a drawer without putting the activity list into a folder.

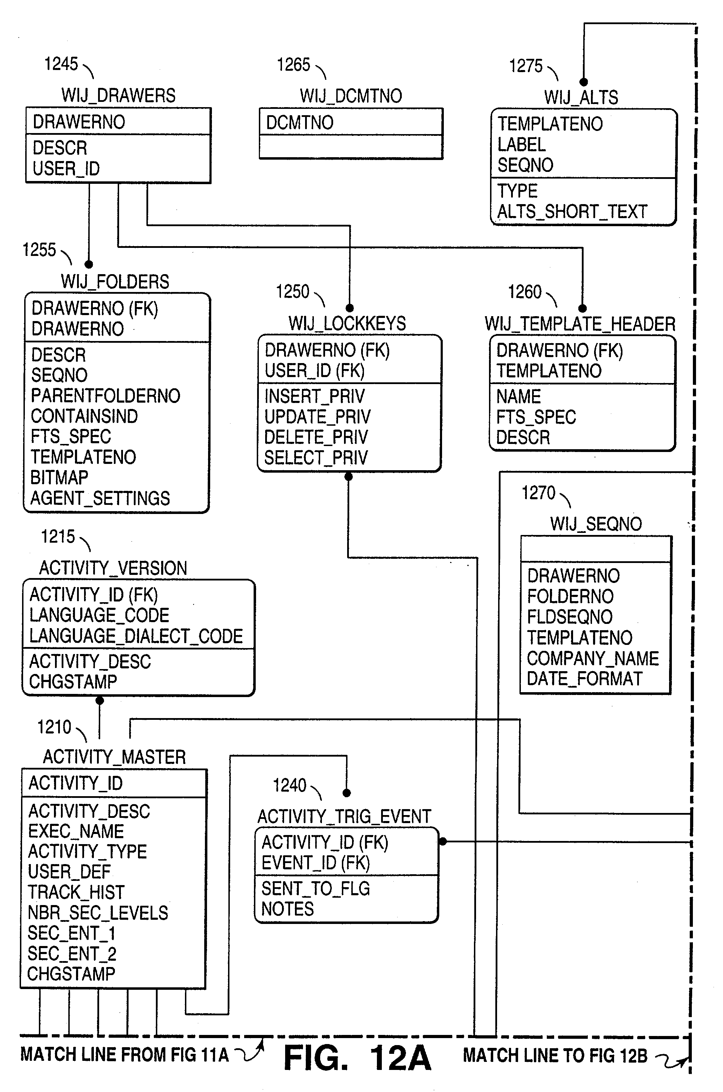

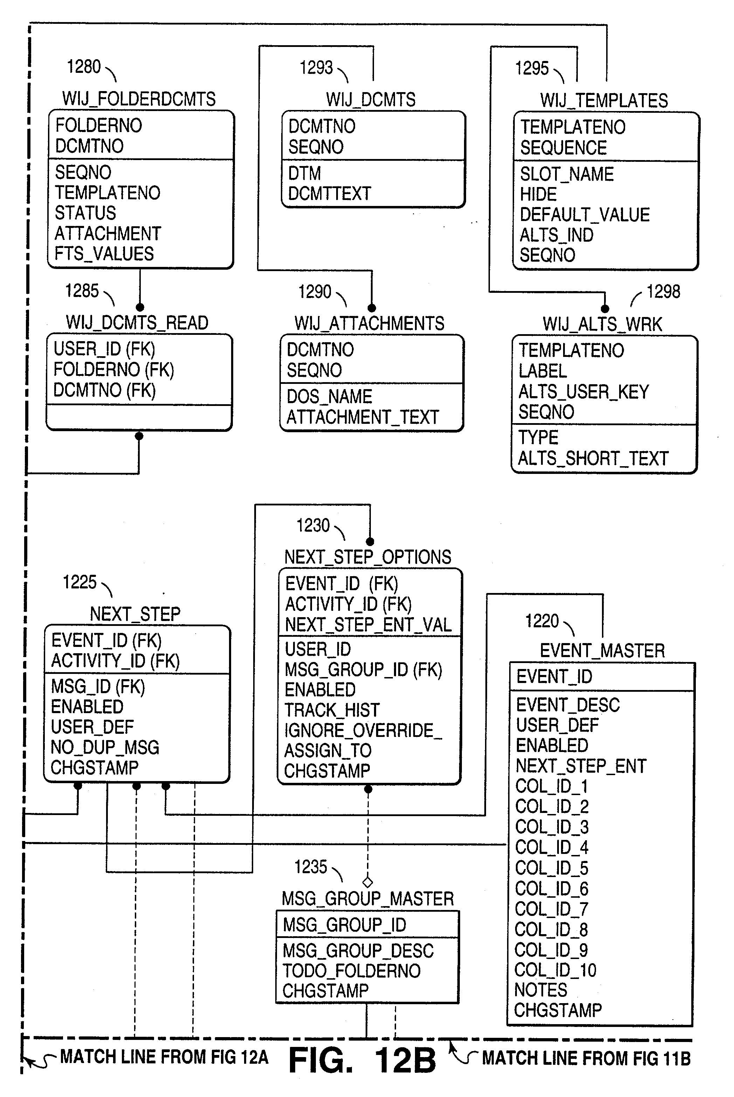

In response to the above user inputs, the main application program sends the user's drawer number (referred to as the DRAWERNO in the tables), the folder number (FOLDERNO) assigned to the activity list, the description (DESCR) of the list (e.g., Activity List), and the location of the list (PARENTFOLDERNO) (e.g., the number assigned to the Activity List folder) from the client to a stored procedure at the server. In one embodiment, the name of the stored procedure is FOLDER$insert_1. The stored procedure then stores this information in the WIJ_FOLDER table 1255 (see FIG. 12) and sends a message to the main application program that the information has been stored.

Each activity list is identified and stored under a corresponding folder number (FOLDERNO). The WIJ_FOLDERS table 1255 (see FIG. 12) is used to keep track of all FOLDERNOs. The CONTAINSIND column in the WIJ_FOLDERS table 1255 indicates whether the FOLDERNO refers to a folder or to a list. More details on the WIJ_FOLDERS table 1255 are provided below.

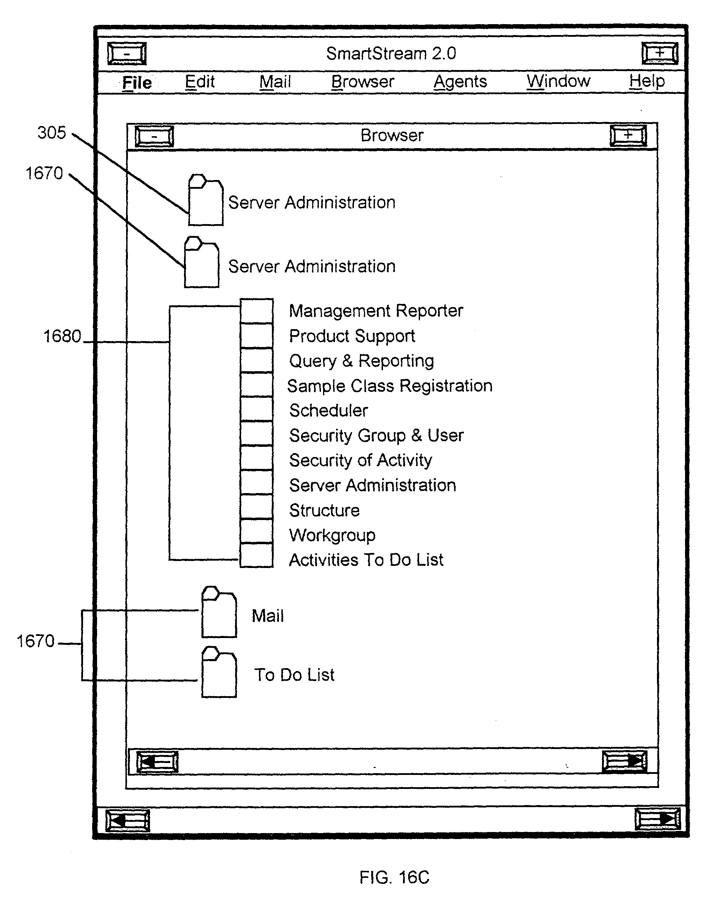

Referring to FIG. 16C, the user may add activities to an activity list by accessing, the Browser mode. The Browser mode window 310 reveals all folders 1670 and the activity lists 1680 or To Do Lists (not shown) contained within the folders 1670 for a particular drawer 305 of the user. The user may then select an activity list 1680 in which to add activities.

If an activity list 1600 is empty, as is the "Activities I do a lot" list 1680, then the activity list representation will be blank. However, if the activity list 1680 contains one or more activities or next activities/tasks, then the activity list representation will contain horizontal lines.

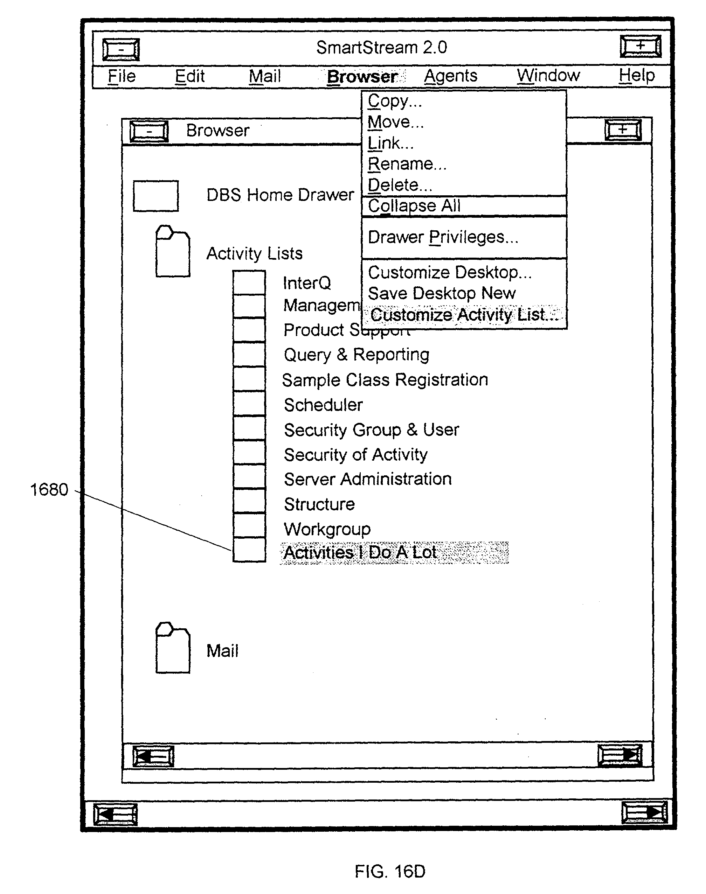

A user may add activities to an activity list by selecting, for example, the "Activities I do a lot" list 1680 in which to add one or more activities. Next, referring to FIG. 16D, the user selects the Browser list window 382 and chooses the Customize Activity List command from the Browser list window 382.

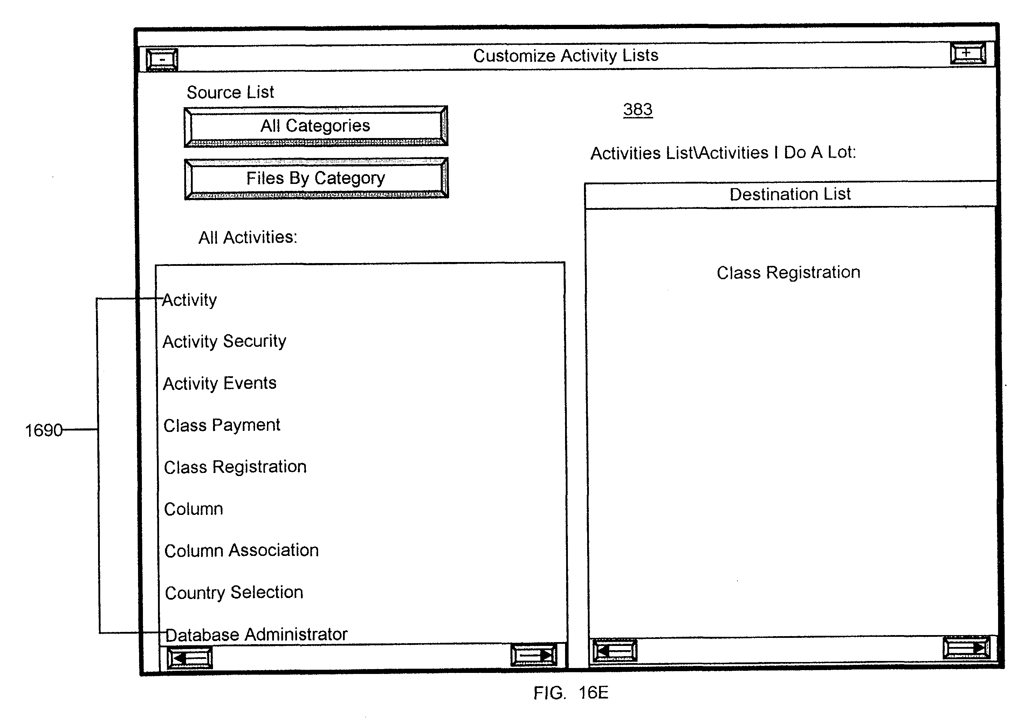

Referring to FIG. 16E, in response to the above actions of the user, the main application program displays a list of activities that the user may access in a Customize Activity List window 383. (The access is preferably based on security privileges predefined by an administrator of the system which is discussed further below). In determining which activities the user may access, the main application program sends the user's identifier (USER_ID) to a stored procedure. In one embodiment, the name of the stored procedure is psp_sel_avail_user_acts_1. This stored procedure then accesses the USER_SECURITY table 1125 (see FIG. 11) to determine which user specific activities, represented as activity identifiers (ACTIVITY_Ids), the user has security privileges.

Next, the stored procedure accesses the USER_MASTER table 1110 (see FIG. 11) to obtain group security identifiers (SEC_GROUP_Ids) associated with the user's USER_ID. The stored procedure then accesses the GROUP_SECURITY table 1155 (see FIG. 11) to determine which activities (ACTIVITY_Ids) the user, as a member of a group of users (work group), may access. Next, the stored procedure accesses the ACTIVITY_MASTER table 1210 (see FIG. 12) and uses the ACTIVITY_Ids to obtain a description of each activity (ACTIVITY_DESC) that the user may access. Finally, the stored procedure sends the ACTIVITY_Ids and each activity's corresponding activity description (ACTIVITY_DESC) back to the main application program at the client.

The main application program then displays each of the activities 1690 in the Customized Activity List window 383. The user may then decide which activities he or she will choose to put in an activity list by selecting specific activities from the display. In this way, a list may be created, where the list may include user specific and/or work group specific activities.

After the user has selected the activities to store in an activity list, such as "YOUR ACTIVITIES" list, the main application program sends the USER_ID, FOLDERNO, ACTIVITY_Ids and any sequencing of activities for the list (SEQ_NBR) to a stored procedure at the server. In one embodiment, the name of the stored procedure is psp_ins_usal_1. This stored procedure then accesses the USER_ACT_LIST table 1135 (see FIG. 11), where the stored procedure creates a row for each ACTIVITY_ID. The USER_ID and FOLDERNO are both stored in each row created for each ACTIVITY_ID. Moreover, the SEQ_NBR, if any, for each activity is also stored in the row for each ACTIVITY_ID. In a preferred embodiment of the invention, if no sequencing information is selected for the activity by the user, then all non-sequence specific activities will be listed in alphabetical order in the activity list.

After the stored procedure stores the activity information for a particular activity list in the USER_ACT_LIST table 1135, the stored procedure sends a message to the main application program at the client to this effect. The main application program then waits for the user to decide which action he or she wants to perform next.

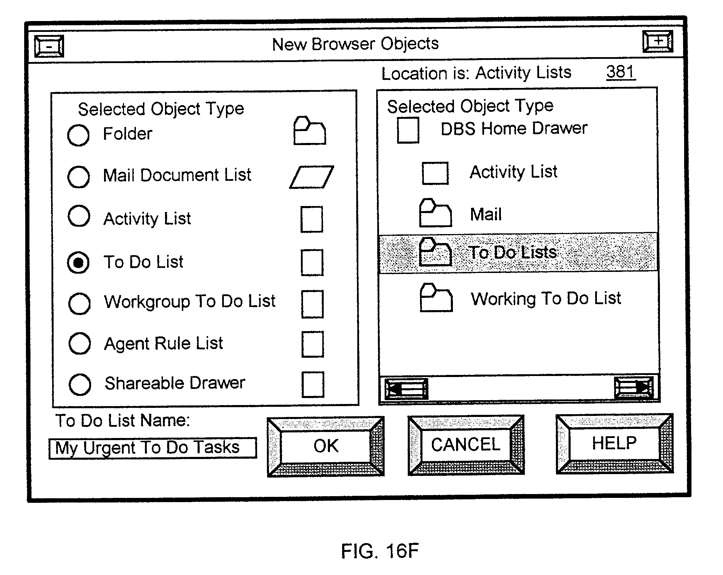

A user may also create a To Do List for his or her To Do List folder 330 (see FIG. 3) by accessing, in a preferred embodiment, the File mode and choosing the New (Ctrl + N) selection from the File List window 380 (see FIG. 16A). As shown in FIG. 16F, the user then selects the "To Do List" as the object type and enters the new To Do List name (e.g., "My Urgent To Do Tasks") in the bottom left hand corner of the "New Browser Objects" window 381. Finally, the user chooses which drawer (e.g., "DBS Home Drawer") and folder (e.g., "To Do Folder") to put the To Do List. The main application program then sends the user's drawer number (DRAWERNO), the folder number (FOLDERNO) assigned to the To Do List, the description (DESCR) of the list (e.g., the To Do List), and the location of the list (PARENTFOLDERNO) (e.g., the number assigned to the To Do List folder) to a stored procedure. In one embodiment, the name of the stored procedure is FOLDER$insert_1. This stored procedure then stores this information in the WIJ_FOLDERS table 1255 (see FIG. 12) and sends a message to the main application program that the information has been stored.

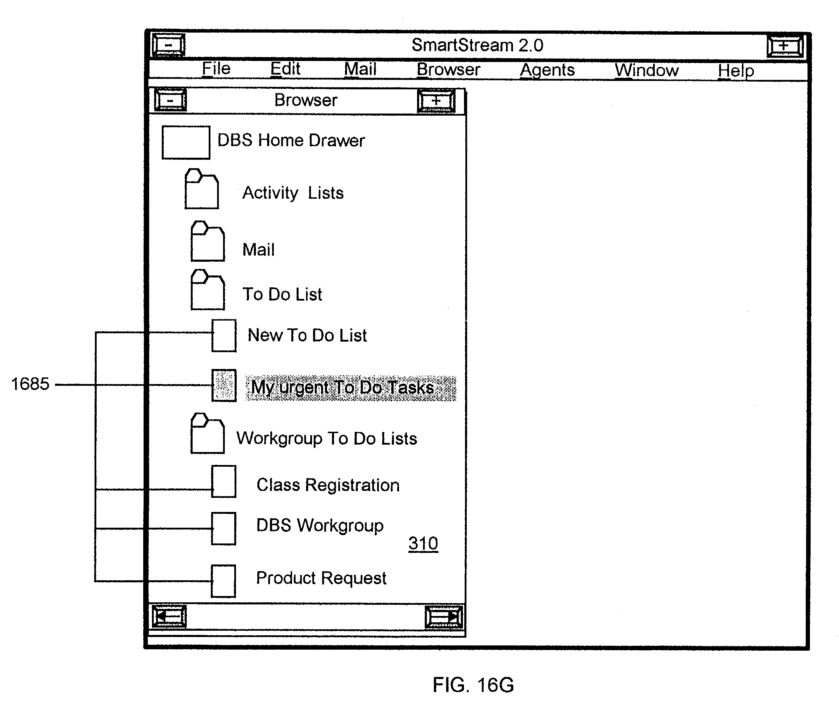

Referring to FIG. 16G, the user may move next activities/tasks categories from one To Do List 1685 to another To Do List 1685 by accessing the Browser mode. The user may then select a To Do List 1685 in which to add a next activity/task category. Like the activity lists 1680 (see FIG. 16C), the representations for the To Do Lists are blank when empty and contain horizontal lines when they contain one or more next activities/tasks.

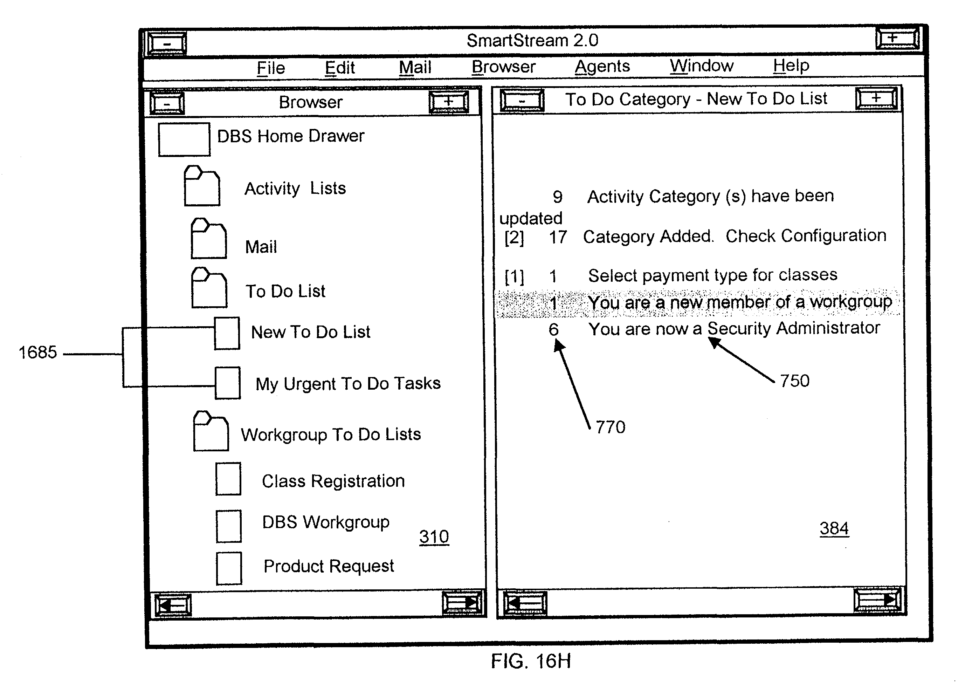

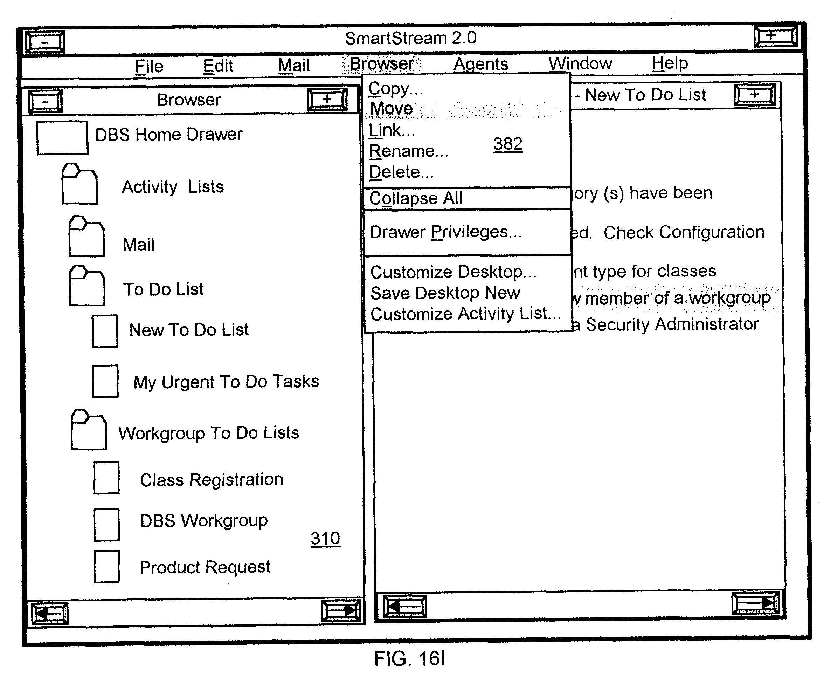

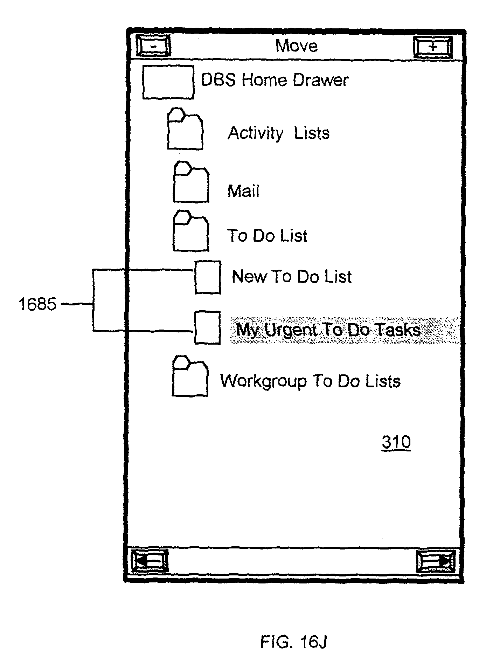

The user moves a next activity/task category from one To Do List 1685 to another To Do List 1685 by selecting a To Do List 1685 which contains one or more next activity/task categories. As shown in FIG. 16H, the user selects the "New To Do List" To Do List 1685 from the Browser mode list window 310. The main application program then accesses a stored procedure to determine all next activities/tasks currently stored in the "New To Do List" To Do List 1685. Details on how the main application program and the stored procedure work together to compile the list of currently stored next activities/tasks is described below.

Next, the main application program displays these next activities/tasks organized by the message 750 representative of the next activity/task category in a Summary To Do Category window 384. The user then selects a next activity/task category to move to another To Do List 1685. For this example, the user selects the "You are a new member of a Workgroup" next activity/task category, which contains one uncompleted 770 next activity/task to be moved to another To Do List 1685.

Finally, as shown in FIG. 16I, the user selects the Browser list 382 and chooses the Move command from the Browser list 382. As shown in FIG. 16J, the main application program then reveals a list of possible To Do Lists 1685 in the Move mode list window 310 for the user to choose to move the next activity/task category. For this example, the user selects the "My urgent To Do Tasks" To Do List 1685. Therefore, as shown in FIG. 16K, when the user accesses the "My urgent To Do Tasks" To Do List in the Summary To Do List window 384, the "You are a new member of a Workgroup" message 750 next activity/task category with its one uncompleted next activity/task is revealed.

Referring to FIG. 16L, the user may also move individual next activities/tasks from one To Do List 1685 to another To Do List 1685. The user accomplishes this by selecting a To Do List containing next activities/task while in the Browser mode (not shown). The user then accesses the Detail To Do Category window 385 and a list of each individual next activity/task is revealed for a particular next activity/task category within the To Do List.

For this example, the user selects the "New To Do List" To Do List and details on two next activities/tasks are revealed for the "Select payment type for class" next activity/task category. The user then chooses a next activity task which, for this example, is ET201, to move to another To Do List. Next, referring to FIG. 16M, the user selects the Browser list 382 and chooses the Move command from the Browser list 382. As shown in FIG. 16N, the main application program then reveals a list of possible To Do Lists 1685 in the Browser mode list window 310 for the user to choose to move the next activity/task. For this example, the user selects the "My urgent To Do Task" To Do List 1685.

Therefore, as shown in FIG. 16O, when the user access the "New To Do List" in the Detail To Do Category window 385, the ET201 class payment next activity/task no longer exists. Moreover, as shown in FIG. 16P, when the user accesses the Summary To Do Category window 384 for the "My urgent To Do Tasks," the "Select payment type for class" next activity/task category is revealed. The window 384 discloses that the "Select payment type for class" next activity/task contains one uncompleted next activity/task, which is the class payment for the ET201 class.

In another aspect of the invention, the user may create a customized folder in which to store activity lists. For example, a user may create a Class Registration folder for storing different lists of activities pertaining to registering for classes. The user accesses the File mode and chooses the New (Ctrl+N) selection from the File list window 380 (see FIG. 16A). The "New Browser Objects" window is then displayed. (see FIG. 16B). The user then selects the "Folder" as the new object type and enters the new folder name in the bottom left hand corner of the window. Finally, the user chooses the drawer in which to put the folder.

The following is an illustrative example of how the application programs at the client side and the stored procedures and tables at the server side interact to facilitate the flow of information in a work flow environment. For this example, a user registers for two classes.

In order to register for the classes, the user logs onto the system. In a preferred embodiment, after the user logs on, he or she selects the Browser mode from a list of possible modes displayed across the screen (not shown). Upon selecting the Browser mode, the main application program sends the user's USER_ID to a stored procedure at the server. The stored procedure then accesses the WIJ_DRAWERS table 1245 (see FIG. 12) to obtain information on the drawer number (DRAWERNO) and the description (DESCR) of the user's drawer.

The stored procedure then accesses the WIJ_FOLDERS table 1255 (see FIG. 12) to obtain information on all folders and lists, which are stored as folder numbers (FOLDERNOs), associated with the DRAWERNO. This information includes a description (DESCR) of the folder or list; a list indicator (CONTAINSIND), which reveals whether the FOLDERNO corresponds to a folder, an Activity List, a To Do List or some other list used in the system; and priority information (PARENTFOLDERNO), which is used to determine which folder each activity list and To Do List belongs in.

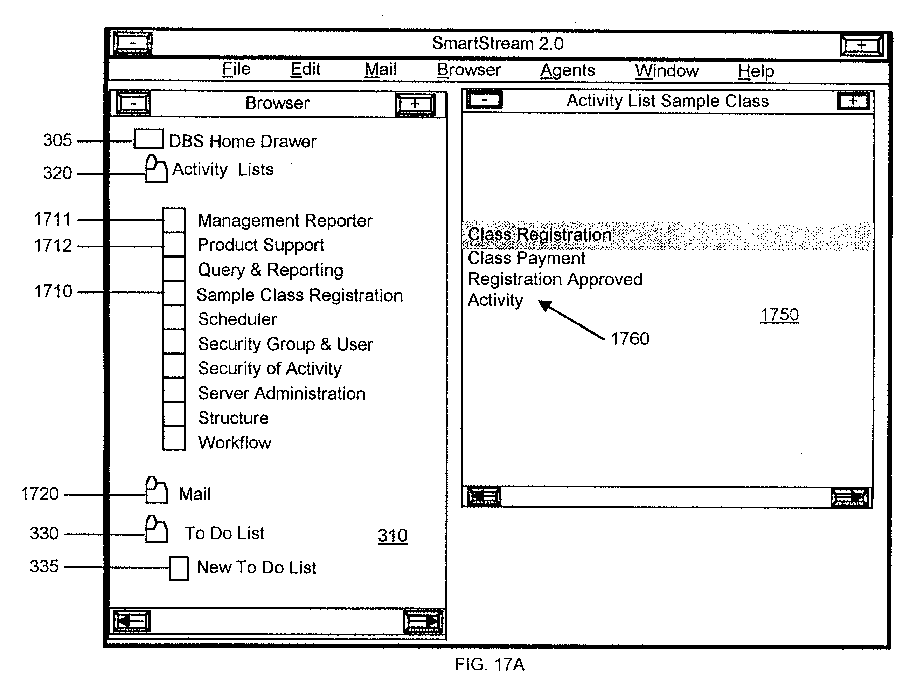

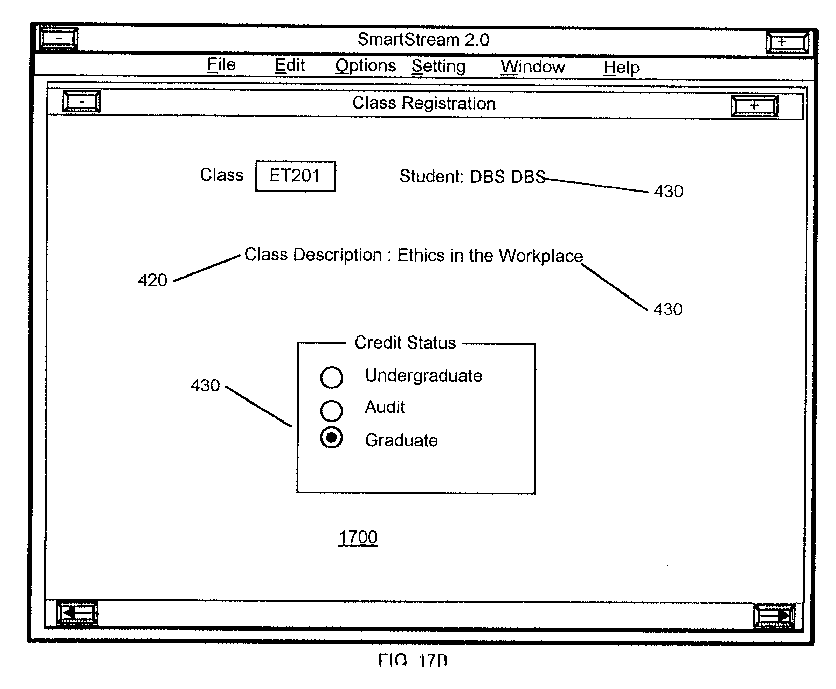

The main application program, as shown in FIG. 16C, uses the information sent to it by the stored procedure to display the folders 1670 and lists 1680 for the user's drawer 305 in the Browser mode list window 310. As shown in FIG. 17A, to illustrate, the user's drawer 305 is described as DBS Home Drawer in the Browser mode list window 310. Moreover, the user's Drawer 305 contains an Activity Lists folder 320, a To Do Lists folder 330 and a Mail folder 1720. The Activity Lists folder 320 contains a "Sample Class Registration" list 1710, as well as other lists such as a "Management Reporter" list 1711 and a "Product Support" list 1712. The To Do Lists folder 330, for this example, contains only the user's personalized To Do List, referred to as the "New To Do List" 335.

For this example, to register for classes, the user selects the "Sample Class Registration" list 1710 and, in response, the system displays the user's customized "Sample Class Registration" list window 1750, with pre-selected activities.

The computer system of the present invention obtains the activities for the customized activity list window 1750 (e.g., "Sample Class Registration" list window) by having the main application program send the USER_ID and FOLDERNO for the activity list selected by the user to the stored procedure at the server. In one embodiment, the name of the stored procedure is psp_sel_user_cando_list_1. This stored procedure then accesses the USER_ACT_LIST table 1135 (see FIG. 11) to obtain each activity, via its ACTIVITY_ID, that is associated with the USER_ID and FOLDERNO, as well as any SEQ_NBR information pertaining to the prioritizing of these activities set up by the user for displaying each activity in the activity list window 1750. The stored procedure also accesses the ACTIVITY_MASTER table 1210 (see FIG. 12) to obtain information on the type of activity (ACTIVITY_TYPE) (e.g., a PowerBuilder type window or an executable file type) and the command line (EXEC_NAME) for the activity window application program (e.g., Class Registration activity window) or executable application program which is used to execute the activity. The stored procedure then returns this information to the main application program so that the activity list window 1750 may be displayed with the activities listed in sequence specific or alphabetical order where no sequence specific information for an activity is indicated.

For this example, the user has selected the Class Registration, Class Payment, Registration Approval, and Activity activities 1760 for his or her "Sample Class Registration" list 1750. Moreover, the user has chosen to sequentially list the activities such that the Class Registration Activity has the highest SEQ_NBR, with Class Payment and Registration Approval having lower SEQ_NBRs and Activity having the lowest or no SEQ_NBR.

From the "Sample Class Registration" list window 1750, the user then selects the Class Registration activity from the list of activities in order to register for a class. As shown in FIG. 17B, the main application program then calls the activity window application program represented by its EXEC_NAME by issuing an "open" command (a PowerBuilder command). The main application program then reveals the Class Registration activity in a Class Registration activity window 1700. If the user had selected to run an executable file, then the main application program would have called the executable file represented under its EXEC_NAME by sending it a "run" command (a PowerBuilder command).

The computer system reveals the activity window 1700 by having the main application program access a Class Registration application program responsible for the Class Registration activity. The Class Registration application program contains information on the structure of the window and the headings 420 (e.g., Student, Class, Class Description, and Credit Status for the Class Registration activity). The Class Registration application program then executes a stored procedure. In one embodiment, the name of the stored procedure is psp_sel_sam1_1. The server then requests this stored procedure to send it back information on available classes for the user. The stored procedure then accesses the SAMPLE_CLASS table 1360 (See FIG. 13) to obtain information on each class (CLASS) and a description (DESCRIPTION) of the class. The stored procedure then sends this information, also referred to as values, back to the Class Registration application program.

After the Class Registration application program receives the headings 420 and their associated values 430, this information is displayed in the Class Registration activity window 1700. For this example, one class at a time is listed as a value 430 next to the Class heading 420 with the corresponding information for the class filling portions of the rest of the activity window 1700. The user may then scroll (e.g. with the arrow keys on the keyboard) through all possible classes that the user has access to register.

After the user has selected a class in which to register (e.g., ET201 - Ethics in the Workplace) along with the credit status (e.g., graduate), the user saves the information. The user may save the information by clicking over the "save file" icon, represented as a floppy disk (not shown), with the mouse or simply pressing the Control and S keys simultaneously on the keyboard.

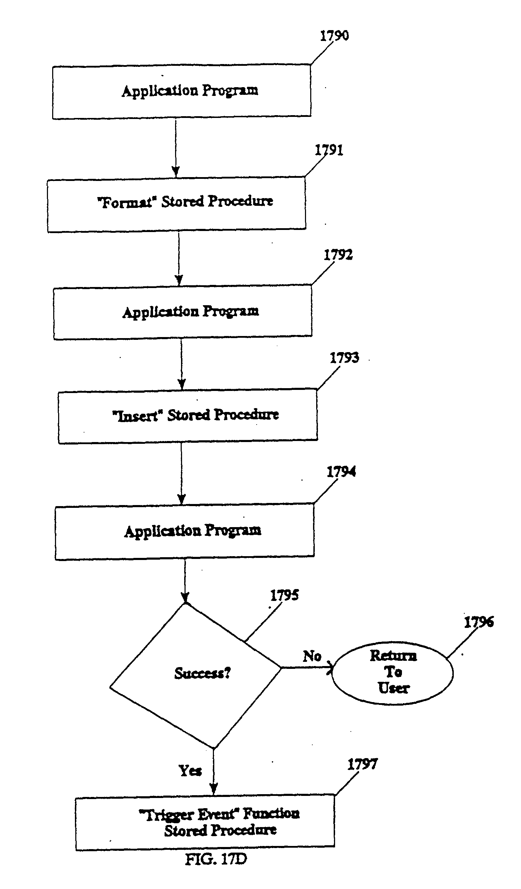

The Class Registration application program saves the Class Registration activity information (e.g., ET201 for class and graduate for credit status) in the following fashion. As shown in FIG. 17D, at step 1790, the Class Registration application program (written in PowerBuilder) calls a stored procedure, at step 1791, to format the information for certain columns in the associated table at the server. For this example, the information is formatted for the class, student, and credit columns in the SAMPLE_REG table 1365 (see FIG. 13). At step 1792, the formatted information is returned to the Class Registration application program, which, at step 1793, then sends the formatted information to a stored procedure at the server. In one embodiment, the name of this stored procedure is psp_ins_sam2_1. This stored procedure then stores each piece of information (each value) in its corresponding class, student and credit column in the SAMPLE_REG table 1365. Finally, at step 1794, the stored procedure returns a message to the Class Registration application program that indicates that the information has been saved.

At step 1795, the Class Registration application program then determines whether the information was successfully saved. If not, the application program proceeds to step 1796 and returns control to the user. However, if the information was saved successfully, then the Class Registration application program determines which event to trigger. For this example, possible events associated with the Class Registration activity are "Add Class" and "Change Class". To illustrate, the user has added a new class. Therefore, the "Add Class" event is selected, along with the corresponding stored procedure for this event. In one embodiment, the name of the "Add Class" stored procedure is pamsam2ins. At step 1797, the Class Registration application program then executes the Trigger Event function stored procedure to determine the next activities/tasks and users/workgroups responsible for completing the next activities/tasks associated with the Class Registration activity. In one embodiment, the name of the Trigger Event stored procedure is called pam0011_trig_am_event. In executing the Trigger Event stored procedure, the Class Registration application program sends information to the Trigger Event stored procedure at the server.

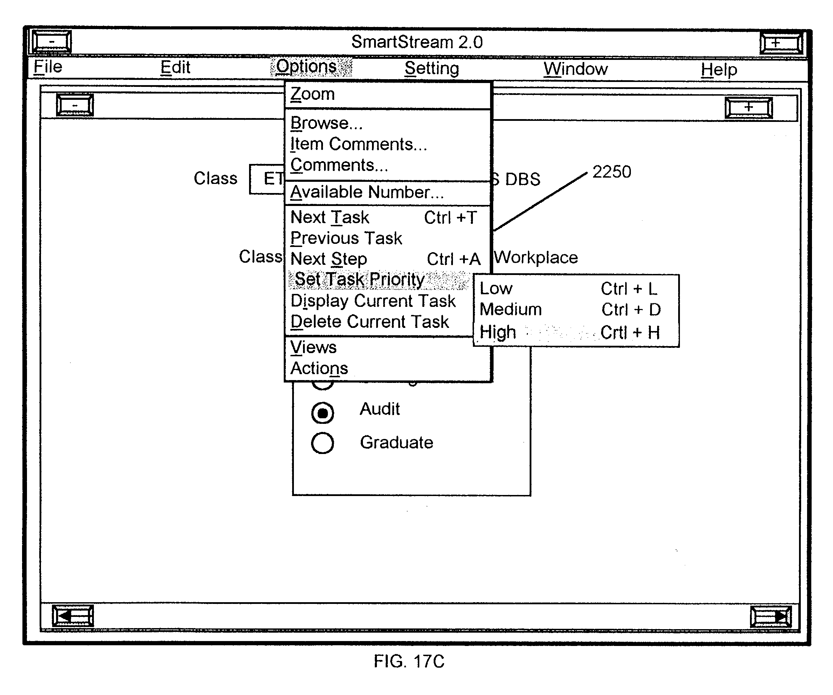

The information sent to the Trigger Event stored procedure includes an event identifier (EVENT_ID) for the corresponding stored procedure (e.g., pamsam2ins), the entity value (NEXT_STEP_ENT_VAL) (e.g., plant, site, organization, etc.) responsible for performing the next activity/task, the USER_ID for the user who completed the activity, the ACTIVITY_ID for the activity just completed (e.g., Class Registration), and the priority of the subsequent next activity/task (MSG_PRIORITY) set by the user who has just completed the activity. As shown in FIG. 17C, the user who just completed the activity may set the priority of the subsequent next activity/task by selecting the Set Task Priority option in the Options Mode. Other information may include whether a user or a work group (OWNER_TYPE) is responsible for the next activity/task and the identification for the user or work-group (USER_ID or MSG_GROUP_ID).

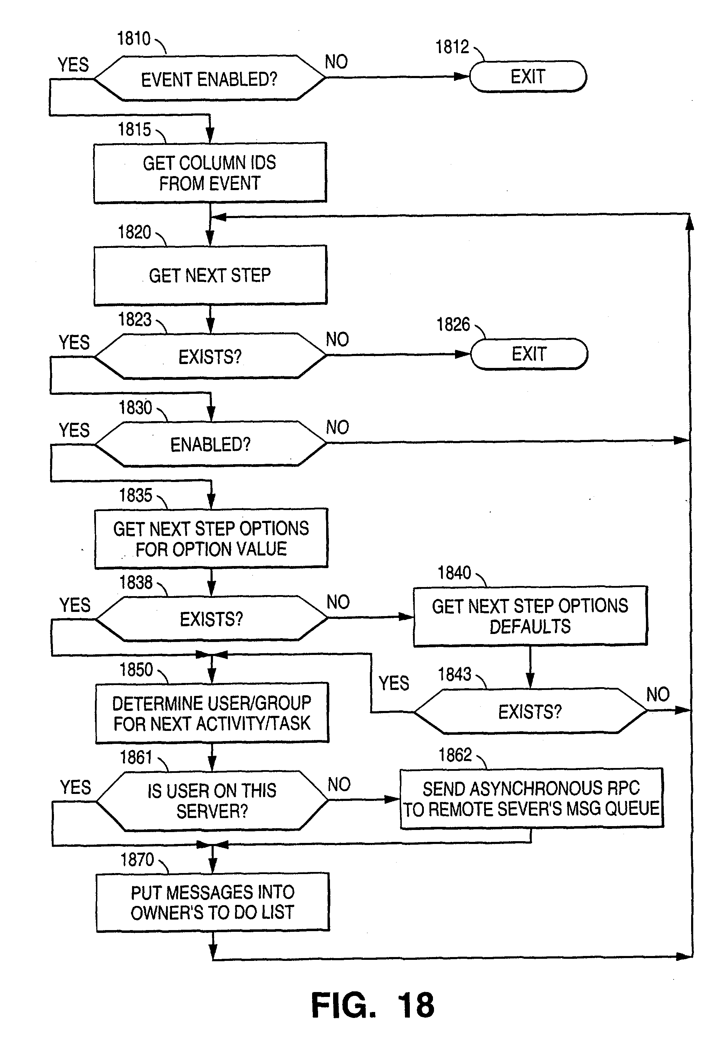

Referring to FIG. 18, a flow diagram is provided, for a preferred embodiment of the Trigger Event function stored procedure. This flow chart illustrates a process for determining the next activity/task(s), user/work group responsible for performing the next activity/task(s), and the like, and creating the next activity/task(s).

First, at step 1810, the Trigger Event function stored procedure determines whether the event (e.g., pamsam2ins for the "Add Class" event) is enabled. This is accomplished by accessing the EVENT_MASTER table 1220 (see FIG. 12) to determine if the ENABLED column for the EVENT_ID (e.g., pamsam2ins) contains a one or a zero. In a preferred embodiment, if the ENABLED column contains a zero, then the event is disabled, the Trigger Event function stored procedure is exited at step 1812, and control is returned to the Class Registration application program.

However, if the ENABLED column contains a one, then the event is enabled and the Trigger Event function stored procedure proceeds to step 1815. At step 1815, column identifiers (COL_Ids) are obtained from the EVENT_MASTER table 1220 for the corresponding EVENT_ID. Thus, the Trigger Event function stored procedure is able to determine which COL_Ids for the given event will be used to pass the values pertaining to the event. For this example, possible COL_Ids for the pamsam2ins EVENT_ID could be 1060 for COL_ID_1 representative of the Class heading, 1061 for COL_ID_2 representative of the Student heading, and 1062 for COL_ID_3 representative of the Credit heading.

The Trigger Event function stored procedure then proceeds to step 1820 to obtain the first of all possible next steps which are associated with the event. In doing so, at step 1823, the Trigger Event function stored procedure accesses the Next Step table 1225 (see FIG. 12) to determine if any next steps exists for the EVENT_ID. This is accomplished by determining if any rows (records) exists for the particular EVENT_ID in the Next Step table 1225. If there are no rows for the EVENT_ID in the Next Step table 1225, then the Trigger Event function stored procedure is exited at step 1826.

However, if rows for the EVENT_ID do exist in the Next Step table 1225, then, at step 1830, the Trigger Event function stored procedure determines whether the first row, which represents a particular next activity/task (ACTIVITY_ID), is enabled (ENABLED). If the ENABLED column is disabled (e.g., zero), then the Trigger Event function stored procedure returns to step 1820 to obtain the next step, if there are any. This loop continues until an enabled next step for a next activity/task corresponding to the EVENT_ID is encountered. If there are no rows enabled for the EVENT_ID, then, after the last one is encountered, the Trigger Event stored procedure will return to the Class Registration application program.

On the other hand, if a first row encountered for an EVENT_ID is enabled (e.g., one), then the Trigger Event function stored procedure obtains the message identifier (MSG_ID) representing the next activity/task category and the next activity/task identifier (ACTIVITY_ID) and proceeds to step 1835. At step 1835, the Trigger Event function stored procedure accesses the Next Step Options table 1230 (see FIG. 12) for the entity (NEXT_STEP_ENT_VAL) responsible for the next activity/task, and the stored procedure proceeds to step 1838

At step 1838, if rows exist for the NEXT_STEP_ENT_VAL, then the Trigger Event stored procedure proceeds to step 1850. However, if no rows exists for the NEXT_STEP_ENT_VAL, then the Trigger Event stored procedure proceeds to step 1840 to obtain any default values sent from the Class Registration application program which define the entity responsible for the next activity/task. This information is stored in the Next Step Options table 1230 in the NEXT_STEP_ENT_VAL column (see FIG. 12). In one embodiment, specific entities may be delineated with an identifier or an asterisk (*) may be used to indicate that every user (enterprise wide) may have access to the next activity/task. The Trigger Event function stored procedure then proceeds to step 1843 to determine if any default values are available. If no default values are available, then the Trigger Event function stored procedure returns to step 1820 to determine if there are any other next steps to be evaluated and acted upon as described above. However, at step 1843, if default values do exist, then the Trigger Event stored procedure proceeds to step 1850.

At step 1850, the Trigger Event stored procedure accesses the Next Step Options table 1230 to determine the user (USER_ID) or work group (MSG_GROUP_ID) responsible for the next activity/task. In doing so, it checks the IGNORE_OVERRIDE column for the row to determine whether the USER_ID or MSG_GROUP_ID values should be used. If the IGNORE_OVERRIDE is enabled, then the values identified in the column are used. However, if the IGNORE_OVERRIDE is disabled, then the values sent from the Class Registration application program are used. On the other hand, if the Class Registration application program did not send any values, then the values from the Next Step Options table 1230 are used. Next, the Trigger Event function stored procedure proceeds to step 1861, where it is determined whether the user is on the present server. If not, then at step 1862, asynchronous RPC is sent to the remote server's messages queue.

Finally, the Trigger Event stored procedure proceeds to step 1870 where information pertaining to the next activity/task is added to the MESSAGE_QUEUE table 1140 (see FIG. 11) by creating a row for the next activity/task. The information in the row may then be used later for the responsible user's or work group's To Do List. This information includes the OWNER_ID which is the USER_ID; MSG_GROUP_ID (for a work group) or override value; the OWNER_TYPE, which indicates whether the OWNER_ID belongs to a user or a work group; the ACTIVITY_ID for the next activity/task; the MSG_ID pertaining to the next activity/task category; and CREATE_TIME, which indicates the date and time the next activity/task was created.

Other information that may be stored in the new next activity/task row includes the MSG_SEQ_NBR, which indicates the priority associated with the message representative of the new activity/task category, where the priority is assigned to the next activity/task category by the user or work group to perform the next activity/task in the Detail To Do Category window (see FIG. 16L); the FOLDERNO, which indicates the user's or work group users' list associated with the next activity/task; and the NEXT_STEP_ENT_VAL, which indicates the plant, site, organization or the like ultimately responsible for the next activity/task.

Finally, particular information relating to the class in which the user has registered is stored in a CDL_VAL associated with a specific COL_ID. For example, COL_ID_1 which is 1060 and represents the Class heading correlates with COL_VAL_1 which stores the class value, ET201; COL_ID_2 which is 1061 and represents the student heading correlates with COL_VAL_2 which stores the student value, DBS; and COL_ID_3 which is 1062 and represents the credit heading correlates with COL_VAL_3 which stores the credit value, graduate.

After the Trigger Event stored procedure has completed step 1870 by adding the pertinent information to the new next activity/task row of the MESSAGE_QUEUE table 1140, then the stored procedure returns to step 1820 to determine if there are any other next steps to be evaluated and acted upon as described above. After the Trigger Event stored procedure has acted upon all the next steps, as described above, the stored procedure proceeds from step 1820 to step 1826. At step 1826, the Trigger Event stored procedure is exited and control is returned to the Class Registration application program.

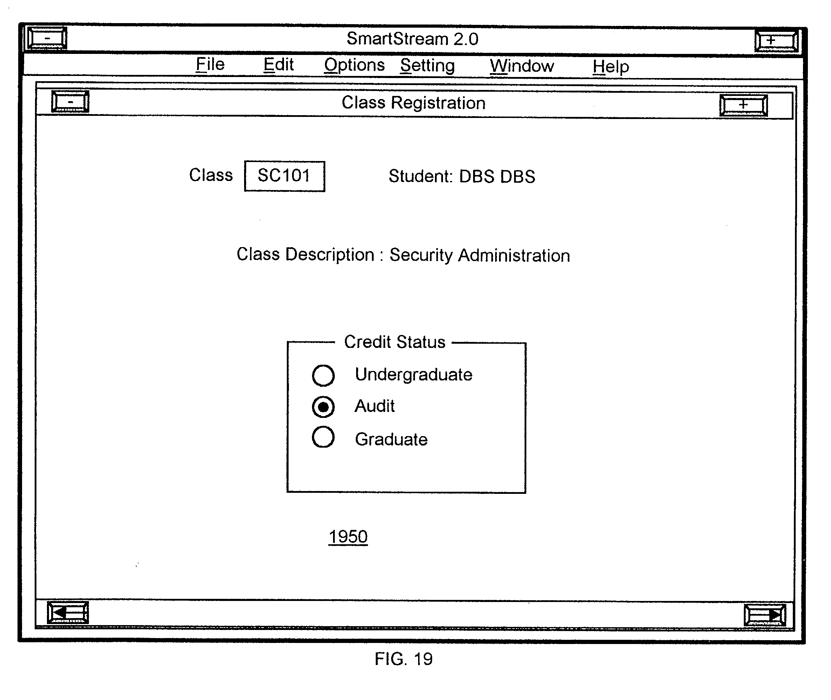

The Class Registration application program then displays a blank Class Registration activity window (not shown) and waits for the user to either register for another class or exit the Class Registration activity. For this example, as shown in FIG. 19, the user registers for a second class, SC101 (Security Administration) with an audit credit status. Therefore, the user executes the save command to save the class. Next, the procedure described above is repeated as the Class Registration application program formats the information entered by the user, and sends this information to be saved by the stored procedure. In one embodiment, the name of the stored procedures is psp_ins_sam1_1. After the information has been stored, the Class Registration application program determines which event to trigger and triggers the event, via the Trigger Event stored procedure, to determine the next activities/tasks and users/work groups responsible for completing the next activities/tasks.

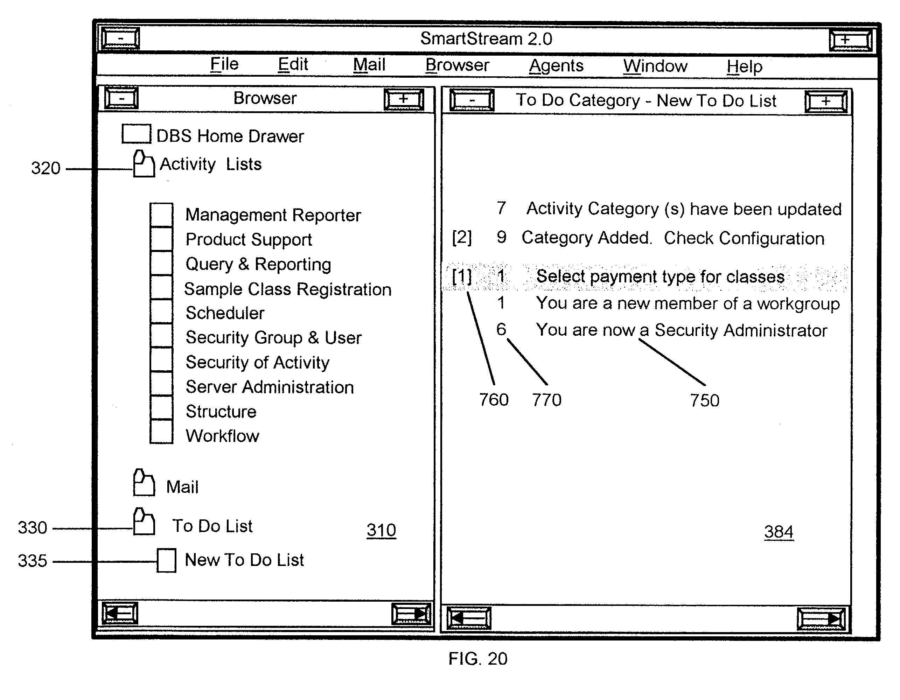

After the Class Registration application program receives a message from the Trigger Event stored procedure that all next activities/tasks have been added to user's/work group's To Do List, the Class Registration application program again waits for the user to either register for another class or exit the Class Registration activity. For this example, as shown in Fig. 20, the user decides to leave the Class Registration activity window and return to the Browser mode list window 310. In a preferred embodiment, the user may press the F11 key to return the user to the Browser mode list window 310.

From the Browser mode list window 310, the user may then decide whether to access another list in the Activity List Folder 320 to begin another activity or to access the user's personalized To Do List ("New To Do List") 335 in the To Do Lists folder 330. In this example, the user selects the "New To Do List" 335, and a list of next activities/tasks is displayed in the Summary To Do Category window 384.

The computer system obtains the next activities/tasks for the Summary To Do Category window 384 (e.g., "New To Do List" window) by having the main application program send the USER_ID and FOLDERNO selected for the To Do List by the user to the stored procedure. In one embodiment, the name of the stored procedure is psp_sel_mque_detail. For this example, the FOLDERNO corresponds to the user's personalized To Do List (e.g., "New To Do List").

The stored procedure then accesses the MESSAGE_QUEUE table 1140 (see FIG. 11) to obtain the message via the message identifier (MSG_ID) for each next activity/task category corresponding to the user's USER_ID (identified as the OWNER_ID) and FOLDERNO. The stored procedure also obtains any priority information regarding the message and the next activities/tasks represented by the message from the MSG_SEQ_NBR and MSG_PRIORITY columns, respectively. The status of each individual next activity/task, as to whether it has previously been completed, is also obtained by the stored procedure from the MSG_STATUS column. Moreover, the stored procedure obtains the ACTIVITY_ID, COL_Ids, and COL_VALs associated with each MSG_ID for all its corresponding next activities/tasks. The stored procedure also accesses the ACTIVITY_MASTER table 1210 (see FIG. 12) to obtain information on the type of activity (ACTIVITY_TYPE) (e.g., PowerBuilder type window or executable file type) and the command line (EXEC_NAME) for the activity window application program or executable application program which is used to execute the next activity/task. The stored procedure then sends this information back to the main application program, which organizes the messages based on priority, calculates the number of completed and uncompleted next activities/tasks for each message, and reveals the messages 750 and completed (done) 760 and uncompleted (new) 770 information in the Summary To Do Category window 384.

For the "New To Do List" Summary To Do Category window 384, there are five messages 750. These messages 750 are "Activity Category[s] have been updated", "Category Added, Check Configuration", "Select payment type for class", "You are a new member of a Workgroup", and "You are now a Security Administrator". To the left of each message 2080 is the "Done" column 760 and the "New" column 770, which represent the number of next activities/tasks completed and uncompleted for the particular message 750. To illustrate, the "Category Added, Check Configuration," message 750 has two Done (completed) 760 and nine New (uncompleted) 770 next activities/tasks associated with the message 750.

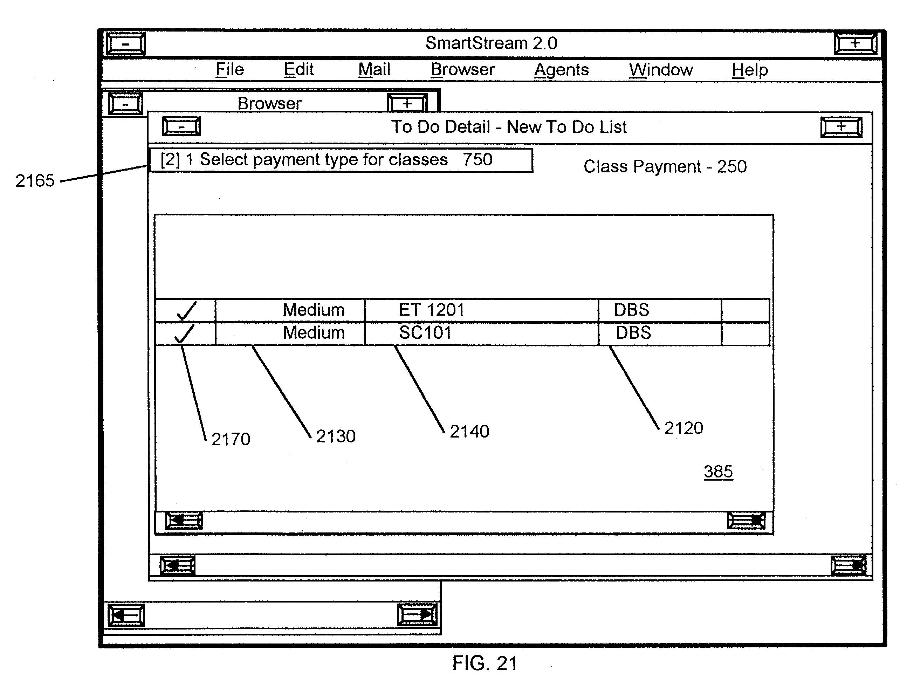

As shown in FIG. 21, the user may also access a Detailed To Do Category window 385. In this window 385, when the user accesses the To Do List, one message 750 is revealed at a time. For this example, the main application program is displaying the "Select payment type for class" message 750. The main application program reveals, to the left of the message 750, the number of next activities/tasks 2165 that exist, and discloses, to the right of the message 750, the next activity/task 250 associated with this message 750. The main application program also lists, below the message 750, key information relating to each next activity/task 250. From left to right, this includes whether the next activity/task 250 has been completed 2170, the priority 2130 associated with each next activity/task 250, and, for this example, the class heading 2140 and student headings 2120.

To illustrate, the number of existing next activities/tasks 250 associated with the "Select payment type for class" message 750 are two, and the next activity/task 250 associated with this message 750 is Class Payment. Further, the next activities/tasks 250 relate to two classes 2140, ET201 and S2101, sought to be registered by a user/student 2120, DBS. For this example, DBS, the one originally registered for both of these classes, is also responsible for selecting a payment type for each class. The window 385 also reveals that both of these next activities/tasks 250 are uncompleted 2170 and have medium priority status 2130.

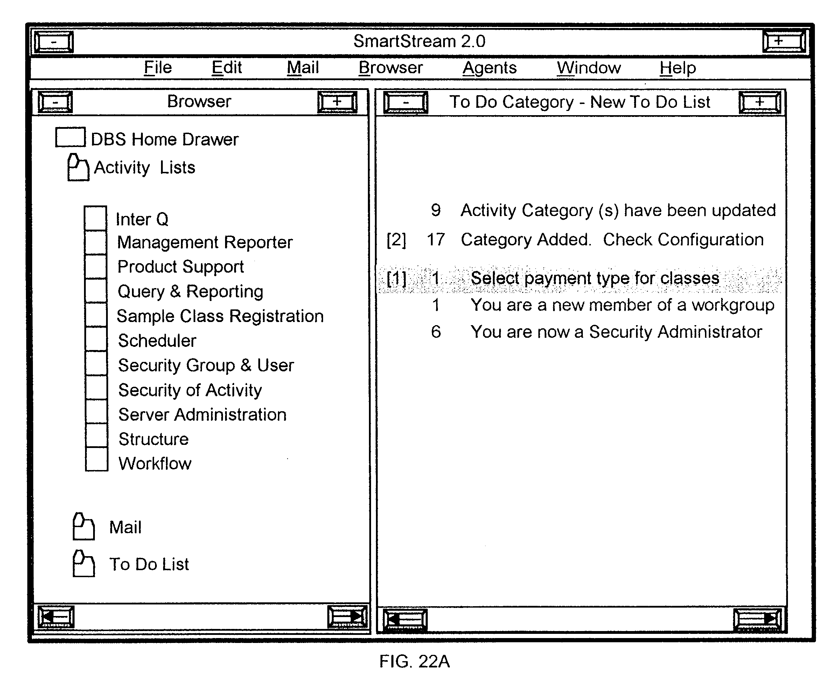

The user may select a category for a next activity/task to act upon from either the Summary To Do Category window 384 or the Detailed To Do Category window 385. For this example, the user selects the Class Payment next activity/task category, represented by the "Select payment type for class" message, from the Summary To Do Category window 384, as shown in FIG. 22A. The main application program then sends the FOLDERNO for the To Do List and the MSG_ID for the category selected to the next activity/task application program. For this example, the FOLDERNO and MSG_ID would be sent to the Class Payment application program represented by its EXEC_NAME. In one embodiment, the EXEC_NAME of the Class Payment application program is pam0510_payment.

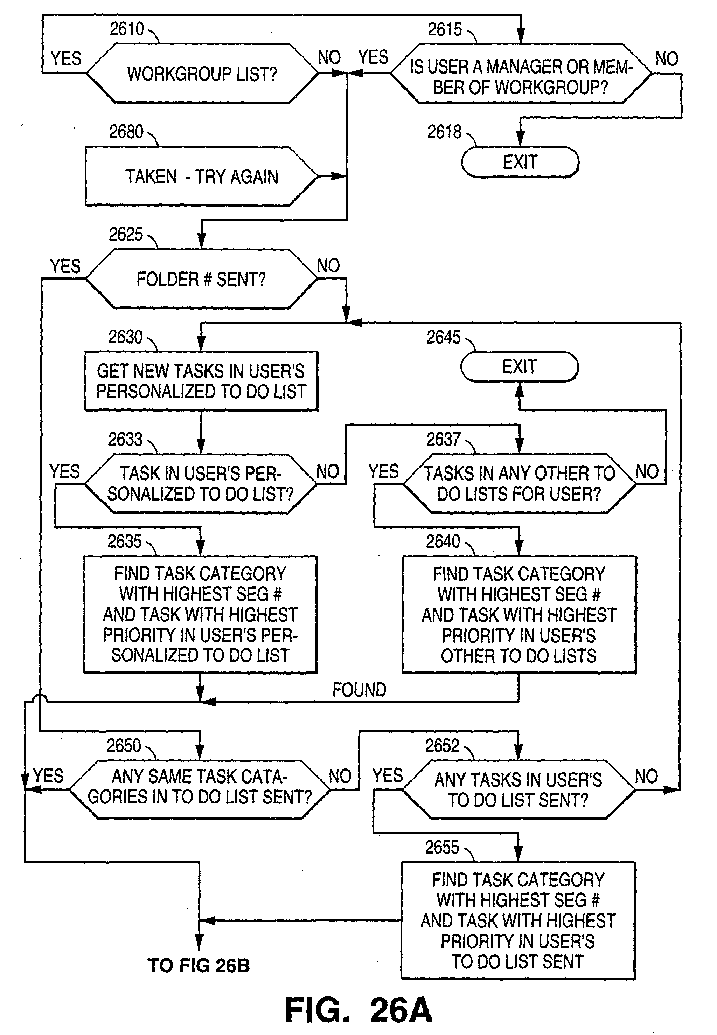

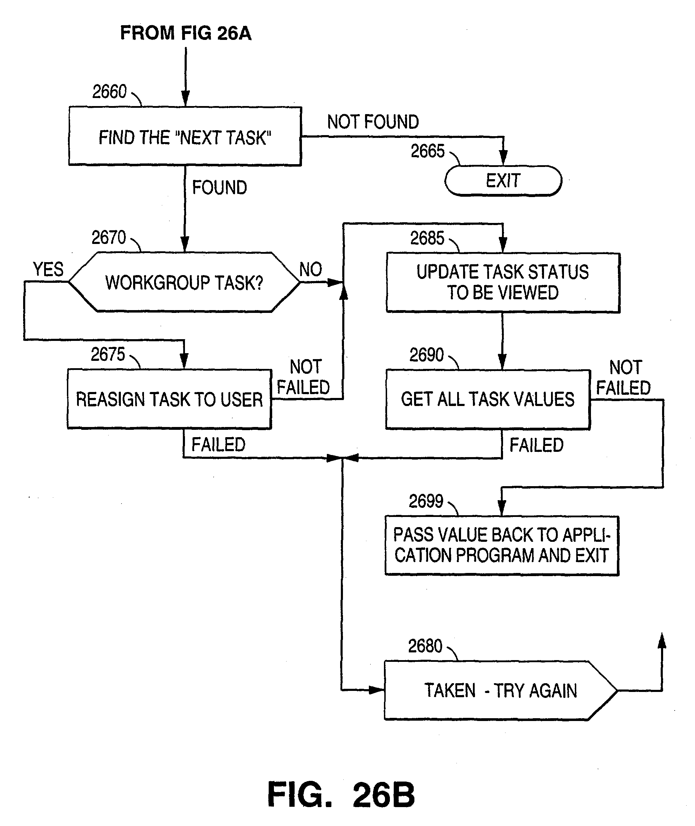

The next activity/task application program then sends the FOLDERNO and MSG_ID to a stored procedure which determines the most prioritized next activity/task for the next activity/task category. In one embodiment, the name of the stored procedure is the Next Task stored procedure, which is discussed in further detail below and is illustrated in FIG. 26. After determining the most prioritized next activity/task, the Next Task stored procedure sends information on this next activity/task (class payment), represented by its ACTIVITY_ID, to the -next activity/task application program or executable application program.

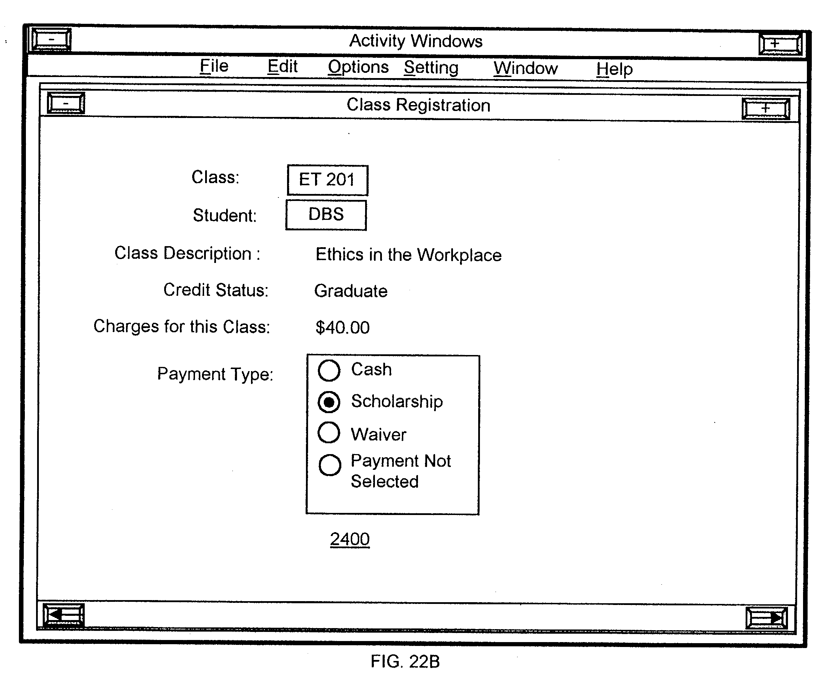

In this example, the class payment next activity/task category only contains one next activity/task. Therefore, the Next Task stored procedure selects the next activity/task, and the Next Task stored procedure send the Class Payment activity application program the next activity/task. The Next Task stored procedure also sends the Class Payment application program other information regarding this next activity/task. As shown in FIG. 22B, the Class Payment application program then reveals the Class Payment next activity/task in a Class Payment activity window 2400, as described above, for the Class Registration activity.

The user may also access next activities/tasks via, the Options mode. To illustrate, if the same user is responsible for an activity and corresponding next activity/task or next activity/task and corresponding next activity/task that occur sequentially, then the user may access the next activity/task from the activity or next activity/task window via the Options mode. For example, since the user (DBS) is responsible for both the Class Payment next activity/task and the just completed Class Registration activity, then DBS may access the Class Payment next activity/task from the Class Registration window via the Options mode.

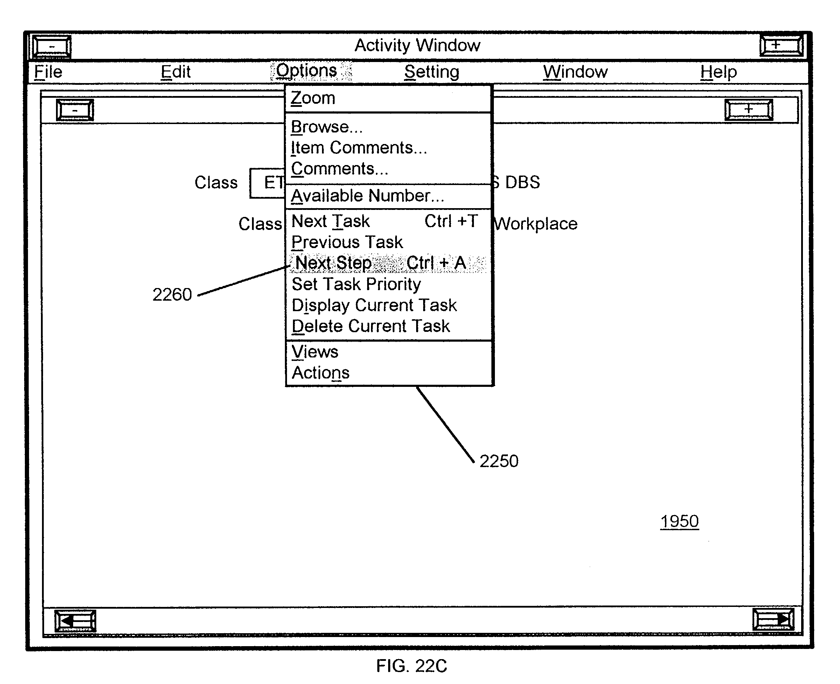

To illustrate, as shown in FIG. 22C, after DBS had completed registering for the SC101 class in the Class Registration activity window 1950, DBS accesses the Options mode. In doing so, the Class Registration application program calls the Options application program, which reveals a list of options 2250 for the user to select from. Next, in order to access the sequential next activity/task in connection with the Class Registration activity, the user selects the Next Step option 2260 from the Options mode list 2250.

Upon accessing the Next Step option 2260, the Option application program calls the Class Registration application program to obtain information to be sent to a Next Step application program. The information obtained is the USER_ID, ACTIVITY_ID, and a key value, which, for this example, is SC101 for the class value (CDL_VAL_1) as well as its corresponding column identifier (COL_ID_2). The Options application program then calls the Next Step application program and sends the USER_ID formatted as the OWNER_ID and FROM_USER_ID for DBS, the ACTIVITY_ID formatted as the FROM_ACT_ID for the Class Registration activity, the COL_VAL_1 for SC101, and the COL_ID_1 for the class heading to the Next Step stored procedure.

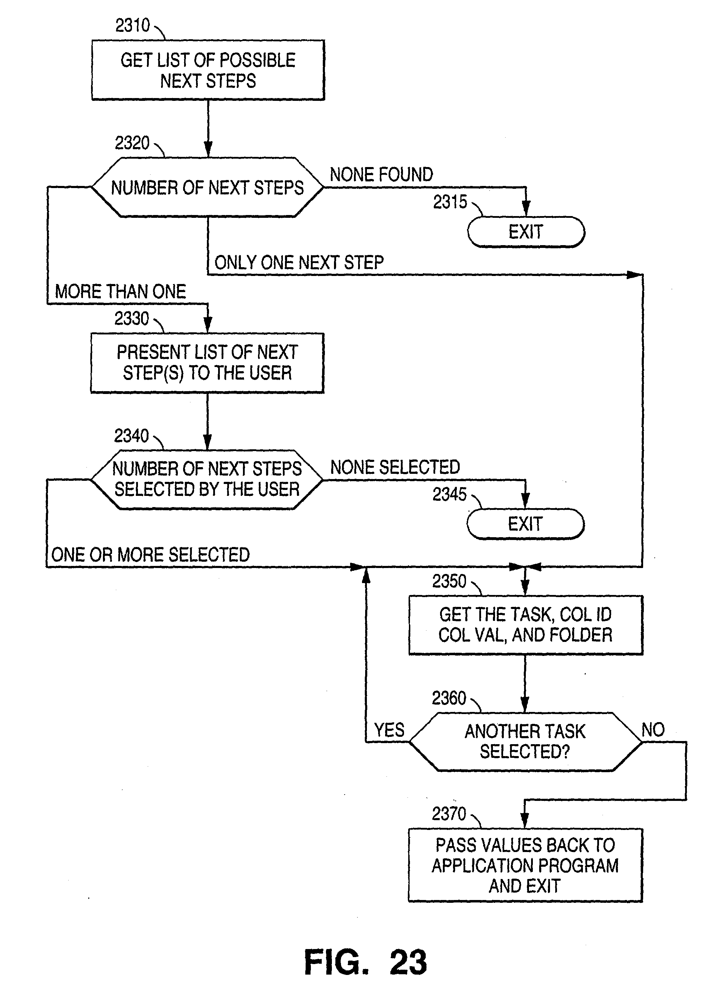

The Next Step stored procedure is illustrated in FIG. 23. In one embodiment, the Next Step stored procedure is called psp_mque_next_step_1. At step 2310, the Next Step stored procedure obtains a list of all possible next steps in connection with the just completed activity for that user. In doing so, the Next Step stored procedure accesses the MESSAGE_QUEUE table 1140 (see FIG. 11) to obtain all next activities/tasks (represented as ACTIVITY_Ids) and their message identifiers (MSG_Ids) for the OWNER_ID and FROM_USER_ID corresponding to DBS, the FROM_ACT_ID for the Class Registration activity, and the key value corresponding to SC101 (COL_VAL_1) for the class heading (COL_ID_1). The Next Step stored procedure then proceeds to step 2320.

At step 2320, the Next Step stored procedure calculates the number of next steps encountered. If the number of next steps encountered equals zero, then the Next Step stored procedure is exited at step 2315 and a message to this effect is sent back to the Next Step application program which reveals this to the user. If there is only one Next Step, then the stored procedure proceeds to step 2350. However, if the number of next steps equals one or more, then the Next Step stored procedure proceeds to step 2330.

At step 2330, the Next Step stored procedure sends the ACTIVITY_Ids and MSG_Ids to the Next Step application program, which lists each next activity/task in a window (not shown) that corresponds to the just completed Class Registration activity for the SC101 class. The user may then select which next activities/tasks he or she would like to act upon. The Next Step application program then sends the ACTIVITY_Ids for these next activities/tasks selected back to the Next Step stored procedure. The Next Step stored procedure then proceeds to step 2340.

At step 2340, the Next Step stored procedure calculates the number of next steps selected by the user. If the number of next steps selected equals zero, then the Next Step stored procedure is exited at step 2345 and a message to this effect is sent back to the Next Step application program which exits the Options window 1950 (see FIG. 22C) accordingly. However, if the number of next steps selected equals one or more; then the Next Step stored procedure proceeds to step 2350.

At step 2350, the Next Step stored procedure accesses the MESSAGE_QUEUE table 1140 (see FIG. 11) and obtains the ACTIVITY_ID, FOLDERNO, and information contained in the COL_Ids and COL_VALs for the first next activity/task selected. The Next Step stored procedure then proceeds to step 2360, where it determines whether there are any other next activities/tasks which need to be accessed from the MESSAGE_QUEUE table 1140. If not, then the Next Step stored procedure proceeds to step 2370.

However, if there are other next activities/tasks to be accessed from the MESSAGE_QUEUE table 1140, then the Next Step stored procedure returns to step 2350 and the above-mentioned information is obtained for the second next activity/task. This cycle continues until the pertinent information for each next activity/task selected by the user has been obtained by the Next Step stored procedure. The Next Step stored procedure then proceeds to step 2370.

At step 2370, the information related to each next activity/task selected by the user is sent back to the Next Step application program. This includes all ACTIVITY_Ids, FOLDERNOs, COL_Ids, and COL_VALs. The Next Step stored procedure also sends a message as to the sequence that each next activity/task should be executed.

The Next Step application program then calls the application program responsible for performing the first next activity/task. If there are other next activities/tasks that need to be executed after the first (or current) next activity/task, then a message is sent to the application program indicating that it should call the Next Step application program upon completion of the first (current) next activity/task.

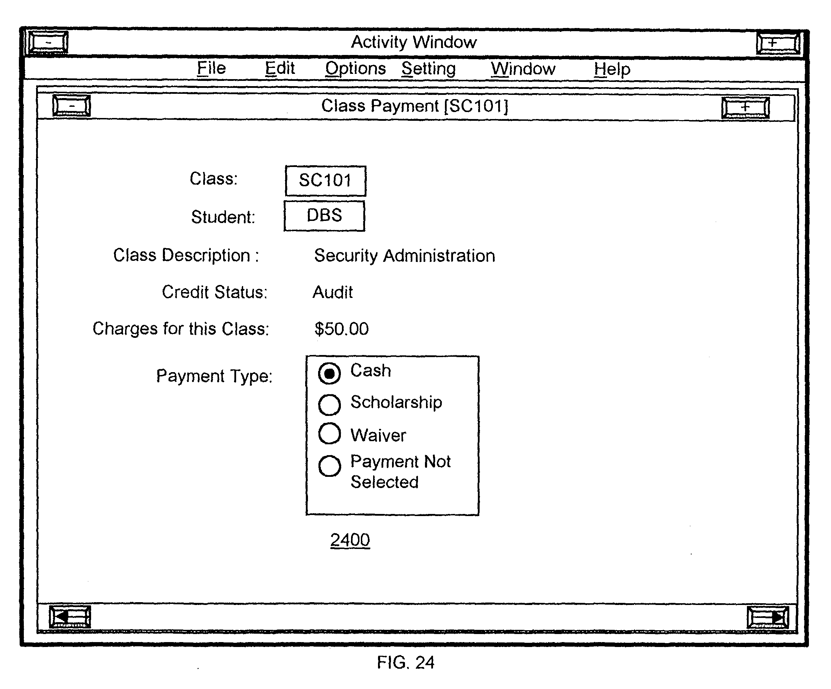

For this example, the Class Payment application program is called up. Therefore, referring to FIG. 24, the Class Payment application program reveals a Class Payment activity window 2400. As described in the foregoing, the user (DBS) may then complete the next activity/task by selecting the payment type (e.g., cash), and events and next steps will be triggered accordingly.

In another aspect of the present invention, the user may utilize the Options mode from a just completed activity or a just completed next activity/task window to simply call some next activity/task to the screen. The next activity/task chosen is selected, based on the following criteria. First, the highest priority next activity/task for the same next activity/task category. If no next activities/tasks exist for the preceding next activity/ task category or the user has just completed an activity, then the highest priority next activity/task from the user's personalized To Do List is selected. If no next activities/tasks exist in the user's personalized To Do List, then the highest priority next activity/task contained in any other To Do List in which the user has access is selected.

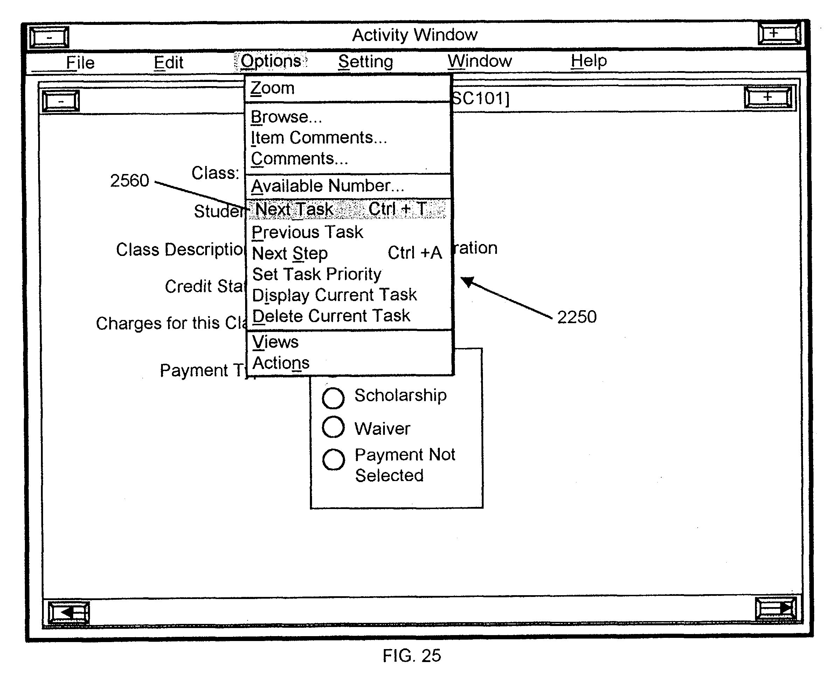

To illustrate, as shown in FIG. 25, after a user has completed registering for the SC101 class in the Class Registration activity window, the user (DBS) accesses the Options mode. In doing so the Class Registration application program then calls up the Options application program, which reveals a list of options 2250 for the user to select from. Next, the user selects the Next Task option 2560 from the Options mode list 2250.

Upon accessing the Next Task option, the Option application program calls the Class Registration application program to obtain information to be sent to the Next Task application program. The information obtained is the USER_ID, OWNER_type (user or work group), and ACTIVITY_ID. If the Options mode had been accessed from an application program associated with a next activity/task, then the MSG_ID and the FOLDERNO for the To Do List associated with the next activity/task would also have been obtained. The Option application program then calls the Next Task application program and sends it the USER_ID formatted as an OWNER_ID, the OWNER_TYPE and the ACTIVITY_ID. The Next Task application program then sends this information to the Next Task stored procedure.

In one embodiment, the Options application program calls the pam0015_next_msg (Next Task) application program, which sends the OWNER_ID, OWNER_TYPE, and ACTIVITY_ID to the psp_sel_mque_next_msg_1 (Next Task) stored procedure. If the Options mode had been accessed from an application program associated with a next activity/ task, then the MSG_ID and FOLDERNO corresponding to the next activity/task would also have been sent to the Next Task stored procedure.

Referring to FIG. 26, the Next Task stored procedure is illustrated. At step 2610, the Next Task stored procedure checks the OWNER_TYPE to determine if the user has accessed the Next Task option from a user or work group list.

If the user has accessed the Next Task option from a user list, then the Next Task stored procedure proceeds to step 2625. However, if the user has accessed the Next Task option from a work group list, then the Next Task stored procedure proceeds to step 2615.

At step 2615, the Next Task stored procedure determines if the user is currently a manager or member of the work group, in case the user's access privileges have been revoked since the time the user accessed the current work group list. If the user no longer has access privileges, then the Next Task stored procedure is exited at step 2618 and a message to this effect is sent back to the Next Task application program which reveals this to the user. If the user still has access privileges to the work group list, then the Next Task stored procedure proceeds to step 2625.

At step 2625, the Next Task stored procedure determines whether a folder number (FOLDERNO) for a To Do List was sent from the Next Task application program. If so, then the Next Task stored procedure understands that the Next Task option was called from either an individual user's or work group user's To Do List, and the stored procedure proceeds to step 2650.

At step 2650, the Next Task stored procedure determines if the To Do List represented by the FOLDERNO contains any of the same next activities/tasks categories represented as the MGS_Ids from the just completed next activity/task. If the FOLDERNO for the To Do List sent contains at least one same next activity/task category, then the Next Task stored procedure proceeds to step 2660. However, if the To Do List does not contain at least one same next activity/task category, the stored procedure proceeds to step 2652.

At step 2652, the Next Task stored procedure determines if the FOLDERNO for the To Do List sent contains at least one next activity/task. If the To Do List sent contains at least one next activity/task, then the Next Task stored procedure proceeds to step 2655.

At step 2655, the stored procedure evaluates each next activity/task in the user's To Do List sent to determine which next activity/task category (MSG_ID) has the highest sequence number and priority next activity/task. The sequence number is assigned to a next activity/task category by the user who will act upon the next activity/task, and the priority is assigned to the next activity/task by the user who is responsible for initiating the next activity/task. The Next Task stored procedure then proceeds to step 2660. On the other hand, at step 2652, if the Next Task stored procedure determines that the FOLDERNO for the To Do List sent does not contain at least one next activity/task, then the stored procedure proceeds to step 2630.

At step 2625, if a folder number was not sent to the Next Task stored procedure, then the stored procedure interprets this to mean that the activity is not currently in the context of a To Do List. An example of this occurs when the user selects the Next Task option from one of the user's activity lists. In this case, the stored procedure proceeds to step 2630.

At step 2630, the Next Task stored procedure obtains the folder number for the user's personalized To Do List, represented as the TO DO_FOLDERNO, from the USER_MASTER table 1110 (see FIG 11). Next, the Next Task stored procedure proceeds to step 2633 to determine if there is at least one next activity/ task in the user's personalized To Do List.

If there is at least one next activity/task in the user's personalized To Do List, then the Next Task stored procedure proceeds to step 2635 to determine which next activity/task category, represented in the MSG_ID column, in the user's personalized To Do List has the highest sequence number and priority task. The Next Task stored procedure then proceeds to step 2660.

If the Next Task stored procedure does not find a next activity/task in the user's personalized To Do List at step 2633, then the stored procedure proceeds to step 2637. At step 2637, the Next Task stored procedure, scans all the user's other To Do Lists by FOLDERNO in the MESSAGE_QUEUE table 1140 (see FIG. 11) to determine if any other To Do Lists for the user contain next activities/tasks. If the Next Task stored procedure does not find a next activity/ task in any of the user's other To Do Lists, then the stored procedure is exited at step 2645 and a message to this effect is sent back to the Next Task application program which reveals this to the user.

However, if one or more of the user's To Do Lists contain at least one next activity/task, then the Next Task stored procedure proceeds to step 2640. At step 2640, the Next Task stored procedure then evaluates each next activity/task in each of the user's To Do Lists to determine which next activity/task has the highest sequence number and priority task. The Next Task stored procedure then proceeds to step 2660.

At step 2660, the Next Task stored procedure selects a next activity/task based on the following hierarchy. First, the highest sequence number (MSG_SEQ_NBR) in the MESSAGE_QUEUE table 1140 for the task category, unless the stored procedure has proceeded from step 2650 such that the next activity/task category (MSG_ID) is already chosen. Second, the highest priority (MSG_PRIORITY) in the MESSAGE_QUEUE table 1140, where the priority may be high, medium, and low, for each next activity/task for the selected next activity task category. Third, the oldest create time (CREATE_TIME) in the MESSAGE_QUEUE table 1140 for the selected next activity/tasks with the highest priority in the selected next activity/task category.

If for some reason there are not any next activities/tasks encountered by the Next Task stored procedure in step 2660 (e.g., the user's access privilege to a To Do List was removed during the steps of the Next Task stored procedure as discussed above), then the stored procedure is exited at step 2665 and a message to this effect is sent back to the Next Task application program which reveals this to the user. However, if a next activity/task is selected at step 2660, then the Next Task stored procedure proceeds to step 2670. At step 2670, the Next Task stored procedures determines if the next activity/task selected is a work group next activity/task. If the next activity/task is not a work group next activity/task, then the stored procedure proceeds to step 2685.

However, at step 2670, if the next activity/task is a work group next activity/task, then the Next Task stored procedure proceeds to step 2675. At step 2675, the stored procedure determines whether the work group next activity/task still needs to be acted upon (e.g., has not already been assigned to another user within the work group or simply no longer needs to be acted upon). If the work group next activity/task still needs to be acted upon, then the stored procedure proceeds to step 2685. However, if the work group next activity/task no longer needs to be acted upon, the Next Task stored procedure proceeds to step 2680 where the stored procedure is instructed to "Try Again" by proceeding to step 2625 in order to locate another next activity/task as discussed above.

At step 2685, the Next Task stored procedure updates the message status (MSG_STATUS) column for the next activity/task (ACTIVITY_ID) selected to a "viewed" status. This status indicates that user is about to view the next activity/task. This status is one of several possible statuses. Other possible statuses include the "new" status, which indicates the next activity has recently been created and there have not been any users notified of its existence; the "notified" status which indicates that at least one user has been notified that the next activity/task exists; and the "complete" status which indicates that the next activity/task has been viewed, acted upon, and completed by a user.

Next, the Next Task stored procedure proceeds to step 2690, where, as long as the next activity/task still needs to be acted upon, pertinent next activity/task values are obtained from the MESSAGE_QUEUE table 1140 (see FIG. 11) to be sent to the activity application program which will perform this next activity/task. However, if for some reason the next activity/task no longer needs to be acted upon for whatever reason, then the Next Task stored procedure proceeds to step 2680 where the stored procedure is instructed to "Try Again" by proceeding to step 2625 in order to locate another next activity/task as discussed above.

Finally, if the pertinent values are obtained by the Next Task stored procedure at step 2690, then the stored procedure is exited at step 2699. At step 2699, the pertinent values are then sent back to the Next Task application program, which forwards them to the appropriate activity application program to perform the next activity/task.

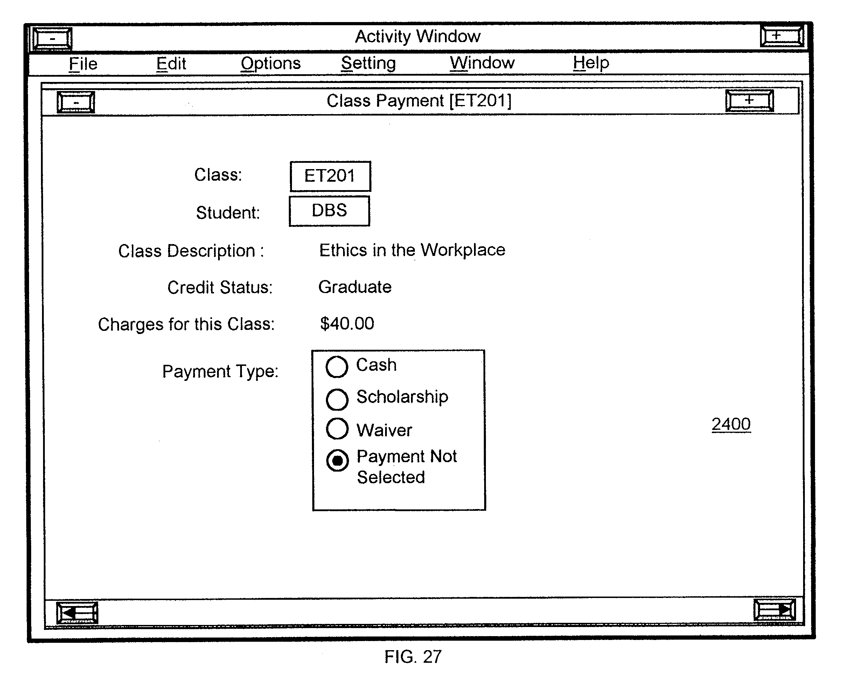

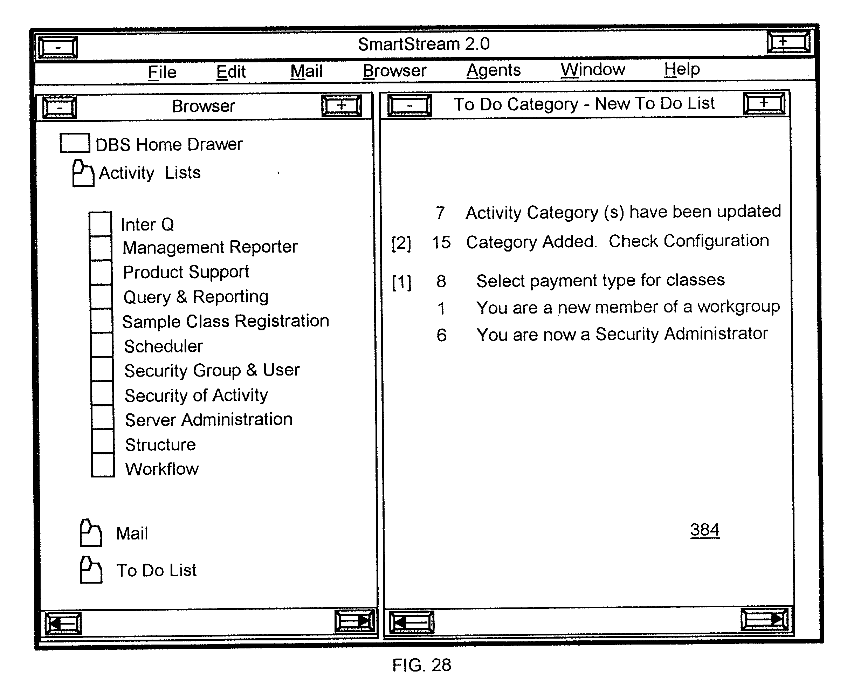

For this example, referring to FIG. 27, the next activity/task category selected was class payment. Therefore, the activity application program is the Class Payment application program. Thus, the Class Payment application program reveals the Class Payment activity window 2400. For this example, the next activity/task selected is the class ET201 for student DBS for the Class Payment activity. Referring to FIG. 28, after the user has completed the two next activities/tasks for the Class Payment activity, the summary To Do Category window 384 reveals that two Class Payment next activities/tasks exist and have both been completed (done).

Among other responsibilities, the administrator of the computer system of the present invention is responsible for the following. He or she defines entities (e.g., plants, sites, etc.); assigns USER_Ids to new users of the computer system of the present invention; assigns users to work groups; defines and maintains the security privileges of the users and work groups (e.g., which activities and next activities/tasks a user may access); disables and defines new next steps to comply with an organization's procedures; defines users and work groups responsible for performing next steps; changes the text of messages and other window text for each activity and next activity/task; and enters translated versions of messages and other window text for non-English speaking users.

The following illustrates how an administrator may define a new next step. As described above, for each activity, an event will be triggered. When an event is triggered, one or more next steps will be selected which will result in a new next activity/task being added to a user's or work group's To Do List.

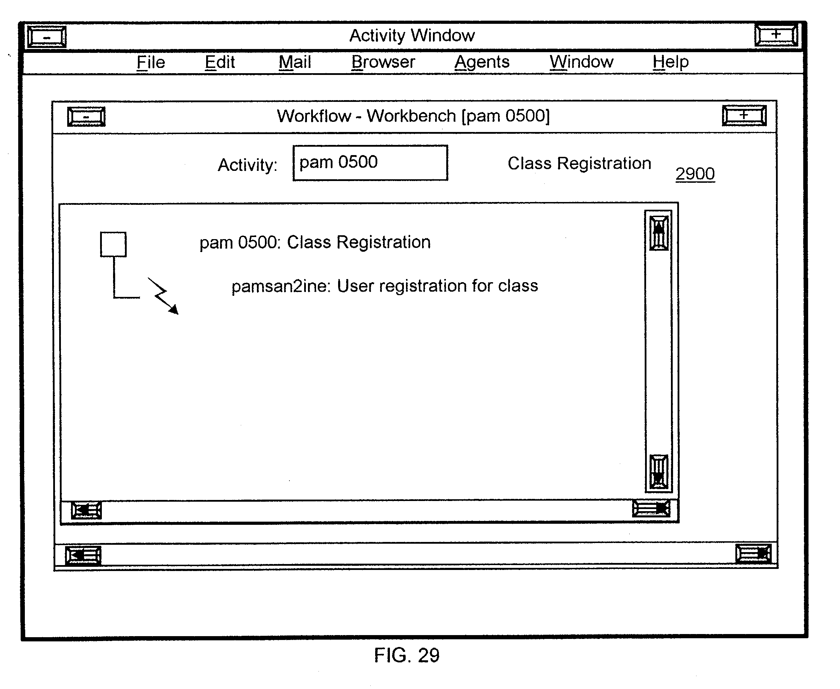

Referring to FIG. 29, the administrator accesses the Workflow Workbench activity from the administrator's list of activities (not shown). The Workflow Workbench activity window then displays an activity selected by the administrator, the activity application program name for that activity, all possible events for that activity, and the stored procedure name for each event in the WorkFlow Workbench window 2900. For this example, the Class Registration activity with its pam0500 activity application program name is displayed. For this activity, only one event exists. This event is "User registers for Class" (e.g. user adds a class) and the event identifier for the event is pamsam2ins.

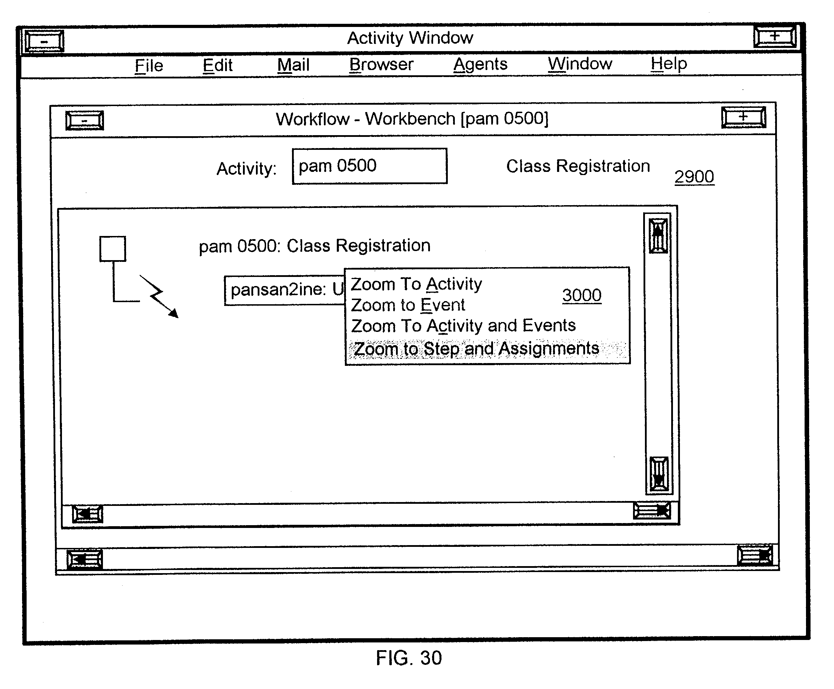

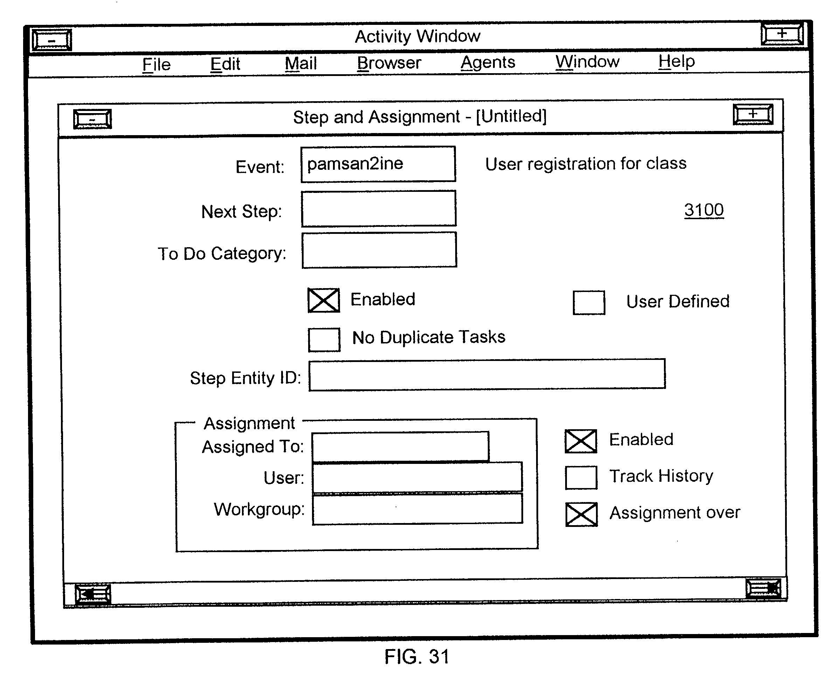

Referring to FIG. 30, to add a new next step, the administrator may select, the "Zoom to Step and Assignments" option from a Zoom options list submenu (not shown). The user may access this option by selecting the Options mode and Zoom option from the Options mode list (not shown). The main application program then displays the Zoom mode list 3000 in which the "Zoom to Step and Assignments" may be selected. The Step and Assignments window 3100 is then displayed, as shown in FIG. 31, with the event selected.

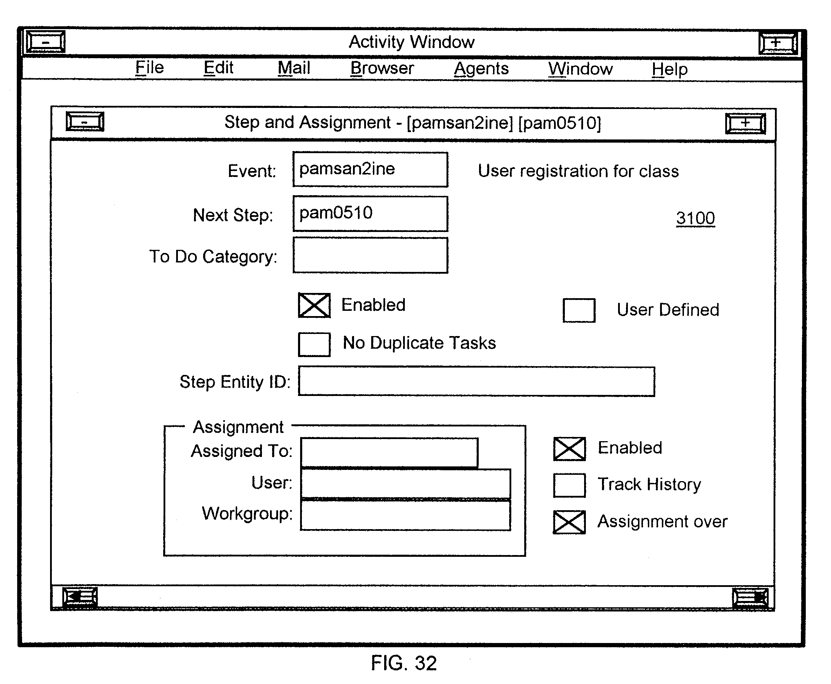

Referring to FIG. 32, in the Step and Assignments window 3100, the administrator then selects an activity (next activity/task) application program from a list of next activities/tasks as the next step in the work flow process. For this example, the administrator has chosen pam0510, which represents the Class Payment application program. The administrator also selects the Enabled box to enable this new next step. Moreover, for this example, the Assignment Override box is selected by the administrator such that any user or workgroup information entered by the administrator will override any default values contained in the Class Payment application program. The main application program then sends the activity identifier for the next activity/task (ACTIVITY_ID) and event identifier (EVENT_ID) to a stored procedure. In one embodiment, the name of the stored procedure is psp_ins_nxtm. This stored procedure then creates a new row for the next step represented by its ACTIVITY_ID and EVENT_ID in the Next Step table 1225 (see FIG. 12). The stored procedure then sends a message to the main application program revealing that the row has been created.

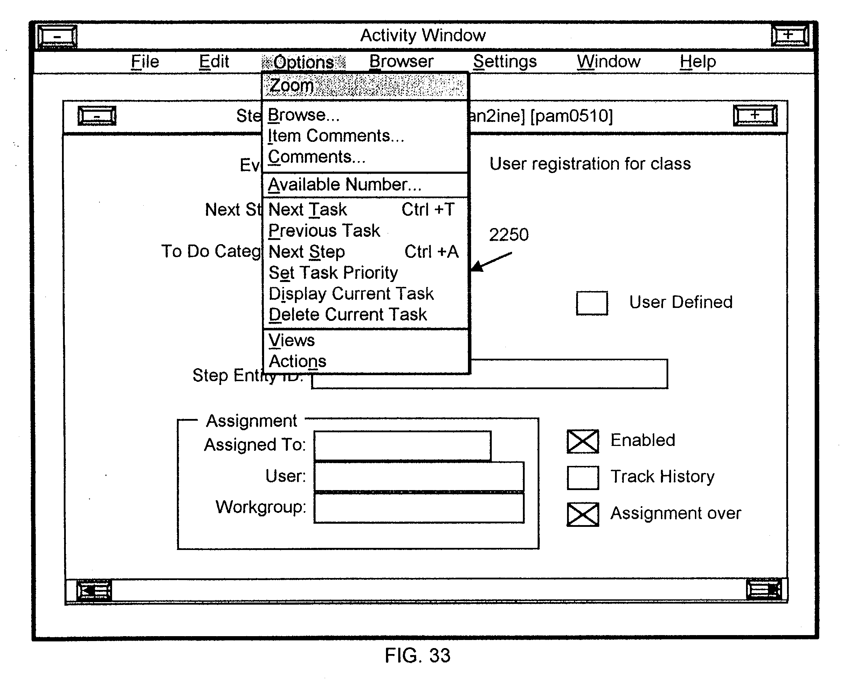

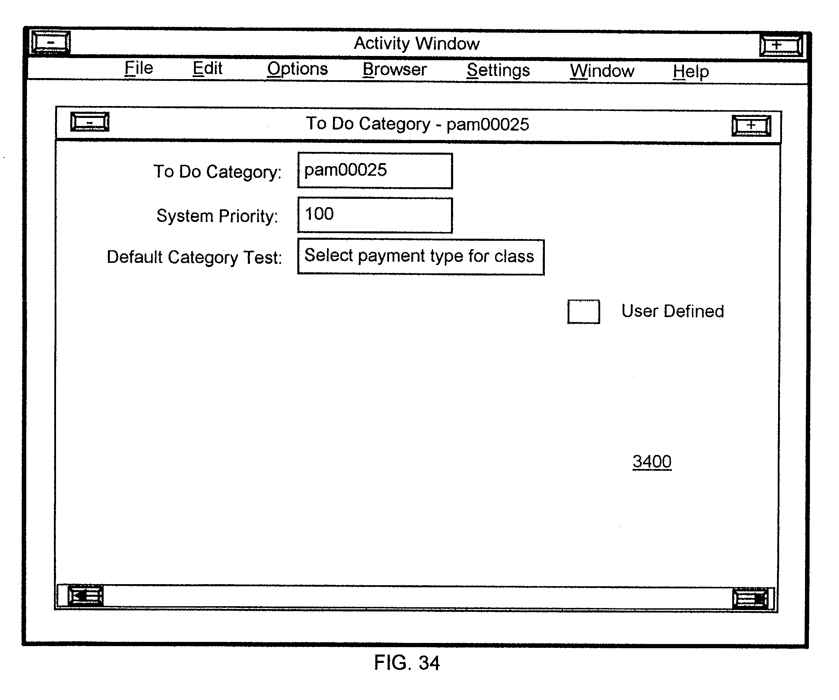

Next, the administrator selects a message representative of a next activity/task category in which to identify the next activity/task in a user or work group's To Do List. Referring to FIG. 33, the administrator accomplishes this by selecting the Options mode and Zoom option from the Options mode list 2250. As shown in FIG. 34, the main application program then reveals a To Do Category window 3400 which displays the default next activity/task category message, which the administrator may modify if he or she chooses. The To Do Category window 3400 also allows the administrator to assign a system priority to the next activity/task category, and to select if the next activity/task category will be user defined. The Main Application Program then sends the activity identifier (ACTIVITY_ID) for the next activity/task, the event identifier (EVENT_ID), the category message identifier (MSG_ID), the message text, the user defined (USER_DEF) information, and the system priority information to a stored procedure. This stored procedure then stores the MSG_ID and the USER_DEF for the ACTIVITY_ID and EVENT_ID in the NEXT_STEP table 1225 (see FIG. 12).

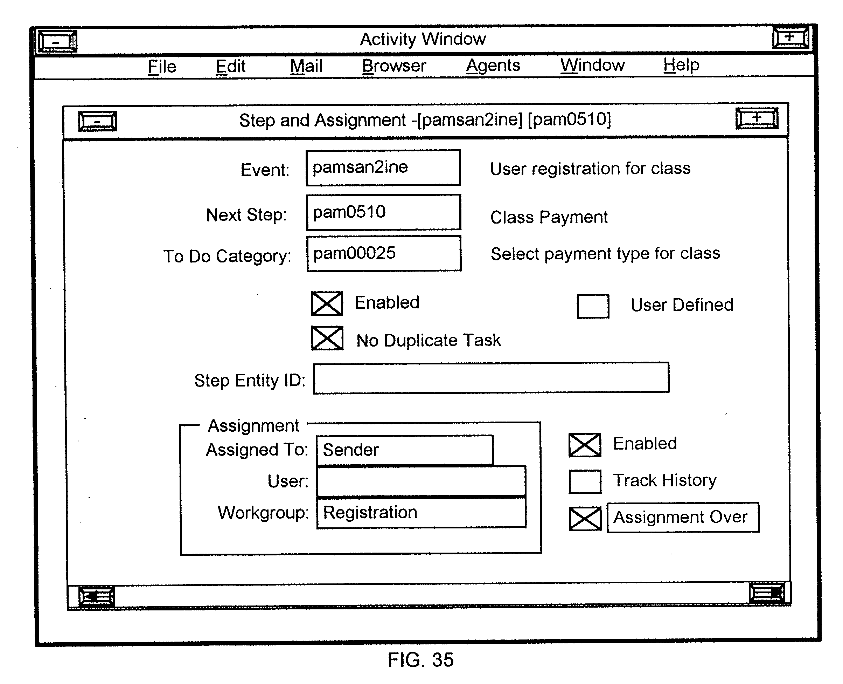

Finally, the administrator may assign the next activity/task to an entity, and a user and/or workgroup. Referring to FIG. 35, for this example, the administrator selects to assign the next activity/task to the default entity, represented as an asterisk (*), and the sender (e.g., the creator of the next activity/task) who is in the Registration workgroup.

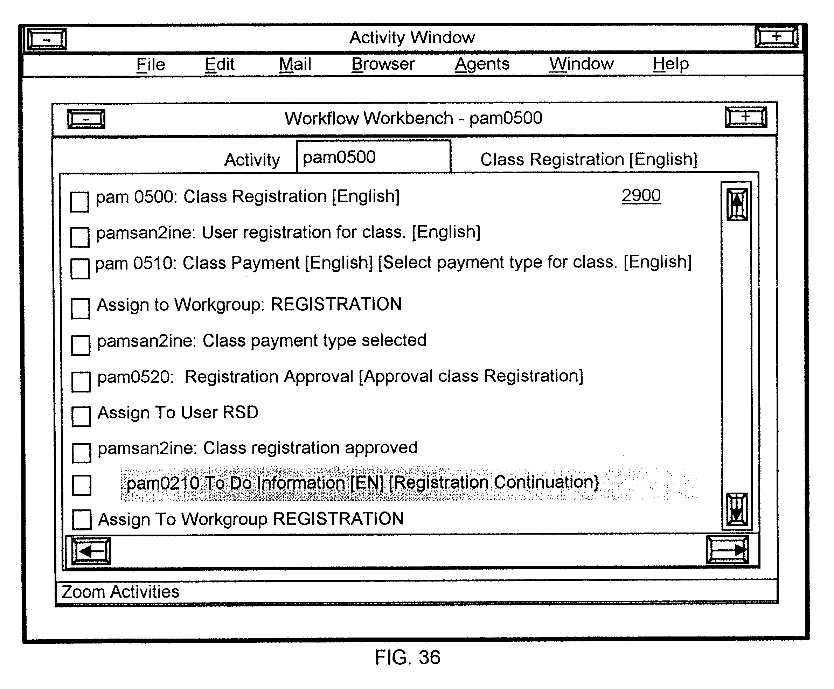

Referring to FIG. 36, as shown in the Workflow Workbench window 2900, the administrator may then add other next steps with corresponding assignments to a user or workgroup for the activity and each subsequent next activity/task. In this example, the administrator has assigned the Class Payment next activity/task to the Registration work group. Therefore, the work group identifier, represented as the MSG_GROUP_ID, is stored in the Next Step Options table 1230 (see FIG. 12). Other next steps selected by the administrator include the "Class payment type selected" (pamsam2up1) event with the next activity/task being "Registration Approval" (pam0520) which is assigned to user RSD.

The administrator may also activate the archiving feature of the computer system of the present invention. This feature may be used for backup and accountability purposes.

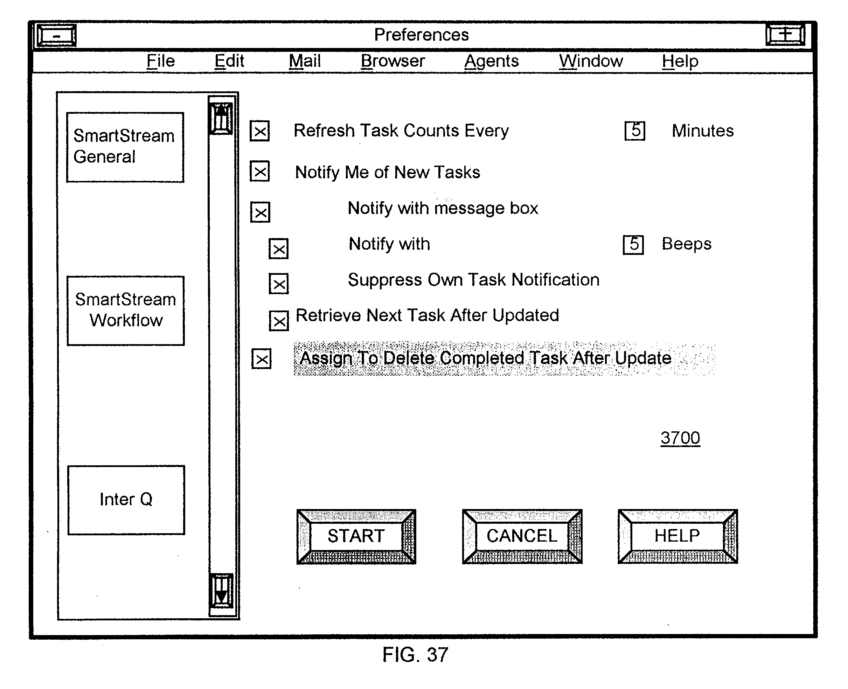

As shown in FIG. 37, a user may access a variety of additional features included with the computer/system of the present invention in the Preferences window 3700. These features include selecting how often the user would like to have his or her number of uncompleted next activities/tasks recalculated. This feature is called the "Refresh Task Counts" feature. Further, the next activity/task counts are recalculated at the specified time intervals selected by the user as described above for the Summary To Do Category window (see FIG. 7).

The features a user may select from also include activating a notification feature which notifies the user of new next activities/tasks which have been added to one of his or her To Do Lists and need to be acted upon. This feature is called the "Notify Me of New Tasks" feature. The user may then select to be notified with a message box in any window the user is currently viewing or with a certain number of beeps. The user may also select the next activity/task notification feature to be suppressed when the next activity/task is created by the user.

When the "Notify Me of New Tasks" feature is activated, the main application program sends the user's USER_ID to a stored procedure at the time intervals specified by the user. In one embodiment, the name of the stored procedure is psp_sel_mque_list. This stored procedure then obtains the number for the user's personalized To Do List (TODO_FOLDERNO) from the USER_MASTER table 1110 (see FIG. 11) with the USER_ID. Next, the stored procedure accesses the MESSAGE_QUEUE table 1140 (see FIG. 11) and obtains the relevant information on the next activities/tasks in the user's personalized To Do List which have a MSG_STATUS equal to "new." Finally, information regarding these "new" next activities/tasks is sent back to the main application program, which notifies the user of them with the message box or the beep(s).

Further, the user may activate the "Retrieve Next Task After Update" feature. This feature performs relatively the same sequence of events as described for the Next Task feature of the present invention. However, by activating this feature, the Next Task application programs and stored procedures are automatically accessed after saving information for a next activity/task.

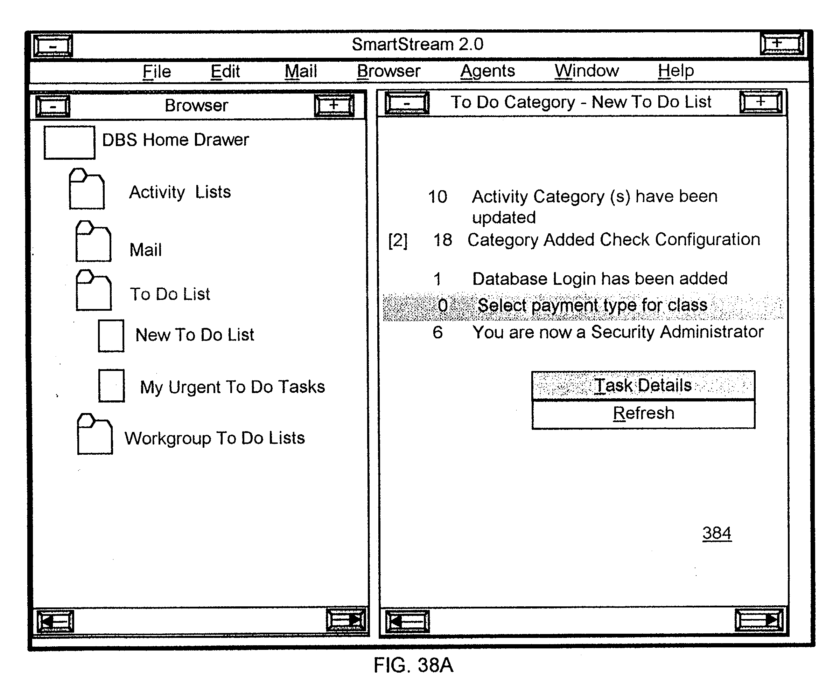

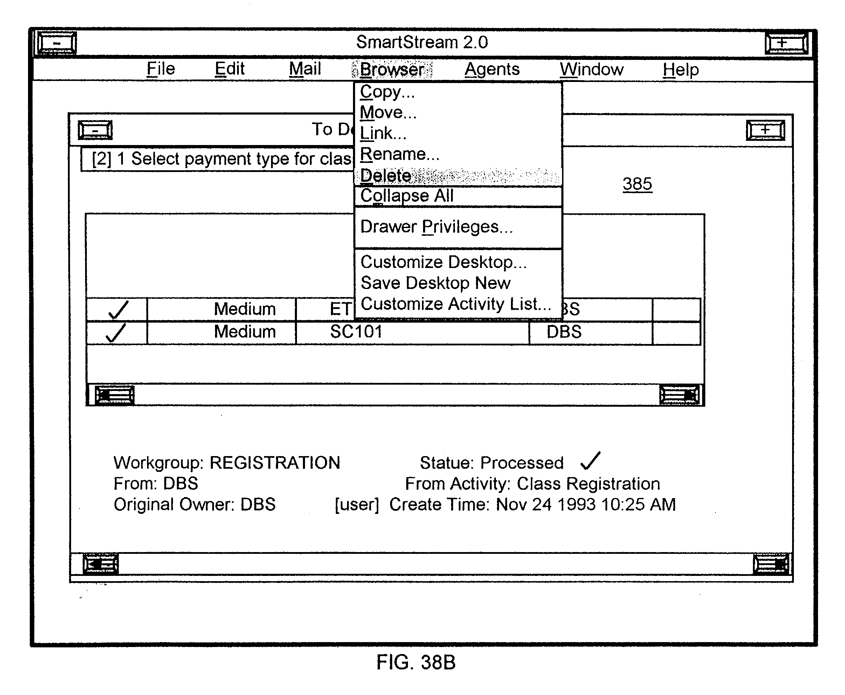

Moreover, the user may activate the "Delete Completed Tasks After Update" feature, which automatically deletes the next activity/task from the user's To Do List as shown in the Summary and Detailed To Do Category windows (see FIGS. 16H and 16L) when completed. When this feature is not selected, the Summary and Detailed To Do Category windows display the next activity/task as done or complete. As shown in FIG. 38A, the next activities/tasks may also be deleted manually by the user in the Summary To Do Category window 384 and Detailed To Do Category window 385 (see FIG. 38B).

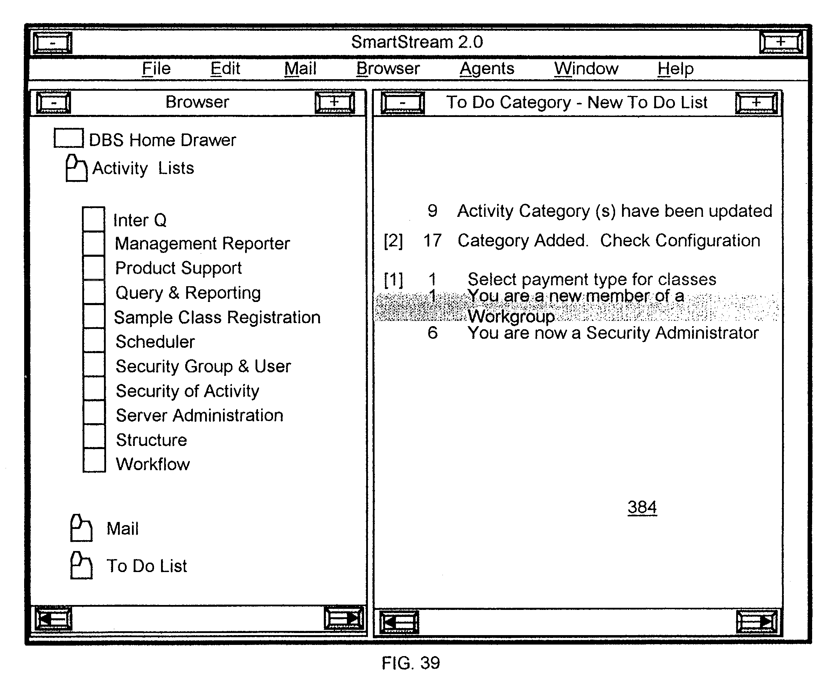

In another aspect of the computer system of the present invention, the user may obtain detailed information on a particular next activity/task. As shown in FIG. 39, the user may select a next activity/task category from the To Do Category window 384.

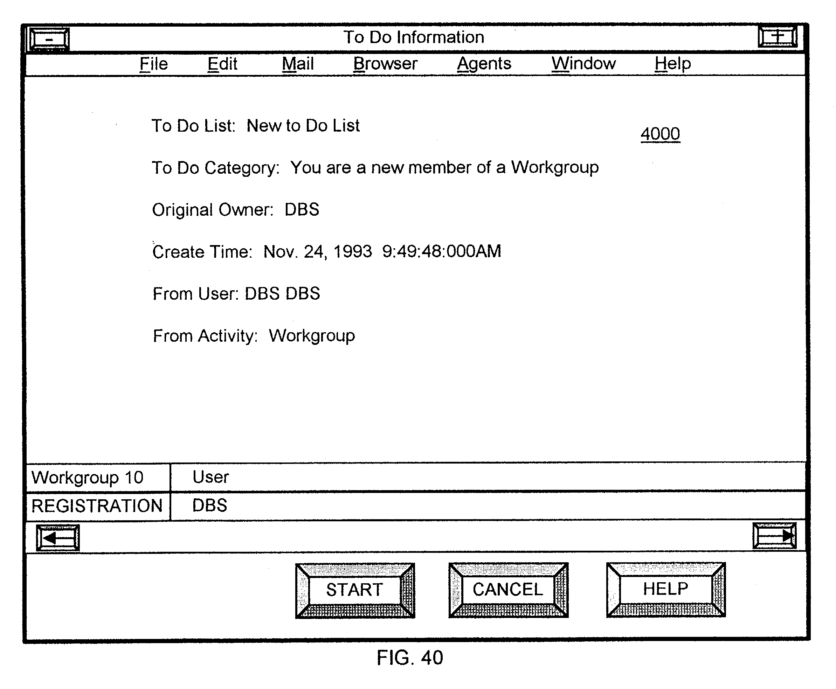

The main application program then sends the USER_ID formatted as the OWNER_ID, the OWNER_TYPE, and the FOLDERNO for the To Do List to a stored procedure. This stored procedure then calls the Next Task stored procedure, which accesses the MESSAGE_QUEUE table 1140 (see FIG. 11) with the OWNER_ID, OWNER_TYPE MSG_ID, and FOLDERNO. This Next Task stored procedure then selects the highest prioritized next activity/task for the next activity/task category represented by its MSG_ID. Finally, the Next Task stored procedure sends the ACTIVITY_ID for the highest prioritized next activity/task from the next activity/task category back to a stored procedure. This stored procedure then accesses the MESSAGE_QUEUE table 1140 to obtain information on the user who initiated the next activity/task, also referred to as the original owner (ORIG_OWNER); the time the next activity/task was created (CREATE_TIME); the work group (MSG_GROUP_ID) responsible for the next activity/task; the user (FROM_USER_ID) who initiated the next activity/task; and the activity or next activity/task (FROM_ACT_ID) in which the next activity/task was initiated. This information is then sent back to the main application program which reveals it in the To Do Informational window 4000, as shown in FIG. 40.

According to a further aspect of the present invention, the computer system processes and prioritizes next activities/tasks for a user based on predefined conditions set by the user. These predefined conditions and actions resulting from the conditions in which the user may activate are referred to as agents.

According to another aspect of the present invention, the computer system includes a job scheduler feature which allows the user to create, schedule and submit jobs to run automatically. A job is typically an executable program, a DOS batch file or the like and an example of a job is a month-end departmental report.

According to yet a further aspect of the present invention, the computer system includes a mail feature. This feature allows the users to perform mail related activities including sending mail to and receiving mail from other users of the computer system of the present invention.

According to still another aspect of the present invention, the computer system includes a product request feature. This feature allows users of the computer system to communicate electronically with the administrator of the computer system so that the user may ask questions, receive system updates related to the computer system, and the like.

According to another aspect of the present invention, the computer system includes components which may be used to support a variety of business-related activities. These components include a component which allows intelligent, high-speed access to data, and another component which provides decision-making analysis and support. Moreover, these components are designed for use in a variety of business functions including manufacturing, distribution, finance, and human resources.

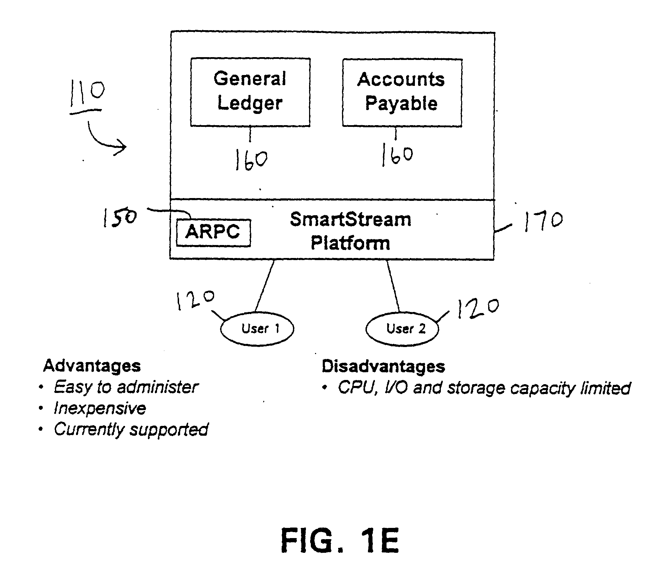

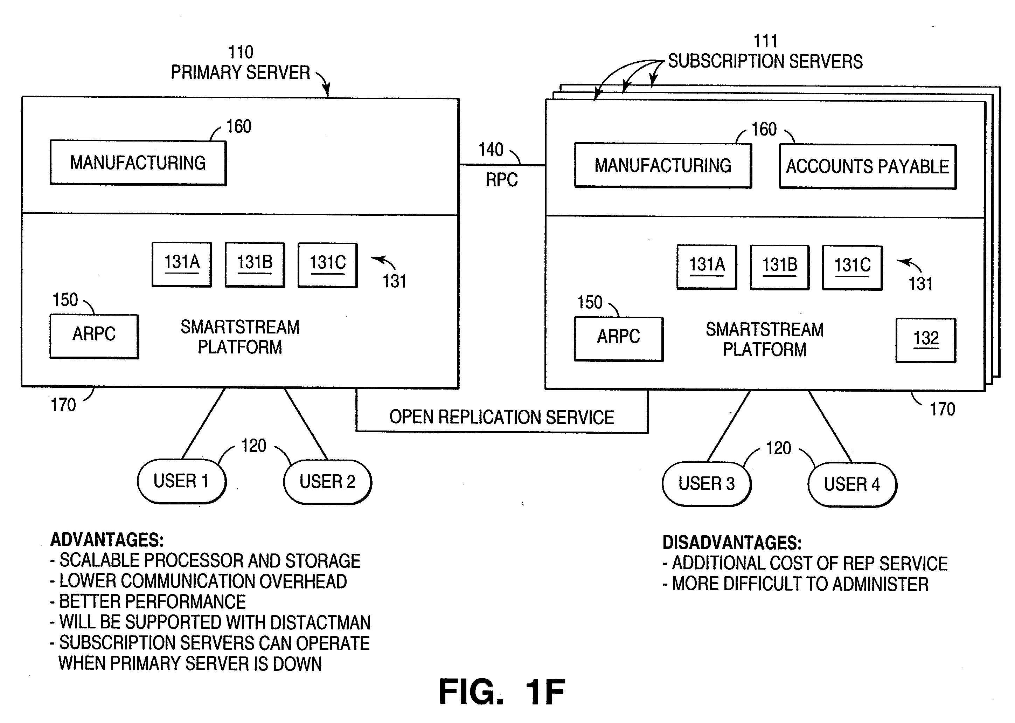

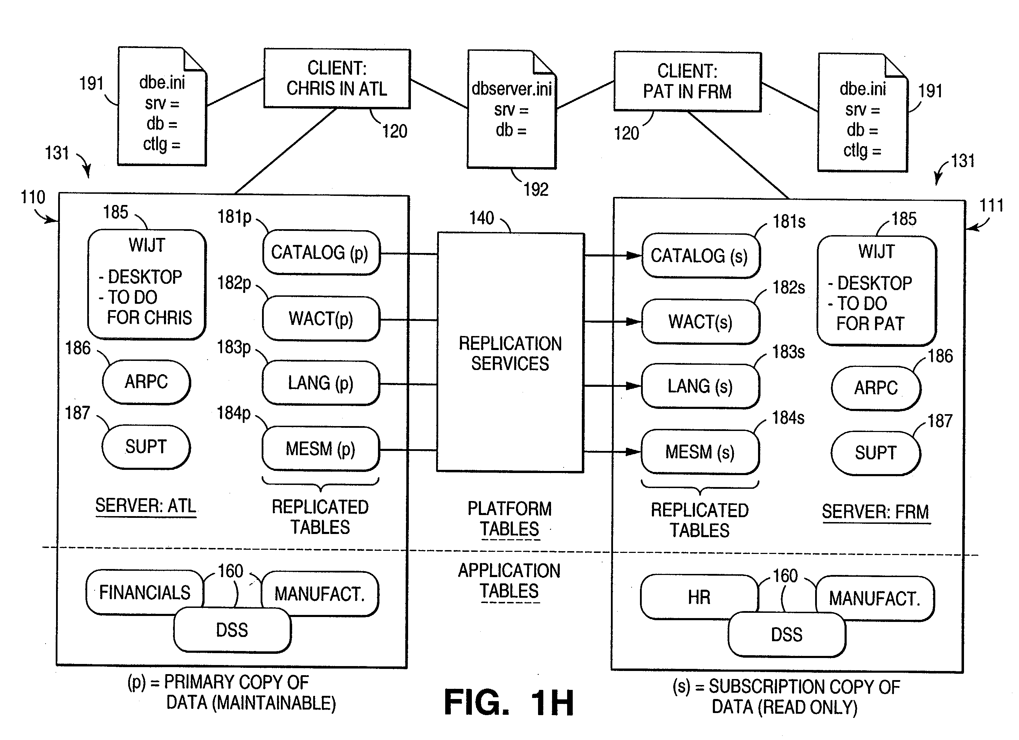

The implementation of the present invention described above with respect to FIGS. 1 through 40 assumes a single instance of database tables associated with the definition and implementation of the workflow, as visually depicted in FIGS. 11-15. The database tables shown in FIGS. 11-15 and the appendix are commonly referred to as a "table family", because they exist and operate together as a single unit within a single database. The data in tables in such database which is used directly by the present invention to implement the new workflow techniques disclosed in this specification (e.g., in FIGS. 11-15) is generally known as the "platform table family" and the aggregate of this platform data in tables for a particular implementation of the present invention is therefore known as the "platform data". In a preferred embodiment, the present invention may utilize six table families, including distribution (ctlg), desktop (wijt), workflow (wact), message (mesm), product support (supt), and language (lang) data.

Similarly, data which corresponds to an application which resides in a database anywhere in the computer system (such as reference numeral 120 of FIG. 1A) is known as an "application table family", and the aggregate of such data for such an application is known as the "application data

While a table family (defining a set of separate and distinct workflows) can be distributed among multiple servers, replicated among multiple servers, or reside on a single server, all tables in the family must have the same distribution properties as one another (distributed, replicated or centralized), according to the implementation of the present invention described previously with respect to FIGS. 1-40. All users of the particular workflow defined by the tables in FIGS. 11-15 preferably may make their primary database connection to the server which contains a "distribution catalog" (the tsdx and tdis tables, described below with respect to Table C). The distribution catalog is the "address book" which all applications use to find the physical location of any table family.

Problems with this implementation, where a particular table family, and the workflow it defines, must reside on one server, include:

- **Single point of failure**: The platform server becomes a single point of failure. If the platform server is down, then all users are down.

- **Performance/connection bottleneck**: Since all users must connect to the server containing the distribution catalog, then this server becomes a connection bottleneck.

- **Network Performance**: Since all users' desktop and workflow data must be on a single server, some users may be forced to work off of a server which could be geographically remote even though their business data may be on a local server. For example, a user in Houston may need to be directly connected to the Chicago server (location of the distribution catalog), while other data relevant to the running application(s) may reside back at the Houston server.

In order to overcome these and other limitations, in one embodiment, the present invention may be designed to define an approach for implementing the workflow techniques, previously described, on multiple servers to provide the following benefits:

- **Workflow across servers**: That is, users and workgroups from different servers can participate in workflows.
- **Distribution-enabled applications**: Applications may be designed to take advantage of the replication and distribution of data.
- **The ability to define the server and database location of the desktop for each user**: The user's data (for example, desktop, To Do's and potentially application data) can be located close to the user to increase performance and availability.
- **The ability to define the server and database location of the workflow To Do tasks for each user and workgroup:** For users, this may be the same location as their desktop.
- **Removal of the restriction that all users that participate in a common workflow must have their desktop on the same server:** Desktops that participate in a common workflow may span servers.
- **A replicated copy of the distribution catalog on every server that contains desktop data:** This will enhance overall system performance due to the fact that these tables are heavy "read-only" tables.
- **A replicated copy of other platform data on servers as required:** This will increase data availability and will address the single point of failure issue. This benefit, along with the previous one, will provide site autonomy for each location in a computer network.
- **Client primary connection is to the database server containing their desktop:** This should improve performance. Currently, in a multi-server environment, a client's primary connection could be to a server other than the server containing their application data. This can cause performance problems.

The primary means for accomplishing these objectives is through the use of data distribution and replication. The concepts of replicated and distributed tables will be discussed at a later point in this specification. To achieve this objective, the following capabilities may be included:

- An enhanced procedure for each user to log onto the computer system in a way such that the computer system recognizes the user's "desktop server".
- Provide the ability for an application to determine where the primary copy of a table family exists.
- Provide the ability to replicate tables to remote sites and propagate updates from the primary site to remote sites.
- In a preferred embodiment, the solution should put minimal additional, visible constraints on a single site installation.

Prior to further describing the distributed design of the present invention, several terms may be defined. The definitions below are not meant to be an exhaustive interpretation of the related terms, but are merely provided as a basic definitional starting point for these terms. Those of ordinary skill in the art will readily recognize the scope of the meaning of these terms.

The following definitions are provided:

**data replication versus distribution**: There are at least four types of tables supported by the present invention. Tables can be either replicated, distributed, or a combination of both. Reference is made to the following table (Table A) for the appropriate terminology used when tables are distributed and/or replicated.

| Replicated | Yes | Centralized replicated | Distributed replicated |
|---|---|---|---|
| | No | Local | Distributed |
| | | No | Yes |
| | | Distributed | |

**TABLE A**

Thus, if a table is replicated, but not distributed, it is referred to as "centralized replicated". If a table is replicated and distributed, it is referred to as "distributed replicated". For purposes of the present invention, while distributed replicated tables can be implemented, they are not supported in a preferred embodiment. If a table is not replicated, and not distributed, it is referred to as "local", because in this case it is local to the user's computer. Finally, if a table is not replicated, but it is distributed, then it is referred to merely as "distributed".

**replicated table**: A replicated table is a table which has copies on multiple servers in the system With the "primary copy replication algorithm" (PRCA) used according to the present invention, modifications are allowed only to the primary copy of the table and reads may be performed on the subscriber copies. Subscriber copies receive their data from the primary copy located at the primary server via the replication service.
"Fully replicated" means that copies of replicated tables are at every server site in the system. "Partially replicated" means that there are copies of the replicated tables at some, but not all, server sites. For purposes of the present invention, a partially replicated scheme will be assumed.

**distributed table:** A distributed table is one where different pieces of the table reside on different servers. If a table is horizontally distributed, it is distributed by rows. What rows of a table go on what server may determined by the "distribution entities" of the table family that the table belongs to. If a table is vertically distributed, subsets of columns reside on different servers. In one embodiment of the present invention, vertical distribution is not utilized.

An example of distributed tables in the present invention are the desktop tables in table family wijt. These tables include WIJ_DRAWERS, WIJ_FOLDERS, WIJ_FOLDERDCMTS and WIJ_DCMTS. Local updates to these tables do not need to be propagated to other servers.
Distribution of tables is accomplished through the use of "distribution entities". Distribution entities may be implemented as a new column on those tables which need to know where a table is. For example, a new column on the User Master table (reference numeral 1110 in FIG. 11, and Table D, described further below) and the Workgroup Master table (reference numeral 1210 in FIG. 12, and Table E, described further below) may be included, which points to the particular server where the subject table resides.

**primary copy:** This is the controlling, definitive copy of the table (or row of the table, etc.). All subscriber sites (see "subscriber copy" below) will receive updates based on the content of the data present in the table at the primary site. All data modifications (updates, deletes, or inserts) required for a table that is a replicated table will be performed against the primary copy. The server on which the primary table lives is the primary server.

**subscriber copy:** A replicated copy of the primary copy of a table (or row, etc.) which is read only. Subscriber copies receive updates from the primary copy via the replication service.

**primary server:** The first server on which the present invention is implemented. In one embodiment, the primary server contains the primary copies of all the replicated platform tables.

**subscriber server:** A server on which the present invention may be installed subsequent to its installation on the primary server. Replicated copies of platform tables reside on subscriber servers and updates to these replicated tables are propagated from the primary copies at the primary server site.

**distribution-enabled:** A property of an application that enables it to use local replicated data as implemented as part of the present invention (i.e., in an environment with distributed desktops and replicated platform tables) rather than relying exclusively on the primary copy.

**distribution-compatible:** A property of an application that enables it to operate properly with the present invention but not to be necessarily distribution-enabled.

**distribution entities:** The column that a table family is horizontally distributed by is the distribution entity. An enterprise's values for the distribution entity are the distribution entity values.

For example, a particular application, such as an application for managing manufacturing within an organization, may have its data distributed by a distribution entity called "site". Any offices or plants in different locations, for instance Chicago, Boston, and Atlanta, may be the distribution entity values for the distribution entity called "site".
In one embodiment, a table family can be distributed by 0, 1, or 2 distribution entities, although this is merely one implementation and not a limitation on the invention. The number of distribution entities is typically defined by the application; it is generally not user defined. Of course, the present invention may readily be implemented so as to allow the user to define the number of distribution entities.

**consolidated:** An attribute of a distributed table which means that the table needs to be queried across servers. An example of this type of table is the message queue. Generally, there will be a message queue per server that supplies workflow messaging for the local site.
If the organization implementing the present invention wanted to perform analysis on its workflow, a consolidated message queue that holds all messages across the organization would provide this type of information. This concept of a corporate-wide consolidated message queue is not supported in a preferred embodiment of the present invention, but, of course, may be readily implemented if desired, according to techniques known in the art.

**server initialization:** Server initialization is the process of installing the minimum platform services and objects on a server so that it can be used as a remote server.

**server materialization:** Materialization is the process of how subscriber servers are installed after the primary server is installed.
The current installation process for using the distribution and replication aspects of the present invention generally remain unchanged from that described previously for the basic workflow system of the present invention. When a subscription server is materialized, the source of the environmental data for this server may be from the primary server.

**server dematerialization:** Dematerialization is just the opposite of materialization as the term suggests. It is concerned with how a server is removed from service after it has been in use for a period of time. The primary concern here is what to do with the data and how does the user migrate the data to other servers.

**application platform data (APD):** Data added to the platform tables by applications. This is relevant with respect to installation and migration.

**table family:** A table family consists of a group of logically related tables that are handled as an atomic unit with regard to installation, replication, distribution, transaction management and referential integrity edits. Specific rules for table families according to one embodiment of the present invention include the following:

- All tables in a family must be installed on the same server and in the same database.

- All procedures and triggers associated with a table family can only update tables within that family. In other words, a procedure (transaction) cannot perform cross-family updates.

In a further embodiment, and in order to support a distributed design. a table family generally cannot contain tables of mixed types as defined above. Specifically, a table family cannot contain both replicated (read only) and local (local update) or distributed tables.

In some cases there may be dependencies between table families. For example, table families might need to be installed in the same database on all primary and subscriber servers. The install and materialization processes may be designed to enforce these dependencies.

The following are constraints or restrictions that are generally the result of the design of the distributed/replicated aspects of the present invention, in one embodiment of the present invention:

- No support is provided for distributed, replicated platform data, although this may be used for application data.

- All replicated platform data must be replicated to each storage facility (site). Data cannot be replicated at some subscription server sites and not at others. Again, appropriate design may eliminate this constraint.

- It is generally not possible to dematerialize (described further below) the server which contains the primary copies of the platform tables (without destroying the entire installation), or to change which server acts as the primary server. However, a tool could readily be provided to do this.

- All tables in a table family are generally distributed/replicated in the same fashion. This restriction reflects the decision to only record distribution/replication information at the table family granularity, but this restriction could be eliminated with an appropriate design change.

- Replication of text data is not supported. The replication mechanisms utilized in a preferred embodiment (Sybase Replication Server and a proprietary asynchronous RPC facility) will not work when text is involved. Of course, this constrain may also be eliminated with an appropriate replication mechanism that doesn't have this restriction.

- If a user is a member of a workgroup whose wijt_location is a different server than the user's desktop (the message queue for that workgroup is on another server) and that server is down, the user cannot participate in workflows that involve the workgroup.

- This design does not currently support the unifying of two distinct installations implemented according to the teachings of the present invention. It will only support materialization of new servers within one installation. Of course, appropriate design changes could be implemented to eliminate this constraint.

Application table families can only be installed on primarly or subscriber servers (i.e., only those on which that platform has been instantiated).

- Updates to replicated tables are typically (but not always) infrequent and generally involve a single row at a time.

- Update transactions that span multiple tables and include updates to replicated tables are typically rare and can be handled on a special-case basis.

- The primary copy of a table is the default value for a server entry in tsdx that does not contain a from_server value.

- The distributed design for the present invention does not, in one embodiment, include a general data movement tool for moving application data from one server to the other. Applications will have to develop data movement mechanisms on their own using the platform process to move users from one server to the another as a model. Of course, a general data movement tool may readily be designed.

- The distributed design of the present invention does not, in one embodiment, include any features to facilitate distributed reporting. However, such features may also be readily implemented.

Of course, the above constraints are provided merely to set forth one way in which the present invention may be implemented. These constraints are not limitations on the possible range of functionality of the present invention, but merely one design approach.

As described above, the present invention may be designed to support three types of servers: primary servers and subscriber servers. Each installation of the present invention generally may contain a single primary server where initial product installation and overall system administration is performed. This server is where the present invention is initially installed. Most administration tasks such as adding a new user, installing a new product, or changing a workflow definition require the availability of the primary server. FIG. 1E illustrates a configuration of the present invention in a relatively simple form -- where a primary server 110 and end user workstations 120 are utilized -- but no subscriber or remote servers. In this case, databases 160 (in this example, general ledger and accounts payable databases -- of course, these are just used as examples, and any type of database may be utilized) reside on the primary server 110, as does the operating environment 170 component of the present invention and ARPC 150. The elements of the system of FIG. 1E otherwise generally correspond to similarly identified elements depicted in FIG. 1A, described previously with respect thereto.

FIG.1F depicts the other supported configuration, a configuration consisting of a primary server 110 and one or more subscriber servers 111. Subscriber servers 111 contain subscription copies of the platform configuration table families 131 and an instance of the user desktop table family 132 (described further below). Individual users or workgroups (and hence their respective end user workstations 120) can be assigned to a subscription server 111. A user 120 assigned to a subscriber server 111 can operate when the primary server 110 or the communication link 140 between the subscriber server 111 and the primary server 110 is down (inoperable).

The platform data 131 is divided into three categories, basic platform services 131A, the user desktop data 131B, and the platform configuration data 131C. The basic platform services consists of the arpc table family. This distributed table family must be installed on every server (110, 111,, etc.) in the system that has any application data relating to the present invention on it as part of the server initialization process (described further below).

The user desktop data 131B contains the user's drawers, folders, and attachments (described previously). This data (table families wijt and supt) may be horizontally distributed to every subscriber server 111 in the system based on the assignment of users 120 to servers. A particular user 120 will be assigned to a server 111 when their user account is set up. A procedure may be provided to move a user from one server to another.

The platform configuration data 131C consists of the distribution catalog, activity definitions, security definitions, workflow definitions, message master, browse and file open parameters, and user and workgroup definitions (described previously with respect to FIGS. 11-15). This data is in table families ctlg, wact, mesm, and lang. The platform configuration data 131 C may be centrally maintained on the primary server 110 and replicated to every subscriber server 111 in the system. The replication algorithm may allow "selects" from the copy on any server (110, 111, etc.) and "inserts", "deletes", and "updates" only to the copy on the primary server 110. Inserts, deletes, and updates may be propagated from the primary copy on the primary server 110 to the subscription copies on the subscription servers 111 automatically. Thus, the platform windows which maintain the data in the replicated table families (CTLG, WACT, LANG, and MESM) generally requires that the primary server 110 be available.

FIG. 1H illustrates the platform table families 131 divided into two groups: those that are replicated (CTLG 181, WACT 182, LANG 183, and MESM 184) and those that are distributed (WIJT 185, ARPC 186, and SUPT 187). Updates to the primary copy of each table (denoted with a trailing "p" -- e.g., 181p, 182p, 183p and 184p) are automatically propagated to the secondary copies (denoted with a trailing "s" -- e.g., 181s, 182s, 183s and 184s) for replicated tables, via replication services 140. Distribution of nonreplicated (distributed) data (e.g., 185, 186 and 187) may be handled administratively. Distribution and replication of platform data is independent of configuration and installation of applications.

To support replicated and distributed table families, a table distribution cross reference catalog TSDX (described further below with respect to Table. C) may be created to allow applications to locate the primary (e.g., 181p, 182p, 183p, 184p, etc.) (for insert, update, or delete), the local subscription copy (e.g., 181s, 182s, 183s, 184s, etc.) of the table family (for select), or a local instance of distributed data (for insert, update or delete). Application programming interface calls (APIs) are available in the Catalog API that provide access to the TSDX table to support primary/subscription lookups.

In order to support workflows that span servers, the workflow engine described previously with respect to FIGS. 1-40 may be modified. A Workflow API may be devised to use 2-phase commit and/or ARPC when a workflow event needs to be moved from one server to another. The application architecture and the applications may be designed to use the workflow API wherever possible.

A distributed system of workflow requires several new administrative capabilities, in one embodiment. In order for the client to connect to all servers in a distributed system, the server and network address must be in the [SQLServer] section ofthe client machine's "win.ini" file (the "win.ini" file, or its equivalent, is used by the operating environment (e. g., Windows) to store information -- in this case information associated with the use of an SQL server -- about the operating environment). The logon sequence may be modified in order to make sure this server list is up-to-date. Specifically, in order to perform maintenance or install new products on an individual server, that server preferably should be made unavailable to individual users of the present invention, while still being made available to the administrator of the system. A facility may readily be added to take a server or a database within a server off-line to users of the present invention.

The following table (Table B) lists the database tables that may be changed, and the new tables that may be created in order to support the distributed capabilities of the present invention. The left-most column of Table B identifies the name of the database table, the middle column specifies the family name of the table, and the rightmost column of Table B describes the details of the change of creation.

| Table | Family | Description |
|---|---|---|
| WIJ_SEQNO | wijt | Brought back to support the new sequence number generation algorithm used in SmartStream 4.0. |
| User Master | wact | Move the drawerno, enabled, mapi_userid, mapi_pwrd, ToDo Folder Number columns to the User Configuration table. |
| User Configuration | wijt | A new table that contains user configuration information that must be modified by the SmartStream client when a user logs in. |
| Workgroup Configuration | wijt | A new table that contains the workgroup configuration information that is necessary to insert a workflow message for the workgroup. |
| WIJ_NEXT_SERVERNO | wact | This table contains a single row and column which indicates the number to be assigned to the next server materialized in the system. |
| Network Access | ctlg | A new table in the ctlg table family that provides the necessary network information so that clients can connect to all servers in the system.<br><br>This table is not needed if we change to use CT-Lib in revision 4.0. CT-Lib allows the server address file to be maintained on a shared file server. |

| Server Temp Passwords | wact | When a new server is instantiated accounts need to be created for every user in the system on that server. This table will contain a list of user/server/password combinations on the new server until each user logs on and the password is changed. |
|---|---|---|

### Table B

The Distribution Catalog (TSDX) must be able to provide applications with the location of either the primary (maintainable) or subscription (read only) copy for a table family, depending on the intent of the application. If the application is performing a query, then it needs to know the location of the local subscription (or the closest subscription if there isn't a local one).

To support these requirements, the TSDX table structure may include two key columns. First, a flag column indicating whether an entry is a primary or subscription copy. Second, a "from_server" column, which identifies the location of the subscription copy of a specific table family for a client connected to the "from_server". The additions to the TSDX table are shown with sample data in each field in the following table (Table C):

Table C

| from server (key) | family (key) | distribution entity 1 (key) | distribution entity 2 (key) | primary (0)/ subscription (1) | Server | Database | Owner |
|---|---|---|---|---|---|---|---|
| * | ctlg | * | * | 0 | FRM | DBSctlg | dbo |
| ATL | ctlg | * | * | 1 | ATL | DBSctlg | dbo |

Table C   (continued)

| from server (key) | family (key) | distribution entity 1 (key) | distribution entity 2 (key) | primary (0)/ subscription (1) | Server | Database | Owner |
|---|---|---|---|---|---|---|---|
| * | wact | * | * | 0 | FRM | DBSwact | dbo |
| ATL | wact | * | * | 1 | ATL | DBSwact | dbo |

In this example

- A client connected to server FRM performs queries of table family ctlg on the FRM server (row 1).
- A client connected to server ATL performs queries of table family ctlg on the ATL server (row 2).
- A client connected to any other server performs queries of table family ctlg on the FRM server (as FRM is the primary server) (row 1). When looking up an entry in the TSDX table (Table C) with the intent of query, we first attempt to find a "from server" entry for the current server. If the entry is not found, then the entry with an * is used.
- All clients perform **updates** oftable family ctlg on the FRM server (row 1) because FRM is where the primary copy is located.

Where the ARPC database and all its objects are <u>not</u> installed on every server, an ARPC flag may be added to the TSDX table to indicate that the table family uses the ARPC facility and therefore needs the ARPC objects installed on their server and database. This flag may be useful for knowing where the ARPC objects are for maintenance purposes. Of course, if the ARPC database and all its objects are installed on every server, then this flag is not necessary.

As discussed previously, a user's desktop information will be stored in one server/database location. Also, the user's workflow To Do messages must be transported to this location. The same is true for Workgroup To Do messages. A workgroup does not have a desktop, but its messages must be transported to one location for all members to share. The present invention may be implemented to support one or more members of a workgroup being on different servers than the workgroup To Do messages, but in this case, the remote user will be impacted by performance and network availability problems on the workgroup server.

To support this situation, a "wijt server" column may be included in the User Master table (described briefly above with respect to Table B, and below with respect to Table D) and a Workgroup Master table (Table E, below) defining which instance of the "wijt" table family contains the desktop and workflow information. The value of the "wijt server" column must match a value defined in the distribution entity 1 column for the "wijt" table family in the TSDX table. This link to TSDX will allow services to find the physical location of the data.

In a preferred embodiment, the User Master table may be defined (In part) as indicated below in Table D:

Table D

| User ID | wijt server | ... |
|---|---|---|
| RSD | FRM | |
| JHE | FRM | |
| AFLAT | ATL | |

The User Master table of Table D corresponds to the User Master table shown as reference numeral 1110 in FIGS. 11 and 15, and illustrates two additional columns which may be added to that table.

As illustrated in Table D, the User Master table may include a column identifying a User ID, and a column identifying which server contains the "wijt" table family which includes an instance of the user's desktop and workflow information.

Likewise, a Workgroup Master Table may be defined (in part) as indicated below in Table E:

Table E

| Workgroup Master Table | | |
|---|---|---|
| **Workgroup ID** | **wijt server** | **...** |
| REGISTRATION | FRM | |
| HR | ATL | |
| FINANCIALS | ATL | |

This table is similar to the User Master table of Table D (and reference numeral 1110), except that the Workgroup ID for a group of users is identified in a first column, rather than a specific user ID.

Some columns in the User Master table (reference numeral 1110 in FIGS. 11 and 15, and further defined in Table D) in the current implementation need to be updated whenever the user logs onto the application of the present invention. Additionally some new user configuration data is required to support the new sequence number generation algorithm of the present invention (described further below). Since the user needs to be able to logon when the primary server is down, these columns need to be on a table which is distributed to the desktop server (110, 111 or 112, as appropriate). Thus a User Configuration Table, shown below as Table F, may be added to the wijt table family to hold these values. This table may contain the following columns:

Table F

| Column | Purpose |
|---|---|
| userid | The userid. This is the key. |
| drawerno | This is the user's home drawer number. This column is moved from user master. |
| enabled | Indicates whether the user account is enabled or disabled. This column may be moved from user master. |
| mapi_userid | The MAPI logon id of the user. This column is moved from user master. |
| mapi_pwrd | The MAPI password of the user. This column is moved from user master. |
| ToDo Folder Number | This is the folder number where the user's ToDo's are stored. This must be stored in the user configuration table so that workflows can be processed properly when a user is moved from one server to another. |
| Next Sequence Number | The next available sequence number available for this user. |
| Last Sequence Number | The last sequence number that was allocated for this user. |
| Network Type | The network type for the user. This field is used to keep the [SQLServer] section of the user's win.ini file up to date. |

Likewise, a Workgroup Configuration table may be created on a distributed desktop server, similar to the User Configuration Table, except corresponding to workgroups, as opposed to individual users. The Workgroup Configuration table may contains the following columns, as illustrated below in Table G:

Table G

| Column | Purpose |
|---|---|
| Workgroup ID | The workgroup ID. This is the key. |
| ToDo Folder Number | This is the folder number where the workgroup's ToDo's are stored. This must be stored in the workgroup configuration table so that workflows can be processed properly when a workgroup is moved from one server to another. |

A Network Access table may also be created on a distributed desktop server 111, which defines the connection strings that clients need to have in their "win.ini" file to connect to every server in the system. There is a row in this table for each server/network type pair at the site. This table may contain the following columns, as illustrated below with respect to Table H:

Table H

| Column | Description |
|---|---|
| Server | The name of the server. |
| Network Type | The network type. The design allows this string to be an arbitrary string as long as each user is assigned a Network Type in User Configuration and it matches a Network Type in this table for each server the user needs to access. In practice, the exceptation is that this column will match a Sybase network type, for example WDBNOVTC. |

Table H   (continued)

| Column | Description |
|---|---|
| Connection String | For each server and network type this column contains the connection string, for example "WDBNOVTC,159.172.131.110,3300,urgent". |

For most sites which have standardized on a single client TCP/IP stack, this table will contain a single row for each server. Part of the client logon sequence may be to query this table to make sure its "win.ini" file has all the up-to-date server strings. Accordingly, the particular string added to "win.in" may have the following format:

<Server>=<Network Type>,<Connection String>

where the name of the server is substituted for <Server>, the network type is substituted for <Network Type>, and the appropriate connection string is substituted for <Connection String>.

The present invention may be designed to allow network connection strings to be stored in a shared file on a file server rather than in the "win.ini" file. Thus, if the present invention is implemented to use such a scheme, the need for the Network Access Table can be eliminated.

When a new server is instantiated, accounts generally need to be created for every user in the system on that server. The following table (Table I) may be created to contain a list of user/server/password combinations on the new server until the user logs on and the password is changed. Table I may contain the following fields:

Table I

| Column | Description |
|---|---|
| Server | The name of the new server. |
| User ID | The user id of the user. |
| Password | The temporary password of the user. This field may be encrypted. It may be automatically generated by the system when a server is materialized. |

I

The initial installation process to install the present invention on a single server can remain essentially unchanged from the general configuration described previously with respect to FIGS. 1-40. However, new installation scripts may be developed for server initialization, distributed desktop option installation, and subscriber materialization.

In a multi-server configuration, the application install process will first install the Application Platform Data 131 on the primary server 110. The replication system 150 will automatically propagate these additions to any subscription servers 111. The application database 131 can then be installed on any server in the system that has been initialized.

The install process required for the distributed aspect of the present invention also generally requires specific installation scripts. The installation of maintenance stored procedures (insert, delete, and update), loading of initial data, and platform migration may be part of the primary server installation, while the installation of table definitions and select stored procedures may be part of the primary installation and subscriber materialization.

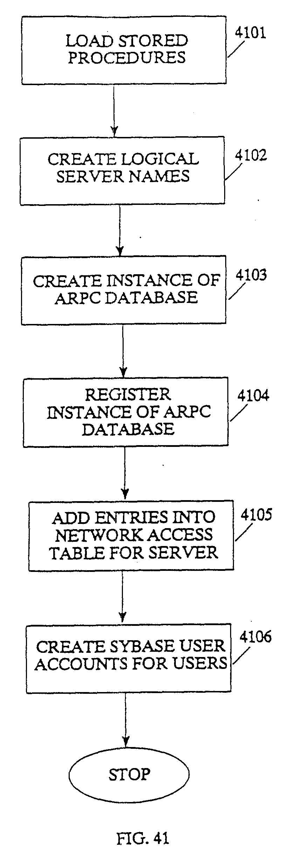

As depicted in FIG. 41, an installation script may be created for server initialization. With reference to FIG. 41, this script will do the following:

1) [step 4101] Load system stored procedures necessary for the present invention into the master database (e. g., on server 110, 111, etc.).
2) [step 4102] Create the logical server names required for the applications.
3) [step 4103] Create an instance ofthe ARPC database 150 on the server.
4) [step 4104] Register the instance ofthe ARPC database in TSDX (see Table C).
5) [step 4105] Add the entries into the Network Access table (see Table H) for the server so that clients will be able to get the network connection information for the server.
6) [step 4106] Create all the necessary Sybase user accounts on the server for existing users (make sure all passwords are synchronized system-wide, in a preferred embodiment).

Application databases will only be able to be installed on servers that have been initialized.

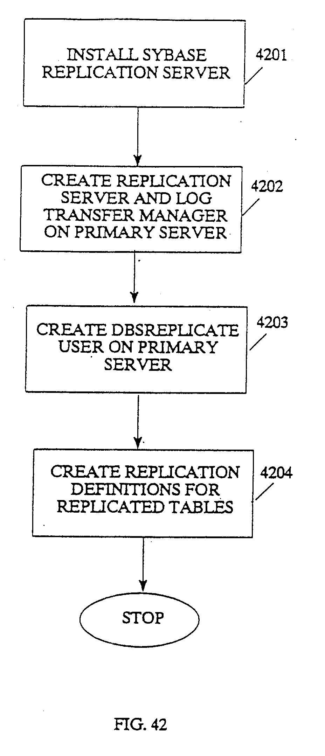

As illustrated in FIG. 42, an installation script may be created to install the distributed desktop option on the primary server 110. This will install the components on the primary server 110 that are required to support subscriber servers 111. With reference to FIG. 42, this script will do the following:

1) [step 4201] Install Sybase Replication Server.
2) [step 4202] Create a Replication Server 150 and a Log Transfer Manager 151 on the primary server 110.
3) [step 4203] Create the DBSReplicate user on the primary server 110, the Log Transfer Manager 151, and the primary server Replication Server 150.
4) [step 4204] Create the replication definitions for tables that are replicated.

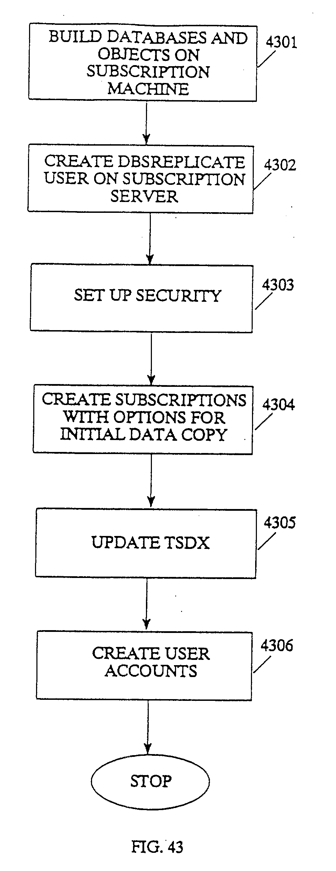

As illustrated in FIG. 43, an installation script may be implemented to create a subscriber server 111. A prerequisite to running this script will be running the initialization script for the server as described above and installing the distributed desktop option on the primary server 110. With reference to FIG. 43, this script will do the following:

1) [step 4301] Build the databases and their objects on the subscription machine 111 with no initial data and leaving out the stored procedures to update, delete, or insert data into replicated tables.
2) [step 4302] Create the DBSReplicate user 153 on the subscription SQL Server 111.
3) [step 4303] Set up security so that the DBSReplicate user 153 can insert, update, and delete data from the replicated table families.
4) [step 4304] Create the subscriptions with the proper options so that Replication Server 150 does the initial data copy.
5) [step 4305] Update TSDX (Table C) to have the entries for the new subscription copies of the replicated table families and the new instance of the wijt table family.
6) [step 4306] Create user accounts for all existing users on the server. Since materialization process does not know the correct password, it may generate a randomly selected password, encrypt it, and store it in the Server Temp Passwords table. The user logon process will change the password and delete this record the next time the user logs onto the present invention.

After a server is materialized existing users can be moved to the server, or new users can be assigned to the server.

Dematerialization is the process of removing a server (110, 111, 112, etc.) from an installation of the present invention. Note that a server may contain no users or workgroups and still function properly to support applications. Such a server is not considered dematerialized.

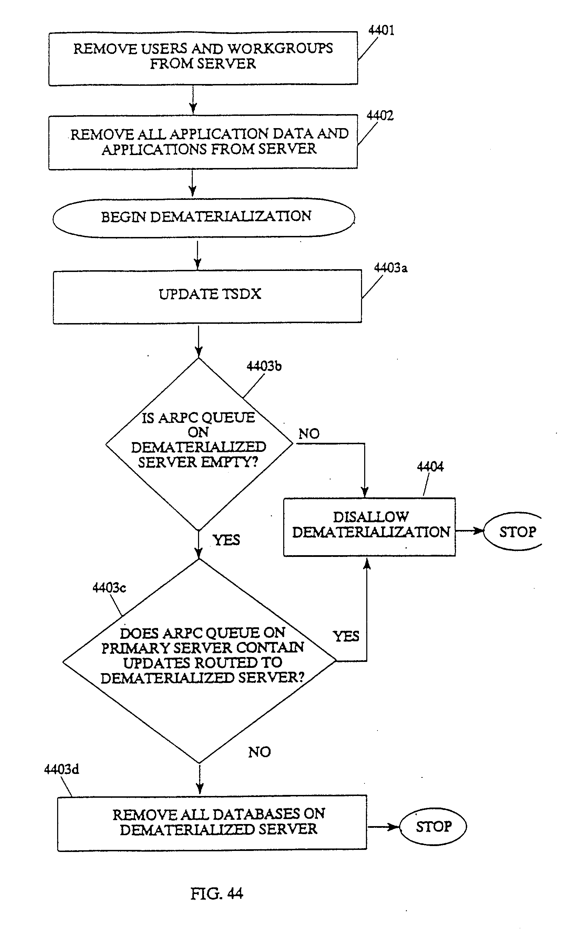

FIG. 44 depicts the steps which may be performed as part of the dematerialization process. With reference to FIG. 44, these steps are described below:

1. [step 4401] Remove all users and workgroups from the server, either by deleting them or moving them with the administration tool used to move them to the server originally.

2. [step 4402] Remove all application data and applications from the server. Providing tools and instructions on how to move application data to another server is generally the responsibility of the applications.

3. Begin dematerialization:

   a. (step 4403a) Update TSDX (see Table C) on the primary copy server 110 to indicate the dematerialized server is no longer available.

   b. (step 4403b) Check to see that the ARPC queue (e.g., 153) on the dematerialized server is empty. If not, disallow dematerialization (step 4404).

   c. (step 4403c) Check to see that the ARPC queue (e.g., 150) on the primary copy site 110 contains no updates routed to the dematerialized server. If not, disallow dematerialization (step 4404).

   d. (step 4403d) Remove all databases on the dematerialized server.

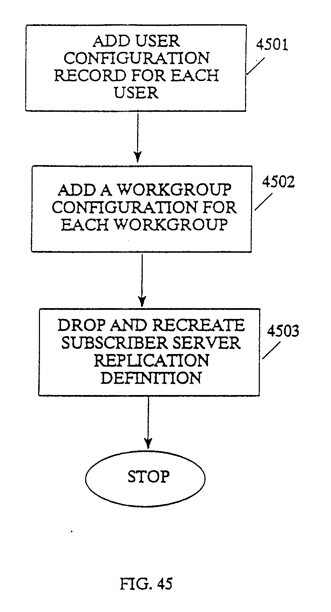

In the event that the present invention is first implemented without those changes in the tables defined previously with respect to Tables A through I, then this configuration may be migrated to include distributed functionality by performing the steps illustrated in FIG. 45. With reference to FIG. 45, these steps are described below:

1) [step 4501] Add a User Configuration record for each user, as described previously with respect to Table B. This record will contain the MAPI logon information, ToDo Folder number, and enabled flag from User Master. The sequence number fields will be set to 0. Additionally the network type for each user will have to be initialized.

2) [step 4502] Add a Workgroup Configuration record for each workgroup, as also described previously with respect to Table B.. This record will contain the ToDo Folder number for the workgroup.

3) [step 4503] In a preferred embodiment, such a migration process does not migrate subscriber servers 111. Each subscriber server replication definition may instead be dropped and recreated as part of the process.

The install process described above may use a Sybase Replication Server to initially copy the replicated table families from the primary server 110 to the subscription servers 111. It will also take care of propagating any changes that are made to the tables when new products are installed or when the primary copy is updated by a maintenance window. Occasionally the system administrator may believe that the primary and subscription copies of a table family are not in sync. Symptoms of out of sync tables include:

- Workflow events are disappearing.
- Application Architecture windows are taking errors indicating that initial data is not present or is not correct.
- Activities available to users assigned on one server are not available to users assigned to other servers.

Scripts may be provided to verify and fix subscription copies of the replicated tables. For example, these scripts may call a "rs_subcmp" utility for each table family to verify that the subscription copies of tables are in sync, and may fix any tables that are not in sync.

In one embodiment of the present invention, the ctlg, wact, mesm, and lang table families (described previously) are replicated. In order to support replicated table families, the Distribution Catalog API (application programming interface) may be created to support locating either the primary or the closest subscription copy of replicated table families. Thus, calls to this API will locate the subscription copy of the desired table families. If so desired, This API may be designed so that additional parameters or globals may be passed to locate the primary copy of the desired table families. The basic Distribution Catalog API is described in further detail below.

In a preferred embodiment, where it is not possible to extend the API, utilized for the embodiment of the present invention defined with respect to FIGS. 1-40, to support replicated table families, a new API call may be defined that includes the primary/subscription flag. In this case, the name of the new API may be different than the name of the API for the basic invention. Thus, the basic API may be used to locate the subscription copy of the desired table family, but preferably in future generations of the present invention, the new API can be used for this purpose.

Again, the present invention utilizes the concept of replicated table families. An installation has one primary copy of a replicated table family which can be read or modified and multiple subscription copies of the table family which are read-only. When an application needs to modify data in a replicated table family it must find the location of the primary copy of the table family. When an application needs to read data from a replicated table family it needs to find the location of the closest subscription copy of the table family. The existing table family catalog APIs may be modified according to the teachings of the present invention to support locating either the primary or the closest subscription copy of a replicated table family.

The table below (Table J) lists the new and modified Powerbuilder (the development tool available from Powersoft Corporation) functions and Stored Procedures (such as SQL stored procedures) forming the Distribution Catalog API that look up table and table family location information in the TSDX table. Listed for each is the name of the API, the name of the API it replaces the type of the API, and a description of the API.

Where possible the existing API is extended to support replicated table families. In this case the name of the new API is the same as the name of the current API. Existing calls to the current API will locate the subscription copy of the desired table families. Additional parameters or globals can optionally be passed to these functions to locate the primary copy of the desired table families.

Where it is not possible to extend the existing API to support replicated table families, a new API call was defined that includes the primary/subscription flag. In this case, the name of the new API is different than the name of the current API to allow both APIs to be supported while the applications make the transition to the new API.

| New API | Current API | Type | Description |
|---|---|---|---|
| get_svr_db_owner | get_svr_db_owner | PB | Given the distribution entities, a list of table family ids, and a list of primary copy flags, produce a list of server.database.owner strings where the table families reside. |
| get_svr_db_owner_dist | get_svr_db_owner_dist | PB | Given a distribution level, the distribution entities, a list of table family ids, a list of distribution levels associated with the table families, and a list of primary copy flags, produce a list of server.database.owner strings where the table families reside. |
| pcf5003_find_svr_db_owner | pcf0003_find_svr_db_owner pcf0004_find_svr_db_owner | PB | Get the Server, Database and Owner for a Table family by two levels of distribution. Pass results back in a string to use to execute stored procedures in the table family. |
| pcf5006_svr_db_owner_multi | pcf0006_svr_db_owner_multi | PB | Get Server, Database and Owner for a list of table families by two levels of distribution and pass the results back in a array. |
| pcf5007_find_table_svr_db | pcf0007_find_table_svr_db | PB | Get Server and Database location for a given Table id and two levels of distribution. Pass the results back via server and database reference arguments. |
| pcf5008_svr_db_owner_all | N/A | PB | Given the distribution entities and a table family, get a list of the location information and type (primary or subscription) of all the copies of the table family. |
| psp_sel_tsdx_2 | psp_sel_tsdx_1 | SP | Given a table family id, two distribution entities, the primary copy flag, and the from server, select the server, database, and owner of the location of the table family. The server, database, and owner can be returned either as a result set or in output parameters. |
| psp_sel_tsdx_all_1 | psp_sel_tsdx_all_1 | SP | Given a table family select the distribution entities and locations of all instances of the table family. Depending on the value of the input parameters, this function can get the location of either the primary copy of replicated tables or of the subscription copy of replicated tables. |

| | | | |
|---|---|---|---|
| psp_sel_tsdx_by_user_group | psp_sel_tsdx_by_user_group | SP | Given a group or a user and a group, get a list of all the server/database pairs that the user or group needs access to based on the applications that the group is set up to use.–Depending on the value of the input parameters, this function can get the location of either the primary copy of replicated tables or of the subscription copy of replicated tables. |
| psp_sel_tsdx_distinct_1 | psp_sel_tsdx_distinct_1 | SP | Get a list of the locations where a particular table family is installed. Depending on the value of the input parameters, this function can get the location of either the primary copy of replicated tables or of the subscription copy of replicated tables. |
| psp_sel_tsdx_maint_all_1 | psp_sel_tsdx_maint_all_1 | SP | Get a list of all the all the entries in TSDX for a particular table family. Depending on the value of the input parameters, this function can get the location of either the primary copy of replicated tables or of the subscription copy of replicated table families. |
| psp_sel_tsdx_multi_2 | psp_sel_tsdx_multi_1 | SP | Given the two distribution entities, the from server, and a list of up to 20 table families and primary/subscription flags, find the location of the table families. |
| psp_sel_tsdx_dist_ent_2 | psp_sel_tsdx_dist_ent_1 | SP | Given a table family id, the column number of distribution entity 1, and two distribution entities select the server, database, and owner of the location of the table family. The server, database, and owner can be returned either as a result set or in output parameters. |
| psp_sel_tsdx_table_db_1 | psp_sel_tsdx_table_db_1 | SP | Given a table id, two distribution entities, the primary copy flag, and the from server, select the server, database, and owner of the location of the table family. |
| psp_sel_tsdx_dist_1 | psp_sel_tsdx_dist_1 | SP | Given the table family, the primary copy flag, and the from server, select the distribution entities and location information for all instances of the table family ordered by distribution entity 1. |
| psp_sel_tsdx_fam_all | N/A | SP | Given the distribution entities and a table family, select the list of the location information and type (primary or subscription) of all the copies of the table family. |
| ????? | PIQ_GetLocation | Sched | |
| ????? | PIQ_GetFullLocation | Sched | |

**Table J**

where "PB" in the type column indicates that the procedure may be implemented by using PowerBuilder code, and "SP" indicates that the procedure may be implemented as a stored procedure.

In each Distribution Catalog API described above with respect to Table J, tables are provided depicting parameters and globals used with the API. Each entry for each API also may include an "Existing Function" section describing existing APIs which are related to the new API, as well as an "Application Impact" section describing the impact that the new API has on the implementation of the present invention as defined previously with respect to FIGS. 1-40.

In order to implement the replicated aspects of the present invention, based upon the teachings of the present invention defined previously with respect to FIGS. 1-40, all platform activities and browser code should be examined to find places where the ctlg, wact, mesm, and lang table families are used. If access is read-only, the code needs to be verified to make sure it is using the subscription copy of the table family. If access is required for insert, update, or delete, then the code to locate the table family will need to be implemented to locate the primary copy of those table families, and perform the particular operations thereon.

With respect to the user logon process, instead of each user 120 connecting to a single server 110, users will connect to their desktop server, which may be one of a variety of servers as depicted in FIGS. 1A-1H. This may be accomplished efficiently by storing the connection information for each user 120 in the user's DBS.INI file (191 in FIG. 1H), instead of the DBSERVER.INI file (192 in FIG. 1H). This information may be validated at login time. The DBSERVER.INI file, which is shared by multiple users on a file server, may still be used for initial logins, fallback logins and other shared information. The platform logon procedure may readily incorporate these changes to make them trans-

33

parent to applications built with the application architecture.

When implementing the invention described with respect to FIGS. 1-40, users 120 connect and login to the TSDX server and database defined in the DBSERVER.INI file, which is shared by many users on a file server. The contents of a typical DBSERVER. INI file is shown below:

## [DBSERVER]

Server=ATL // Name of the server where the Distribution Catalog is.

TSDXDB=DBSctlg // Name of database where Distribution Catalog is located.

Owner=dbo // Name of database owner of Distribution Catalog.

Since each user will instead be connected to their "wijt server", the login procedure will change as follows.

For a user's first login, the initial connection to the server and database defined in the DBSERVER.INI file may be used. This server and database will be the location of the primary Distribution Catalog. However, after the connection is made, the login process may look up the user's "wijt_location" (desktop server) in the User Master table (see Table D) (this table is replicated to all subscription servers). As shown in the following example, three new items may be stored in the user's DBS.INI file, which are:

[SmartStream]
WijtServer=FRM // User's physical "wijt_location" (desktop server)

CtlgDatabase=DBSctlg // Database that contains the Distribution Catalog on the user's desktop server.

CtlgOwner=dbo // The owner of the Distribution Catalog on the user's desktop server

For a user's subsequent logins, the initial connection would be made to the WijtServer and CtlgDatabase defined in the DBS.INI. After logging in successfully, these "wijt" values would be validated against the User Master (see Table D) and TSDX tables (see Table C) in the catalog database of the wijt_location server in order to check if the:

- User's desktop has been moved to another server or database • DBS.INI file has been "corrupted".

Additionally, the logon process may check to see if any records for this user exist in the Server Temp Passwords table (see Table B). If so, the process will logon to the indicated server, change the users password to the correct password, and use ARPC to delete the Server Temp Passwords table entry. This process is the first thing executed after sign-on so that if the user has been moved to the new server, the password will be correct by time the logon process tries to directly log onto the server.

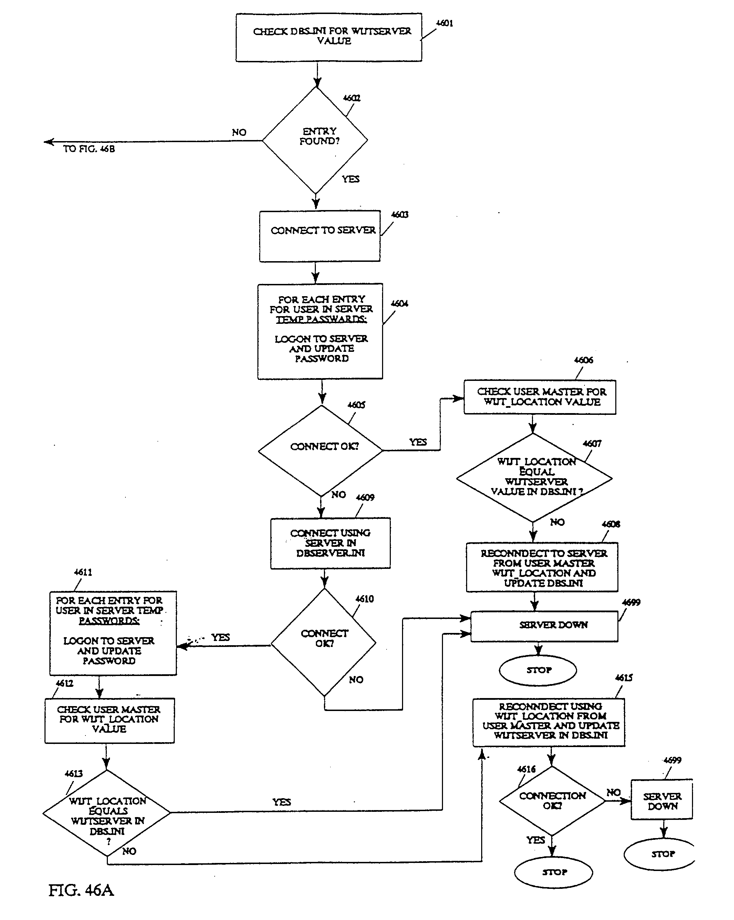

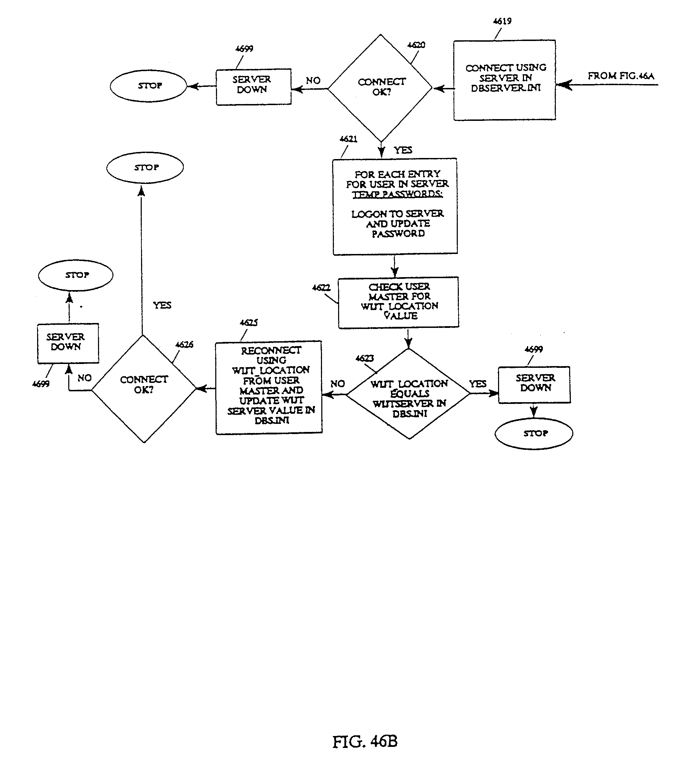

All of the above processing may be accomplished via the processing illustrated in FIG. 46, and described in the pseudo-code below:

- [step 4601] Check DBS.INI for WijtServer value
- [step 4602] If entry found

  - [step 4603] connect to server
  - for each entry for the user in Server Temp Passwords

    - [step 4604] logon to the server and update the password

34

- [step 4605] If connect okay

    - [step 4606] check User Master for wijt_location value
    - [step 4607] if wijt_location does not equal WijtServer value in DBS.INI

        - [step 4607] reconnect to server from User Master wijt_location and update DBS.INI with wijt_location
        - If reconnect is not okay

            - [step 4699] error "Server down"

- else

    - [step 4609] connect using server in DBSERVER.INI
    - [step 4610] If connect okay

        - for each entry for the user in Server Temp Passwords

            - [step 4611] logon to the server and update the password

        - [step 4612] check User Master for wijt_location value

        - [step 4613] If wijt_location equals WijtServer in DBS.INI

            - [step 4699] error "Server down"

        - else

            - [step 4615]. reconnect using wijt_location from User Master and update WijtServer value in DBS.
              INI
            - [step 4616] If connect not okay (step 4616)

                - [step 4699] error "Server down"

            - else

                - [step 4699] error "Server down"

    - else

    - [step 4619] connect using server in DBSERVER.INI
    - [step 4620] If connect okay

        - for each entry for the user in Server Temp Passwords

            - [step 4621] logon to the server and update the password

        - [step 4622] check User Master for wijt_location value
        - [step 4623] If wijt_location equals WijtServer in DBS.INI

            - [step 4699] error "Server down"

        - else

            - [step 4625] reconnect using wijt_location from User Master and update WijtServer value in DBS.INI
            - [step 4626] If connect not okay

                - [step 4699] error "Server down"

- else

  - [step 4699] error "Server down"

Once the user client 120 has connected to the correct server, it may do a select on the Network Access table (see Table H) to get a list of the servers and network address information for its network type. It may also make sure that each server has an entry in the local win.ini file.

In order to support movement of users 120 from one server to another, drawer, document and template numbers may be unique across all servers. To implement this requirement in the present invention, the following two tables (Tables K and L) may be created:

Table K

| WIJ_SERVERS Table | |
| --- | --- |
| Server ID | Server No. |
| FRM | 1 |
| ATL | 2 |

Table L
**WIJ_SERVERNO Table**
**Server No.**
2

In the preferred embodiment, the calculation of a new drawer, document or template number for the user 120 for reference purposes may be accomplished using a combination of server number + sequence number (from Tables K and L) within the server. Sequence numbers within a server are allocated sequentially and are never reused. Server numbers are allocated sequentially and never reused as well.

In order to prevent the table which contains the sequence number for the servers (referred to as the WIJ_SEQNO table, described previously with respect to Table B) from becoming a bottleneck, when a local user allocates a sequence number they are given a range of 10 numbers which are stored in the User Configuration table (Table F). Thus, until they use up those 10 sequence numbers they only access the User Configuration table to get a new number.

In addition to utilizing the sequentially allocated sequence numbers for the servers, the present invention may also utilize a there will also be the addition of the WIJ_NEXT_SERVERNO table (also described previously with respect to Table B) on the primary server 110. This table will contain the server number of the next server number to be materialized.

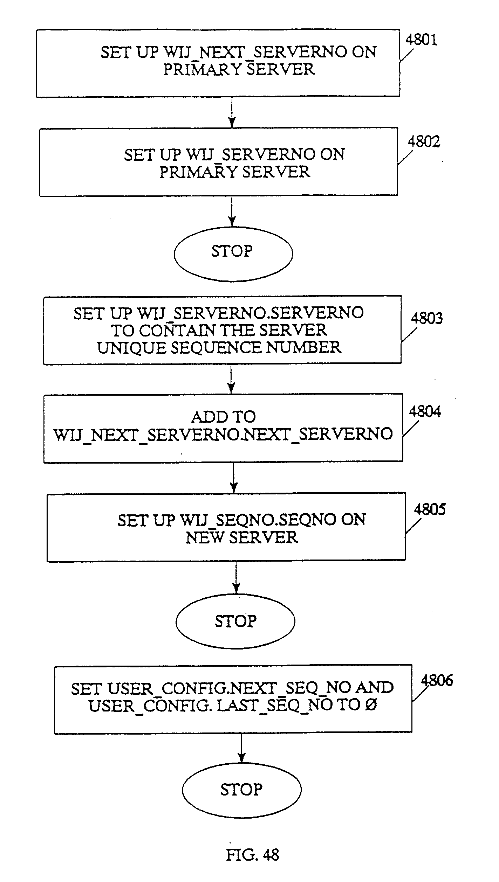

FIGS. 48 describes a series of process that may be used, in one embodiment:
At installation:

- [step 4801] Set up WIJ_NEXT_SERVERNO on primary to contain 30,000,000.
- [step 4802] Set up WIJ_SERVERNO on the primary to contain 20,000,000.

At server materialization:

- [step 4803] Set up WIJ_SERVERNO.SERVERNO to contain the server unique sequence number from WIJ_NEXT_SERVERNO.SERVERNO.
- [step 4804] Add 10,000,000 to WIJ_NEXT_SERVERNO.next_serverno.
- [step 4805] Set up IAIJ_SEQNO.seqno on the new server to contain a single row that is 0.

When a user is created:

- [step 4806] Set user_config.next_seq_no and user_config.last_seq_no fields to 0

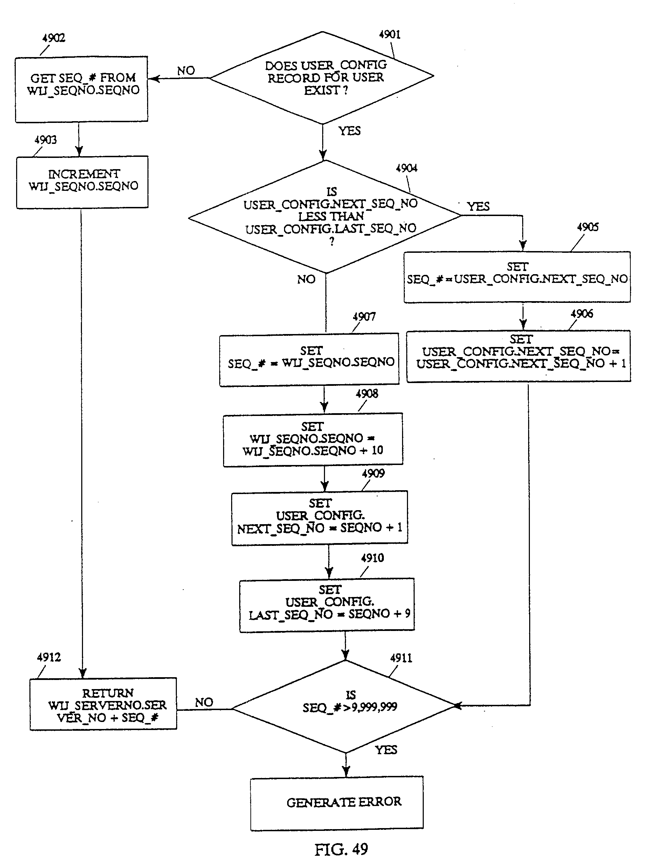

FIG. 49 depicts a process for generating a unique number for use with respect to the process of FIG. 48. With reference to FIG. 49, this process is described as pseudo-code below, where standard conditional, variable assignment and parameter returning logic is shown:

- [step 4901] if ( user_config record for this user does not exist )

    - [step 4902] get seq_# from WIJ_SEQNO.seqno
    - [step 4903] increment WIJ_SEQNO.seqno

- else

    - [step 4904] if (user_config.next_seq_no < user_config.last_seq_no )

        - [step 4905] seq_# = user_config.next_seq_no
        - [step 4906] user_config.next_seq_no = user_config.next_seq_no + 1

    - else

        - [step 4907] seq_# = WIJ_SEQNO.seqno
        - [step 4908] WIJ_SEQNO.seqno = WIJ_SEQNO.seqno + 10
        - [step 4909] user_config.next_seq_no = seqno + 1
        - [step 4910] user_config.last_seq_no = seqno + 9

    - [step 4911] if ( seq_# > 9,999,999 ) generate an error

- [step 4912] return (WIJ_SERVERNO.SERVER_NO + seq_# )

If the sequence number table (WIJ_SEQNO) ever overflows producing an error, then a new server number can be allocated for the server. If the number of servers (212 servers) supported by this algorithm is ever threatened to be overflown, then the sequence number column of the WIJ_SEQNO table can be changed from an integer to a decimal column. This change would, of course, require coding and table changes, but the migration to this approach would be trivial.

Implementing the process described above is straight-forward. The new WIJ_SEQNO and WIJ_NEXT_SERVERNO tables need to be added to the install process. The SEQNO#getnext_1 stored procedure may readily be changed to implement this new algorithm. The install process needs to set up WIJ_SERVERNO on the primary server to 20,000,000. Finally, the correct user_config records need to be built as part of migration for existing users.

The User Configuration table (see Table F) may contain the enabled flag, the mail logon information, the ToDo Folder number, the network type, and the sequence numbers allocated for a user 120. The platform login sequence may readily be modified to use the enabled flag and the mail logon information from this table rather than from the user master table. The workflow engine (described previously with respect to FIGS. 1-40) may readily be modified to use the ToDo folder number from the User Configuration Table rather than from the user master table. The sequence number generation algorithm may use the sequence numbers stored in the user configuration table to allocate sequence numbers as described previously.

The product request feature of the present invention may also be distributed. The Product Request windows may simply add the server name as parameter. In one embodiment, users 120 may only be able to view Product Request information for a particular server with a single query.

With respect to the implementation of workflow in a distributed environment, the separation of the WACT and WIJT tables into separate families and the distribution of some table families make it necessary to identify all situations in which modifications are being made to platform data to guarantee the updates are safe and correct. Some situations may require the introduction of ARPC or two-phase commits by the client. For example, the Trigger Workflow event may be modified to use the ARPC utility to send To Do messages to the user or workgroup's "wijt_location", and Reassign To Do will require a two-phased commit when the destination owner is on a different server than the source owner.

To reduce the number of places where updates need to be made to the workflow techniques described with respect to FIGS. 1-40, to support workflow distribution, wherever possible it is preferable to make use of a new Workflow API. The Workflow API will shield platform and application code from making platform table updates directly. The assumption underlying the design of the distributed workflow system of the present invention is that applications either do not make updates to tables, or they make updates in limited situations and can frequently rely on the Workflow API.

The following paragraphs discuss the workflow API functions that may potentially "touch" instances of the wijt table family on multiple servers. These functions will require two-phase commit, Asynchronous RPC, or both:

WFDelTasksByfromActO and WFDelTasksByToAct() functions. These functions need to delete tasks from the consolidated message queue, i.e. the message queues on every machine in the system. In a distributed system this may typically only be done synchronously by two-phase commit on every server in the system. Since a synchronous delete would require the availability of all servers in the system, these functions may be supported using ARPC.

Certain applications (such as "Financial Stream", available from Dun & Bradstreet Software Services, Inc., the assignee of the present patent application) uses these functions at the start of some of their batch programs. These programs generate a a lot of events. When the program is run, any events that were generated by a previous run of the program are no longer needed. Thus, when the batch program starts they want to delete the events that were generated by the previous run of the program. All such events have the same from_activity, so they may use the psp_del_mque_by_from_act to do this delete.

In one embodiment of the present invention, message queue entries may have the key values from the calling activity separated from the data which is passed onto the next activity in the workflow. The functions which do asynchronous deletes will take these key values as input. Thus the batch programs noted above will have to generate a key (time of day perhaps) each time they run and save it in the database. The next time the program runs it can do the deletes based on the key value. As long as the key is properly generated and saved, this implementation will prevent race conditions between ARPCs and newly generated ToDo messages.

WfReassignTask() and WfReassignAllTasks(). These functions should attempt to reassign the tasks using 2-phase commit. If the Workflow API cannot login to the target server, the tasks should be reassigned via ARPC.

These functions will also have to be modified to handle duplicate keys. Since the unique timestamp is part of the key it is possible that an identical workflow event exists on the destination of a reassign. The stored procedures that handle re-assign on the destination will have to handle duplicate key errors and generate a new key when they occur.

WFTriggerEvent(). The WFTriggerEvent() function generates a workflow event. This event may be targeted to a user or workgroup on the local server or on the remote server. The stored procedure that supports this API function may be changed to generate an ARPC if the targeted user or workgroup is on the remote server.

WFRegister_ComDB(), WFRegister_DBLIB(), WFRegister_New(), WFRegister_PB(). In order to do any operations with 2-phase commit the workflow API will have to have the ability to logon to a new server. To log onto the new server, it will require the user's password. Thus the Workflow Register functions must be modified to take the user's password as an input parameter.

In order to administer the present invention, a User window may be included in the distributed implementation to include the server that the user is assigned to and the network type that the user uses. The server field may be entered when a new user is created. For existing users this field may be display only on this window. The separate Move User activity can be used to move a user from one server to another. The User Window will also have to be modified to add and update both the User Master and the User Configuration records for a user when a user is added or changed. This operation will require two-phase commit because the two records may be on different servers.

A Workgroup Window will require the same changes as the User Window. The server the workgroup is assigned to may be added to the window. Two-phase commit may be required to update the Workgroup Master and the Workgroup Configuration records when a workgroup is added or changed. A Move Workgroup window may be added to move a workgroup from one server to another.

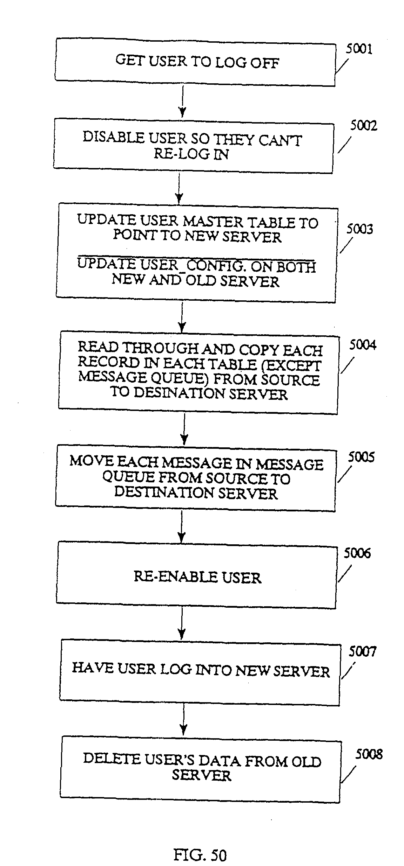

A new User Movement activity may be required to move a user from one server to another. This process includes moving the user's data to the new server, copying the User Configuration record from the old server to the new server, and changing the User Master record to point to the new server. The details of this process are described below with respect to FIG. 50:

1) [step 5001] Get the user 120 to log off.

2) [step 5002] Disable the user so they can't re-log on.

3) [step 5003] Update user_master (Table D) to point to the new server and update user_config (Table F) on both the new server and the old server. These updates should preferably be made in one transaction.

4) [step 5004] Read through each record in each table (except the message queue) on the source server and copy it to the destination server. In one embodiment, this process may be a specialized C routine that logs onto each server to move the data.

5) [step 5005] Move each message in the message queue from the source to the destination server. For this process to work properly it preferably needs to use two-phase commit to move each message.

6) [step 5006] Re-enable the user so they can log on to the new server.

7) [step 5007] Have the user log onto the new server and verify that everything was moved properly.

8) [step 5008] Delete the user's data from the old server.

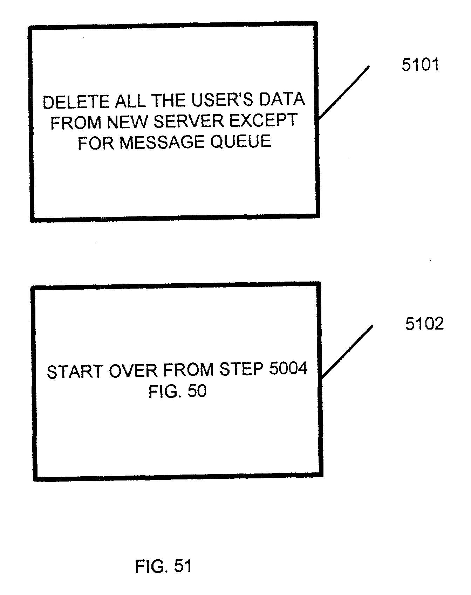

If anything goes wrong during this process of FIG. 50, the following steps may be taken to recover from the error. Reference is made to FIG. 51 when describing these steps:

1) [step 5101] Delete all the user's data from the new server except for message queue messages.

2) [step 5102] Start over from step 4 in the above sequence (FIG. 50).

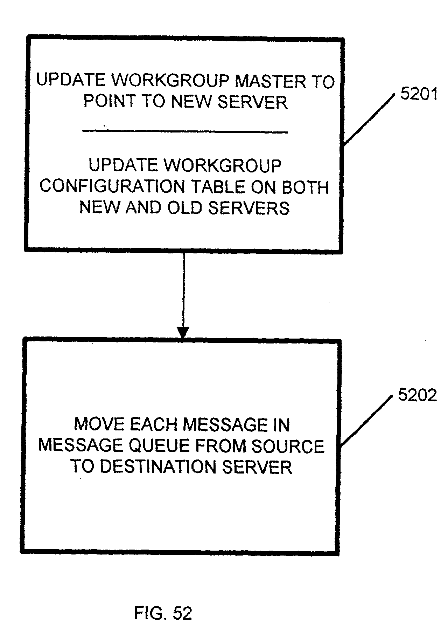

As with the move user process of FIG. 50, a move workgroup process may be implemented according to the following steps, described with respect to FIG. 52:

1) [step 5201] Update workgroup_master(Table E) to point to the new server and update the Workgroup Configuration table (Table G) on both the new server and the old server. These updates preferably should be made in one transaction.

2) [step 5202] Move each message in the message queue from the source to the destination server. For this process to work properly it needs to use two-phase commit to move each message.

In addition to the APIs which operate on the TSDX table (See Table C), the Table Distribution Maintenance activity may be modified to support maintenance of subscription copies of replicated tables.

To take a server or database off-line from users of the present invention, an activity may be created to remove execute permission on all stored procedures and to remove select permission on all tables in the database or server.

To accomplish this, for each table family in the system there may be two new stored procedures. The Disable Permissions stored procedure may operate to revoke execute permission on all stored procedures in the table family from public and revoke the select permission on all tables and views in the table family from public. Conversely, the Enable Permissions stored procedure may operate to grant execute permission on all stored procedures in the table family to public and grant select permission on all tables and views to public. These stored procedures may be named so that the stored procedure name can be derived from the table family id. In a preferred embodiment, only a system administrator with sufficient privileges will be given execute permission to these stored procedures.

A new activity may be added to disable a database or a server. This activity may operate to build a list of stored procedures that it needs to run from TSDX. It may then run the stored procedures to revoke the permissions on all table families in the database or server. Again, only a system administrator with sufficient privileges should be able to use this activity.

An activity may also be readily created to enable a database or a server. It may call the stored procedures necessary to enable permissions on the stored procedures and tables in the affected families.

In a further embodiment, all the database access routines may be changed to check for a "no permission" error. If they get this error, then they should return a message indicating that the database is not currently available. Additionally the desktop code that accesses the "wijt" table family may be changed to gracefully handle the error and log the user off of the system present invention when the user's "wijt" table family is disabled.

The install process should preferably be designed to install all the table families in a disabled state. Thus, any statements in table and stored procedure definition files that grant permissions need to be removed. This keeps users from trying to access a database while an installation is in progress. The last step in the install may optionally run the stored procedures to enable permissions on the tables and stored procedures.

ARPC may also have to be changed to handle a "no permission" error as a retryable error.

A new activity may need to be created to maintain the Network Access Table (Table H). This activity allows the administrator to view the current entries, create new entries, modify existing entries, or delete obsolete entries.

In order for applications to be compatible with the distributed aspect of the present invention, the guidelines listed below generally must be followed:

1) The wijt table family may be distributed in the present invention, based on the server that the user is assigned to. The following stored procedures in the wijt table family may potentially modify data on multiple servers, in one embodiment:

```
psp_del_mque_by_from_act
psp_del_mque_by_to_act_1
psp_upd_mque_reassign_1
```

psp_upd_mque_wrkgrp_reassign
psp_trigger_ams_event_1

Any programs or windows in an application that call these stored procedures directly preferably should be changed to call the corresponding Workflow API. In a preferred embodiment, the WfDelTasksByfroniAct() and WFDelTasksByToAct() functions (which replace the psp_del_mque_by_from_act and psp_del_mque_by_to_act_1 stored procedures used in the embodiment of the present invention described with respect to FIGS. 1-40) may be used.

2) As noted above the wijt table family may be distributed in the distributed implementation of the present invention. In this case, a AM_Svr_Db_Owner_g Application Architecture global may contain the location of the user's instance of the wijt table family. Any program or window that uses stored procedures in the wijt table family that does not use the AM_Svr_Db_Owner_g global to find the location of the correct instance of wijt should preferably be changed to use the corresponding Workflow API function. This includes programs or windows that call the following stored procedures.

psp_del_mque
psp_del_mque_agt
psp_del_mque_by_own_fr_act
psp_del_mque_by_own_fr_col_1
psp_del_mque_by_own_gr_col_1
psp_upd_mque_msg_anystatus
psp_upd_mque_msg_status
psp_upd_mque_msg_status3
psp_sel_mque_date_msg
psp_sel_mque_msginfo
psp_sel_mque_next_msg_1
psp_sel_mque_next_step_1
psp_sel_mque _prior_msg_1
psp_sel_mque_step_msg_1
psp_sel_mque_step_msg_key

3) The wact, lang, mesm, and ctlg table families may be replicated according to the teachings of the present invention. The default behavior of the existing Catalog APIs may be to locate the closest subscription copy of these table families. Thus, programs or windows that call stored procedures that modify data in the wact, lang, mesm, or ctlg table families may have to be changed to use the new versions of the Catalog APIs to find the primary copy of these table families. This includes callers of the following stored procedures.

psp_del_ibpd_udak
psp_del_obpd_udak
psp_ins_ibpd_udak
psp_ins_obpd_udak
psp_upd_colm_udak
psp_upd_colv_udak
psp_upd_ibph_udak
psp_upd_ibpl_udak

4) The application installation process may be implemented according to the teachings of the present invention to support installation of basic platform services on all the servers in the system, replication of the replicated table families, and distribution of the workflow events and desktop data.

5) Each application table family may have to provide stored procedures to enable and disable permissions on tables, views, and stored procedures in the table family.
The statements to grant permissions to objects may have to be removed from the file that creates the object.

In general, the applications must make the changes listed below in order to become distribution-enabled. An application that is distribution-enabled operates properly with the distributed implementation of the present invention and uses local copies of replicated table families rather than relying exclusively on the primary copy. The general change requirements for applications are listed below:

1) Application programs that directly read dbserver.ini (a local initialization file) to find the location of the catalog (TSDX) server (for example Query & Reporter) will have to be changed to use the platform logon algorithm to find the local server to log on to. Sample application programs in this class from the assignee of the present invention (Dun & Bradstreet Software Services, Inc.) include: the User-Defined Accounting Key (UDAK) customization application, Query & Reporter, and Management Reporter.

2) Application programs that obtain the name of the TSDX server from somewhere other than the dbserver.ini file will have to change to make sure that they are locating the subscription copy of the ctlg database on the server "closest" to their application data. Application programs, from the assignee of the present invention, in this class include the Job Scheduler, the Scheduler API, and InterQ.

3) Application programs that call the psp_del_mque_by_from_act or psp_del_mque_by_to_act_1 stored procedures (described previously with respect to FIGS. 1-40) need to be redesigned to not use these functions. Applicable workarounds may be designed in this case.

4) Application programs or windows that call Distribution Catalog APIs that change in the distributed implementation of the present invention need to be changed to call the new APIs.

Finally, in various other embodiments of the present inventions, certain simplifications may be made, For example, if the Sybase CT-Lib library for enabling clients to communicate with servers is utilized instead of DBLIB in the present invention, the need for the Network Access Table and the associated maintenance GUI can be eliminated.

What has been described above are preferred embodiments of the present invention. It is of course not possible to describe every conceivable combination of components or methodologies for purposes of describing the present invention, but one of ordinary skill in the art will recognize that many further combinations and permutations of the present invention are possible.

## Claims

1. A client-server computer system having a plurality of clients and a plurality of servers interconnected for communication, the computer system operative to control the flow of data between a plurality of users in connection with the execution of an application program containing application code by the users comprising:

   means for receiving user input in connection with the operation of an application program;
   a central storage facility and a plurality of remote storage facilities, the central storage facility containing stored data utilized by the application program;
   means for duplicatively replicating a first portion of the stored data over a plurality of the remote storage facilities;
   means for nonduplicatively distributing a second portion of the stored data over a plurality of the remote storage facilities; and
   means responsive to the receiving means for routing the data replicated and distributed among the remote storage facilities to users.

2. The computer system according to claim 1, wherein the data stored at the central storage facility and utilized by the application program includes at least a portion of the application program code.

3. The computer system according to claim 1, wherein the data stored at the central storage facility and utilized by the application program includes data operated upon by the application program.

4. The computer system according to claim 1, wherein the routing means includes a plurality of database tables, said tables collectively containing data for managing a workflow of the data amoung the plurality of users.

5. The system according to claim 4, wherein the plurality of database tables includes at least one table containing network configuration data which provides the users with information for connecting to the servers.

6. The system according to claim 4, wherein the database tables are replicated in at least two said remote storage facilities.

7. The system according to claim 4, wherein the database tables are distributed over at least two said remote storage facilities.

8. A computer readable storage medium containing program code for controlling the operation of the system defined in claim 1.

9. The system according to claim 1, wherein the means for interconnecting the central storage facility with the one or more remote storage facilities includes a direct, hardwired connection.

10. The system according to claim 1, wherein the means for interconnecting the central storage facility with the one or more remote storage facilities includes a wireless link.

11. The system according to claim 1, including means for storing the data copied from the central storage facility to the remote storage facilities in read-only form.

12. The system according to claim 1, wherein the routing means includes means for logically routing information and data among the plurality of users, based upon user operations on program applications that utilize the replicated data.

13. The system according to claim 1, wherein the data stored at the central storage facility includes application programs and data that are collectively operative to route information and data among the plurality of users, based upon operation performed by the users.

FIG. 1A

110

150

170

General
Ledger

Accounts
Payable

160

160

ARPC

SmartStream
Platform

120

120

User 1

User 2

**Advantages**
- *Easy to administer*
- *Inexpensive*
- *Currently supported*

**Disadvantages**
- *CPU, I/O and storage capacity limited*

# FIG. 1E

FIG. 1F

ADVANTAGES:
- SCALABLE PROCESSOR AND STORAGE
- LOWER COMMUNICATION OVERHEAD
- BETTER PERFORMANCE
- WILL BE SUPPORTED WITH DISTACTMAN
- SUBSCRIPTION SERVERS CAN OPERATE
  WHEN PRIMARY SERVER IS DOWN

DISADVANTAGES:
- ADDITIONAL COST OF REP SERVICE
- MORE DIFFICULT TO ADMINISTER

EP 0 793 184 A2

FIG. 1H

(p) = PRIMARY COPY OF DATA (MAINTAINABLE)

(s) = SUBSCRIPTION COPY OF DATA (READ ONLY)

EP 0 793 184 A2

FIG. 2

| File | Edit | Mail | Browser | Agents | Window | Help |

**Browser**

**Activity List - Your Activities**

305

320 — User's Drawer

325 — Activity Lists

330 — Your Activities

335 — To Do Lists

336 — New To Do List

Finance Work Group

310

Activity Security

Database Administration

Identifying Servers and Databases

Security Administrator

Security Group

Security Profile

Class Registration [English]

Workflow Workbench

To Do Category

Workgroup {EN}

Activity

300

Workgroup To Do Administrator

Column

122

FIG. 3

FIG. 4

EP 0 793 184 A2

# <u>ACTIVITY</u> - 210

# Class Registration

## Possible <u>EVENTS</u> - 220

(1) Add Class

(2) Delete Class

(3) Change Class

FIG. 5

# <u>NEXT STEP</u> - 230

(1) Next Activity/Task (250) to be performed

(2) User/Group of Users responsible for performing the Next Activity/Task (250)

(3) Message revealing to the user/group of users the nature of the Next Activity/Task (250)

FIG. 6

SmartStream 2.0

File   Edit   View   Mail   Browser   Agents   Window   Help

**Browser**

Roberto De Bolli

Activity Lists

Your Activities

Mail

330 — To Do List

Class Registration

335 — New To Do List

Rob's workgroup

240 — The Dun & Bradstreet Workgroup

**To Do List**

| | | |
|---|---|---|
| | 2 | Test reassign for sec. violation |
| [2] | 6 | Approve Class Registration |
| [1] | 1 | Registration confirmation |
| | 1 | A Workgroup has been updated |
| [12] | 1 | Select payment type for class [English] |
| | 2 | You are a new member of a Workgroup |

770   750

760

700

FIG. 7

EP 0 793 184 A2

FIG. 8

EP 0 793 184 A2

FIG. 9

EP 0 793 184 A2

# TABLE ～1000

| | Column 1 | Column 2 | Column 3 |
|---|---|---|---|
| Row 1 | | | |
| Row 2 | | | |
| Row 3 | | | |
| • | | | |
| • | | | |
| • | | | |
| • | | | |
| • | | | |
| • | | | |

1020

1010

FIG. 10

MATCH LINE TO FIG 12A    MATCH LINE TO FIG 11B

1135

**USER_ACT_LIST**

| USER_ID (FK) |
| FOLDERNO |
| ACTIVITY_ID (FK) |
| SEQ_NBR |

1110

**USER_MASTER**

| USER_ID |
| LAST_NAME |
| FIRST_NAME |
| DRAWERNO |
| TODO_FOLDERNO |
| LANGUAGE_CODE |
| LANGUAGE_DIALECT_CODE |
| HELP_LANG |
| HELP_LANG_DIALECT |
| SEC_GROUP_ID (FK) |
| ENABLED |
| AM_SUPERUSER |
| MAPI_USERID |
| MAPI_PWRD |
| NOTES |
| CHGSTAMP |

1120

**ADMN_ACT_LIST**

| USER_ID (FK) |
| ACTIVITY_ID (FK) |

1125

**USER_SECURITY**

| USER_ID (FK) |
| ACTIVITY_ID (FK) |
| SEC_ENT_1_VAL |
| SEC_ENT_2_VAL |
| DATA_ACCESS_LEVEL |
| PRINT_FLG |
| TIME_ACCESS_FLG |
| INCLUDE_EXCLUDE_FLG |
| FROM_TIME |
| TO_TIME |
| SUN |
| MON |
| TUES |
| WED |
| THUR |
| FRI |
| SAT |
| CHGSTAMP |

1160

**ACTIVITY_DATA_CTRL**

| ACTIVITY_ID (FK) |
| DATA_CTRL_ID (FK) |

1165

**DATA_CTRL**

| DATA_CTRL_ID |
| DATA_CTRL_DATA-WINDOW |
| DATA_CTRL_COL_COUNT |
| FAMILY-CODE |
| SELECT_PROCEDURE_NAME |
| UPDATE_PROCEDURE_NAME |
| INSERT_PROCEDURE_NAME |
| DELETE_PROCEDURE_NAME |
| LIST_ALL_PROCEDURE_NAME |
| LIST_ONE_PROCEDURE_NAME |
| EDIT_PROCEDURE_NAME |
| TBL_ID |

# FIG. 11A

MATCH LINE FROM FIG 11A  ⌐ MATCH LINE TO FIG 12B

1145

**ACT_MSG_MASTER**

| MSG_ID |
| --- |
| USER_DEF |
| SYS_PRIORITY |
| MSG_TEXT |
| CHGSTAMP |

1150

**ACT_MSG_VERSION**

| MSG_ID (FK) |
| --- |
| LANGUAGE_CODE |
| LANGUAGE_DIALECT_CODE |
| MSG_TEXT |
| CHGSTAMP |

1115

**USER_MSG_GROUP**

| USER_ID (FK) |
| --- |
| MSG_GROUP_ID (FK) |
| MEMBER_PRIV |
| CHGSTAMP |

1155

**GROUP_SECURITY**

| SEC_GROUP_ID (FK) |
| --- |
| ACTIVITY_ID (FK) |
| SEC_ENT_1_VAL |
| SEC_ENT_2_VAL |
| DATA_ACCESS_LEVEL |
| PRINT_FLG |
| TIME_ACCESS_FLG |
| INCLUDE_EXCLUDE_FLG |
| FROM_TIME |
| TO_TIME |
| SUN |
| MON |
| TUES |
| WED |
| THUR |
| FRI |
| SAT |
| CHGSTAMP |

1130

**SEC_GROUP_MASTER**

| SEC_GROUP_ID |
| --- |
| SEC_GROUP_DESC |
| NOTES |
| CHGSTAMP |

1140

**MESSAGE_QUEUE_**

| OWNER_ID |
| --- |
| OWNER_TYPE |
| ACTIVITY_ID (FK) |
| MSG_ID (FK) |
| CREATE_TIME |
| MSG_SEQ_NBR |
| FOLDERNO |
| NEXT_STEP_ENT_VAL |
| EVENT_ID (FK) |
| ORIG_OWNER |
| ORIG_OWNER_TYPE |
| MSG_GROUP_ID (FK) |
| FROM_USER _ID |
| FROM_ACT_ID |
| TRACK_HIST |
| MSG_PRIORITY |
| MSG_STATUS |
| COL_ID_1 |
| COL_VAL_1 |
| COL_ID_2 |
| COL_VAL_2 |
| COL_ID_3 |
| COL_VAL_3 |
| COL_ID_4 |
| COL_VAL_4 |
| COL_ID_5 |
| COL_VAL_5 |
| COL_ID_6 |
| COL_VAL_6 |
| COL_ID_7 |
| COL_VAL_7 |
| COL_ID_8 |
| COL_VAL_8 |
| COL_ID_9 |
| COL_VAL_9 |
| COL_ID_10 |
| COL_VAL_10 |

## FIG. 11B

1245

**WIJ_DRAWERS**

| DRAWERNO |
| --- |
| DESCR |
| USER_ID |

1265

**WIJ_DCMTNO**

| DCMTNO |
| --- |
| |

1275

**WIJ_ALTS**

| TEMPLATENO |
| --- |
| LABEL |
| SEQNO |
| TYPE |
| ALTS_SHORT_TEXT |

1255

**WIJ_FOLDERS**

| DRAWERNO (FK) |
| --- |
| DRAWERNO |
| DESCR |
| SEQNO |
| PARENTFOLDERNO |
| CONTAINSIND |
| FTS_SPEC |
| TEMPLATENO |
| BITMAP |
| AGENT_SETTINGS |

1250

**WIJ_LOCKKEYS**

| DRAWERNO (FK) |
| --- |
| USER_ID (FK) |
| INSERT_PRIV |
| UPDATE_PRIV |
| DELETE_PRIV |
| SELECT_PRIV |

1260

**WIJ_TEMPLATE_HEADER**

| DRAWERNO (FK) |
| --- |
| TEMPLATENO |
| NAME |
| FTS_SPEC |
| DESCR |

1270

**WIJ_SEQNO**

| DRAWERNO |
| --- |
| FOLDERNO |
| FLDSEQNO |
| TEMPLATENO |
| COMPANY_NAME |
| DATE_FORMAT |

1215

**ACTIVITY_VERSION**

| ACTIVITY_ID (FK) |
| --- |
| LANGUAGE_CODE |
| LANGUAGE_DIALECT_CODE |
| ACTIVITY_DESC |
| CHGSTAMP |

1210

**ACTIVITY_MASTER**

| ACTIVITY_ID |
| --- |
| ACTIVITY_DESC |
| EXEC_NAME |
| ACTIVITY_TYPE |
| USER_DEF |
| TRACK_HIST |
| NBR_SEC_LEVELS |
| SEC_ENT_1 |
| SEC_ENT_2 |
| CHGSTAMP |

1240

**ACTIVITY_TRIG_EVENT**

| ACTIVITY_ID (FK) |
| --- |
| EVENT_ID (FK) |
| SENT_TO_FLG |
| NOTES |

MATCH LINE FROM FIG 11A

**FIG. 12A**

MATCH LINE TO FIG 12B

FIG. 12B

MATCH LINE FROM FIG 12A    MATCH LINE FROM FIG 11B

1320 ⌐
ITEM_BROWSE_PARMS_HDR

| BROWSE_ID |
|---|
| BROWSE_NAME |
| SEARCH_COL_1 |
| SEARCH_COL_2 |
| SEARCH_COL_3 |
| DATA_OBJECT |
| PRODUCT_FAMIILY |
| COLUMN_COUNT |
| SELECT_COUNT |

1310 ⌐
MESSAGE_QUEUE_HIST

| OWNER_ID |
|---|
| OWNER_TYPE |
| ACTIVITY_ID |
| MSG_ID |
| DELETE_TIME |
| CREATE_TIME |
| NEXT_STEP_ENT_VAL |
| EVENT_ID |
| ORIG_OWNER |
| ORIG_OWNER_TYPE |
| MSG_GROUP_ID |
| FROM_USER_ID |
| FROM_ACT_ID |
| MSG_PRIORITY |
| MSG_STATUS |
| COL_ID_1 |
| COL_VAL_1 |
| COL_ID_2 |
| COL_VAL_2 |
| COL_ID_3 |
| COL_VAL_3 |
| COL_ID_4 |
| COL_VAL_4 |
| COL_ID_5 |
| COL_VAL_5 |
| COL_ID_6 |
| COL_VAL_6 |
| COL_ID_7 |
| COL_VAL_7 |
| COL_ID_8 |
| COL_VAL_8 |
| COL_ID_9 |
| COL_VAL_9 |
| COL_ID_10 |
| COL_VAL_10 |

1325 ⌐
ITEM_BROWSE_PARMS_DTL

| BROWSE_ID (FK) |
|---|
| COLUMN_NBR |
| COL_ID |
| COL_LENGTH |
| RETURN_CODE |
| KEY_FOR_MORE |
| INCL_TIME |

1350 ⌐
AVAIL_NBR_COL

| COL_ID |
|---|
| QUAL1_COL_ID |
| QUAL2_COL_ID |
| SEC_ENT_COL_ID |
| DIST_ENT_COL_ID |

1335 ⌐
COL_TYPES

| COL_TYPE |
|---|
| COL_TYPE_NAME |

1360 ⌐
SAMPLE_CLASS

| CLASS |
|---|
| DESCRIPTION |
| COST_UNDERGRAD |
| COST_GRADUATE |
| COST_AUDIT |
| INSTRUCTOR |

1330 ⌐
COLUMN_MASTER

| COL_ID |
|---|
| COL_NAME |
| COL_LABEL |
| COL_TYPE (FK) |
| COL_LENGTH |
| EVENT_COL_NBR |
| USER_DEF |
| NOTES |
| CHGSTAMP |

1365 ⌐
SAMPLE_REG

| CLASS (FK) |
|---|
| STUDENT |
| PAYMENT_METHOD |
| CREDIT |
| APPROVED |

1340 ⌐
COLUMN_VERSION

| COL_ID (FK) |
|---|
| LANGUAGE_CODE |
| LANGUAGE_DIALECT_CODE |
| COL_LABEL |
| CHGSTAMP |

# FIG. 13

**FIG. 14**

1415 — TBL_FAM_MAST_1

| fortam_Id |
|---|
| fortam_desc |
| nbr_dist_ent |
| dist_ent_1 |
| dist_ent_2 |
| notes |

1410 — TBL_MASTER_1

| fol_Id |
|---|
| fol_Id (FK) |
| dist_ent_1_val (FK) |
| dist_ent_2_val (FK) |
| fortam_Id (FX) |
| fol_name |
| fol_type |
| owner_app |
| notes |

1455 — VIBN_TBL_XREF_1

| view_Id |
|---|
| fol_Id (FK) |
| fol_Id (FK) |
| dist_ent_1_val (FK) |
| dist_ent_2_val (FK) |

1425 — APPL_TBLFAM_1

| appl_Id |
|---|
| fortam_Id (FK) |

1430 — DIST_TBL_DB_XREF_1

| fol_Id |
|---|
| dist_ent_1_val |
| dist_ent_2_val |
| server_Id |
| db_name |

1420 — TBL_SVR_DB_XREF_1

| fortam_Id (FK) |
|---|
| dist_ent_1_val |
| dist_ent_2_val |
| server_Id |
| db_name |
| sp_owner_name |

1460 — APPL_USER_GROUP_1

| appl_Id (FK) |
|---|
| user_or_group_Id |
| type_n_g |

1435 — STORED_PROC_TBL_XREF_1

| file_Id (FK) |
|---|
| fol_Id (FK) |
| fol_Id (FK) |
| dist_ent_1_val (FK) |
| dist_ent_2_val (FK) |

1445 — TRIGGER_TBL_XREF_1

| file_Id (FK) |
|---|
| fol_Id (FK) |
| fol_Id (FK) |
| dist_ent_1_val (FK) |
| dist_ent_2_val (FK) |

1465 — APPL_MASTER_1

| appl_Id |
|---|
| appl_name |
| last_fig |
| appl_version |
| notes |

1440 — STORED_PROC_XREF_1

| file_Id |
|---|
| proc_name |
| gen_dt |
| notes |

1450 — TRIGGER_XREF_1

| file_Id |
|---|
| triggering_fol |
| trigger_name |
| gen_dt |
| notes |

EP 0 793 184 A2

FIG. 14A

**st___1_proc_xref_1**
file_id
---
proc_name
gen_dt
notes
tfam_gen_seq
udak_flg

uses

**stored_proc_tbl_xref_1**
file_id (FK)
tbl_id (FK)

**trigger_tbl_xref_1**
file_id (FK)
tbl_id (FK)

uses

**trigger_xref_1**
file_id
---
triggering_tbl
trigger_name
gen_dt
notes
udak_flg

is used by    is used by

**tbl_colm_1**
tbl_id (FK)
column_nbr
---
col_id
primary_key
chgstamp

contains

**tbl_master_1**
tbl_id
---
tbl_name
tblfam_id (FK)
tbl_type
owner_app (FK)
notes
udak_flg
user_def
chgstamp

**disl_tbl_db_xref_1**
tbl_id (FK)
dist_ent_1_val
dist_ent_2_val
---
db_name

is located by

tbl_type

s part of

**view_tbl_xref_1**
view_id (FK)
tbl_id (FK)

**bl_fam_lang_1**
tblfam_id (FK)
LANGUAGE_CODE
LANGUAGE_DIALECT_CODE
---
tblfam_desc
chgstamp

is translated by    includes

**appl_lang_1**
appl_id (FK)
LANGUAGE_CODE
LANGUAGE_DIALECT_CODE
---
appl_name
chgstamp

**tbl_fam_mast_1**
tblfam_id
---
tblfam_desc
arpc_flag
nbr_dist_ent
dist_ent_1
dist_ent_2
notes
user_def
chgstamp

is used by

**app_tblfam_1**
appl_id (FK)
tblfam_id (FK)

uses

owns    is translated by

**appl_master_1**
appl_id
---
appl_name
inst_flg
notes
user_def
chgstamp

is located by

is associated with

**tbl_svr_db_xref_1**
from_server_id (FK)
tblfam_id (FK)
dist_ent_1_val
dist_ent_2_val
---
prim_sub_ind
server_id (FK)
db_name
sp_owner_name

goes to

is targeted by

**WIJ_SERVERS**
server_id
---
server_no

**appl_user_group_1**
appl_id (FK)
user_or_group_id
type_u_g

62

WIJ_SERVERNO

| server_no |
| --- |

| next_server_nbr |
| --- |
| server_seq_nbr |

| desktop_seq_nbr |
| --- |
| key_id |

| seq_nbr |
| --- |

WIJ_FOLDERDCMTS_1

| DCMTNO |
| --- |

| FOLDERNO (FK) |
| --- |
| STATUS |
| SEQNO |
| ATTACHMENT |
| TEMPLATENO |
| FTS_VALUES |

WIJ_DRAWERS_1

| DRAWERNO |
| --- |

| DESCR |
| --- |
| USER_ID |

WIJ_LOCKKEYS_1

| DRAWERNO (FK) |
| --- |
| USER_ID (FK) |

| INSERT_PRIV |
| --- |
| UPDATE_PRIV |
| DELETE_PRIV |
| SELECT_PRIV |

WIJ_DCMTS_1

| DCMTNO (FK) |
| --- |
| SEQNO |

| DTM |
| --- |
| DCMTTEXT |

WIJ_FOLDERS_1

| FOLDERNO |
| --- |

| DRAWERNO (FK) |
| --- |
| DESCR |
| SEQNO |
| PARENTFOLDERNO |
| CONTAINSIND |
| FTS_SPEC |
| TEMPLATENO |
| BITMAP |
| AGENT_SETTINGS |

user_config

| user_id (FK) |
| --- |

| enabled |
| --- |
| mapi_userid |
| mapi_pwrd |
| DRAWERNO (FK) |
| todo_folderno (FK) |
| network_id |
| next_seq_nbr |
| last_seq_nbr |
| chgstamp |

network_access

| network_id |
| --- |
| server_id |

| connection_string |
| --- |
| user_def |
| chgstamp |

msg_group_config

| msg_group_id (FK) |
| --- |

| todo_folderno (FK) |
| --- |
| chgstamp |

user_act_list_1

| activity_id (FK) |
| --- |
| user_id (FK) |
| FOLDERNO (FK) |

| seq_nbr |
| --- |

msg_group_master

| msg_group_id |
| --- |

| wijt_location |
| --- |
| msg_group_desc |
| user_def |
| chgstamp |

user_msg_group

| user_id (FK) |
| --- |
| msg_group_id (FK) |

| member_priv |
| --- |
| chgstamp |

roles

| role_name |
| --- |
| role_seq_nbr |

| notes |
| --- |
| owner_type |
| owner_id |
| chgstamp |

role_conditions

| role_seq_nbr (FK) |
| --- |
| expression_seq_nbr |
| role_name (FK) |

| operator_id |
| --- |
| parameter_value |
| chgstamp |

FIG.14B

**server_temp_password**

server_id
user_id (FK)

password
chgstamp

**mail_message**

seq_nbr

user_id
mail_addr
attachment_name

**mail_message_short_message**

seq_nbr (FK)
text_seq_nbr

msg_text

**mail_message_attachment**

seq_nbr (FK)
attach_seq_nbr

attach_text

**sec_group_master**

sec_group_id

sec_group_desc
notes
chgstamp

**user_master_1**

user_id

wijt_location
last_name
first_name
LANGUAGE_CODE
LANGUAGE_DIALECT_CODE
help_lang
help_lang_dialect
sec_group_id (FK)
am_superuser
notes
user_def
chgstamp
mail_todo_notif_code

**mail_addr**

mail_name

mail_addr
user_id (FK)
chgstamp

**substitutes**

user_id (FK)

substitute_owner_type
substitute_owner_id
active_ind
notes
chgstamp

**user_security**

user_id (FK)
sec_ent_1_val
sec_ent_2_val
activity_id (FK)

data_access_level
print_flg
include_exclude_flg
time_access_flg
from_time
to_time
sun
mon
tues
wed
thur
fri
sat
chgstamp

**group_security**

sec_group_id (FK)
sec_ent_1_val
sec_ent_2_val
activity_id (FK)

data_access_level
print_flg
time_access_flg
include_exclude_flg
from_time
to_time
sun
mon
tues
wed
thur
fri
sat
chgstamp

FIG.
14C

64

**next_step_options**

| |
|---|
| msg_id (FK) |
| next_step_ent_val |
| entity_seq_nbr |
| user_id (FK) |
| msg_group_id (FK) |
| enabled |
| track_hist |
| assign_to |
| chgstamp |
| structure_function_type |
| structure_group_name |
| structure_name |
| col_id |
| layer_name |
| default_type |

**event_lang_1**

| |
|---|
| event_id (FK) |
| LANGUAGE_CODE |
| LANGUAGE_DIALECT_CODE |
| event_desc |
| chgstamp |

**next_step_options_conditions**

| |
|---|
| msg_id (FK) |
| next_step_ent_val (FK) |
| entity_seq_nbr (FK) |
| expression_seq_nbr |
| operator_id |
| parameter_value |
| chgstamp |

**event_columns**

| |
|---|
| event_id (FK) |
| column_nbr |
| col_id |
| key_nbr |

**act_msg_version**

| |
|---|
| msg_id (FK) |
| LANGUAGE_CODE |
| LANGUAGE_DIALECT_CODE |
| msg_text |
| chgstamp |

**next_step**

| |
|---|
| msg_id |
| event_id (FK) |
| master_msg_id |
| step_seq_nbr |
| enabled |
| user_def |
| activity_id (FK) |
| no_dup_msg |
| sys_priority |
| msg_text |
| chgstamp |
| user_reassign_allowed |
| marked_for_delete_ind |
| apprvl_ind |

**event_master**

| |
|---|
| event_id |
| event_desc |
| user_def |
| enabled |
| next_step_ent |
| notes |
| chgstamp |

**next_step_conditions**

| |
|---|
| msg_id (FK) |
| expression_seq_nbr |
| operator_id |
| parameter_value |
| chgstamp |

**next_step_parameters**

| |
|---|
| msg_id (FK) |
| col_id |
| destination_col_nbr |
| destination_col_id |
| display_nbr |
| chgstamp |

**message_queue_1**

| |
|---|
| server_name |
| seq_nbr |
| msg_id (FK) |
| owner_id |
| owner_type |
| create_time |
| activity_id (FK) |
| FOLDERNO |
| next_step_ent_val |
| msg_seq_nbr |
| orig_owner |
| orig_owner_type |
| msg_group_id (FK) |
| event_id |
| from_user_id |
| from_act_id |
| track_hist |
| msg_priority |
| msg_status |
| apprvl_ind |
| next_reassign_seq_nbr |
| complete_time |
| prev_server_name |
| prev_seq_nbr |

**message_queue_hist_1**

| |
|---|
| server_name (FK) |
| seq_nbr (FK) |
| owner_id |
| owner_type |
| create_time |
| activity_id |
| msg_id |
| next_step_ent_val |
| event_id |
| orig_owner |
| orig_owner_type |
| msg_group_id |
| from_user_id |
| from_act_id |
| msg_priority |
| msg_status |
| apprvl_ind |
| next_reassign_seq_nbr |
| complete_time |
| prev_server_name |
| prev_seq_nbr |
| delete_time |

**activity_trig_event**

| |
|---|
| event_id (FK) |
| activity_id (FK) |
| send_to_flg |
| notes |

**message_queue_seq_nbr**

| |
|---|
| one |
| last_seq_nbr |

FIG. 14D

65

**admn_act_list_1**

user_id (FK)
activity_id (FK)

**apprvl_list_detail**

apprvl_list_id (FK)
apprvl_activity_id (FK)
apprvl_level
apprvr_id
apprvr_type_code

structure_function_type
structure_group_name
structure_name
col_id
layer_name
default_type
chgstamp

**apprvl_enabled_activity**

activity_id (FK)
event_id (FK)

task_detail_apprvl_id
apprvl_activity_id
reapprvl_event_id
chgstamp

**activity_master_1**

activity_id

activity_desc
exec_name
activity_type
user_def
track_hist
nbr_sec_levels
sec_ent_1
sec_ent_2
chgstamp
window_style
user_exit
notes

**activity_input_values**

destination_col_nbr
activity_id (FK)
destination_col_id

key_flag
primary_flag
chgstamp

**apprvl_list**

apprvl_list_id
apprvl_activity_id

notes
chgstamp

**DATA_CTRL**

DATA_CTRL_ID

DATA_CTRL_DATA_WINDOW
DATA_CTRL_COL_COUNT
FAMILY_CODE
SELECT_PROCEDURE_NAME
UPDATE_PROCEDURE_NAME
INSERT_PROCEDURE_NAME
DELETE_PROCEDURE_NAME
LIST_ALL_PROCEDURE_NAME
LIST_ONE_PROCEDURE_NAME
EDIT_PROCEDURE_NAME
tbl_id

**ACTIVITY_DATA_CTRL**

activity_id (FK)
DATA_CTRL_ID (FK)

FIG. 14E

**me  .ge_queue_hist_values**

server_name (FK)
col_id
seq_nbr (FK)

col_val
key_nbr
destination_col_nbr
destination_col_id
display_nbr

**reassign_hist**

server_name (FK)
seq_nbr (FK)
reassign_seq_nbr

reassign_type
old_owner
old_owner_type
new_owner
new_owner_type
reassign_user_id
reassign_server
reassign_time

**message_queue_values**

server_name (FK)
seq_nbr (FK)
col_id

col_val
key_nbr
destination_col_nbr
destination_col_id
display_nbr

**column_validation_1**

activity
val_entity
col_id (FK)

tblfam_id
validation_proc
item_browse
list_procedure
val_msg_id

**column_master**

col_id

col_name
col_label
col_type (FK)
col_length
event_col_nbr
user_def
notes
col_case
chgstamp

**column_code_tables**

col_id (FK)
code_value
language_code
language_dialect_code

display_value
chgstamp

**avail_nbr_col**

col_id (FK)

qual1_col_id
qual2_col_id
sec_ent_col_id
dist_ent_col_id

**open_browse_parms_dtl_1**

open_browse_id (FK)
column_nbr

col_id (FK)
col_length
values_type
values_object
values_column
incl_time
chgstamp
user_def
version_tbl_id

**col_types**

col_type

col_type_name

**column_version_1**

col_id (FK)
LANGUAGE_CODE
LANGUAGE_DIALECT_CODE

col_label
chgstamp

FIG. 14F

vity_version_1

LANGUAGE_CODE
LANGUAGE_DIALECT_CODE
activity_id (FK)

activity_desc
chgstamp

comment_parms_1

comment_id

comment_name
keycount
col_id_1
col_id_2
col_id_3
col_id_4
col_id_5
col_id_6
col_id_7
col_id_8
col_id_9
col_id_10
col_id_11
col_id_12
col_id_13
col_id_14
col_id_15
col_id_16
product_family
user_def
chgstamp
all_comm_type

comment_version_1

comment_id (FK)
LANGUAGE_CODE
LANGUAGE_DIALECT_CODE

comment_name
chgstamp

item_browse_parms_dtl_1

browse_id (FK)
column_nbr

col_id (FK)
col_length
return_code
key_for_more
incl_time
user_def
chgstamp

item_browse_parms_hdr_1

browse_id

browse_name
search_col_1
search_col_2
search_col_3
data_object
product_family
column_count
select_count
user_def
chgstamp

open_browse_parms_hdr_1

open_browse_id

open_browse_name
set_rowcount
clustered_index_ind
num_static_keys
user_def
chgstamp

item_browse_parms_hdr_lang_1

browse_id (FK)
LANGUAGE_CODE
LANGUAGE_DIALECT_CODE

browse_name
chgstamp

FIG. 146

68

1160   1165

1155 — User/Group Security          Activity Data Ctrl.          Admin_Act_list   1120
                         1125
1135 — User_Act_List              Activity Master   1210

       Security           1130
1125 — (User/Group Master)        Activity_Trig_Events   1240

1120 — Admin. Act list                                        1215

1110 — User_Master                                    Activity Version

1285 — WIJ_DOMTS_READ              Next Step
                         1220              1225
1250 — WIJ LOCKEYS                Event Master

1115 — User_Msg_Group                                        1230

       1330                                    Next Step Options
       Column
                                              1150
                                              Int'l Text
              1140
       Message Queue                          1145
                                    ACT_MSG_MASTER
              1320
       History                    1235
                         MSG_GROUP_MASTER

1340 —
       Int'l Text

FIG. 15

SmartStream 2.0

| File | Edit | Mail | Browser | Agents | Window | Help |

New                          Ctrl + N
Open
Close
Save                         Ctrl + S
Save As Text
Print                        Ctrl + P
Print Setup

Preferences

Server Log On
Change Database Password...   380
Exit                         Alt+ F4

☐  Server Administration

☐  Structures

☐  Workflow

📁  Mail

📁  To Do list

📁  Working To Do List

FIG. 16A

FIG. 16B

SmartStream 2.0

File    Edit    Mail    Browser    Agents    Window    Help

Browser

305

1670

Server Administration

Server Administration

1680

Management Reporter
Product Support
Query & Reporting
Sample Class Registration
Scheduler
Security Group & User
Security of Activity
Server Administration
Structure
Workgroup
Activities To Do List

Mail

1670

To Do List

FIG. 16C

SmartStream 2.0

File   Edit   Mail   **Browser**   Agents   Window   Help

Browser

DBS Home Drawer

Activity Lists

Copy...
Move...
Link...
Rename...
Delete...
Collapse All

Drawer Privileges...

Customize Desktop...
Save Desktop New
Customize Activity List...

InterQ
Managem
Product Support
Query & Reporting
Sample Class Registration
Scheduler
Security Group & User
Security of Activity
Server Administration
Structure
Workgroup
Activities I Do A Lot

1680

Mail

FIG. 16D

Customize Activity Lists

Source List

All Categories

Files By Category

383

Activities List\Activities I Do A Lot:

All Activities:

Destination List

Activity

Activity Security

Activity Events

Class Payment

1690

Class Registration

Column

Column Association

Country Selection

Database Administrator

Class Registration

FIG. 16E

New Browser Objects

Location is: Activity Lists    381

Selected Object Type
○ Folder
○ Mail Document List
○ Activity List
◉ To Do List
○ Workgroup To Do List
○ Agent Rule List
○ Shareable Drawer

Selected Object Type
☐ DBS Home Drawer
☐ Activity List
Mail
To Do Lists
Working To Do List

To Do List Name:
My Urgent To Do Tasks

OK    CANCEL    HELP

FIG. 16F

FIG. 16G

FIG. 16H

Browser window:
- DBS Home Drawer
  - Activity Lists
  - Mail
  - To Do List
    - New To Do List
    - My Urgent To Do Tasks
  - Workgroup To Do Lists
    - Class Registration
    - DBS Workgroup
    - Product Request

1685

310

SmartStream 2.0

File   Edit   Mail   Browser   Agents   Window   Help

To Do Category - New To Do List

9    Activity Category (s) have been updated
[2]  17   Category Added.  Check Configuration

[1]  1    Select payment type for classes
     1    You are a new member of a workgroup
     6    You are now a Security Administrator

750

770

384

EP 0 793 184 A2

EP 0 793 184 A2

SmartStream 2.0

File    Edit    Mail    Browser    Agents    Window    Help

### Browser

DBS Home Drawer

Activity Lists

Mail

To Do List

New To Do List

My Urgent To Do Tasks

Workgroup To Do Lists

Class Registration

DBS Workgroup

Product Request

_310_

Copy...
Move
Link...
Rename...        _382_
Delete...

Collapse All

Drawer Privileges...

Customize Desktop...
Save Desktop New
Customize Activity List...

- New To Do List

ory (s) have been

ed.  Check Configuration

nt type for classes

v member of a workgroup

a Security Administrator

FIG. 16I

FIG. 16J

EP 0 793 184 A2

## SmartStream 2.0

| File | Edit | Mail | Browser | Agents | Window | Help |

### Browser

DBS Home Drawer

Activity Lists

Mail

To Do List

New To Do List

1680 —— My Urgent To Do Tasks

Workgroup To Do Lists

Class Registration

DBS Workgroup

Product Request

### To Do Category - New To Do List

#### To Do Category - My Urgent To Do Task

[1]

[2]

1    You are a new member of a
Workgroup

770

750

384

FIG. 16k

## SmartStream 2.0

| File | Edit | Mail | Browser | Agents | Window | Help |

**Browser**

### To Do Detail - New To Do List

[1] 1 Select payment type for classes

Class Payment

385

| | |
|---|---|
| Medium ET 1201 | DBS |
| Medium SC101 | DBS |

Workgroup: REGISTRATION     Statue: New
From: DBS     From Activity: Class Registration
Original Owner: DBS    [user]    Create Time: Nov 24 1993 10:25 AM

FIG. 16L

SmartStream 2.0

| File | Edit | Mail | Browser | Agents | Window | Help |

Copy...
Move...
Link...
Rename...
Delete...
Collapse All

Drawer Privileges...

Customize Desktop...
Save Desktop New
Customize Activity List...

Browser

To Do

[1] 1 Select payment type for classe

Class Payment

| | Medium ET 1201 | | DBS |
| ✓ | Medium SC101 | | DBS |

Workgroup: REGISTRATION    Statue: New
From: DBS                        From Activity: Class Registration
Original Owner: DBS    [user] Create Time: Nov 24 1993 10:25 AM

FIG. 16M

FIG. 16N

## SmartStream 2.0

File    Edit    Mail    Browser    Agents    Window    Help

Browser

### To Do Detail - New To Do List

[1] 1 Select payment type for classes

Class Payment

358

| ✓ | Medium SC101 | DBS |
|---|---|---|

Workgroup:                    Statue:
From:                    From Activity:
Original Owner:                    Create Time:

FIG. 16O

FIG. 16P

EP 0 793 184 A2

| SmartStream 2.0 |
| --- |

File    Edit    Mail    Browser    Agents    Window    Help

**Browser**

305 — ☐ DBS Home Drawer
320 — Activity Lists

1711 — ☐ Management Reporter
1712 — ☐ Product Support
       ☐ Query & Reporting
1710 — ☐ Sample Class Registration
       ☐ Scheduler
       ☐ Security Group & User
       ☐ Security of Activity
       ☐ Server Administration
       ☐ Structure
       ☐ Workflow

1720 — Mail

330 — To Do List    310

335 — ☐ New To Do List

**Activity List Sample Class**

Class Registration
Class Payment
Registration Approved
Activity                    1750
              1760

FIG. 17A

EP 0 793 184 A2

SmartStream 2.0

Class Registration

Class    | ET201 |        Student: DBS DBS ————————— 430

420 ——  Class Description : Ethics in the Workplace
                                                    ——— 430

┌─────── Credit Status ───────┐
│                             │
│   ◯   Undergraduate         │
│                             │
430 —  ◯   Audit              │
│   ◉   Graduate              │
│                             │
└─────────────────────────────┘

<u>1700</u>

FIG. 17D

**SmartStream 2.0**

| File | Edit | Options | Setting | Window | Help |
|------|------|---------|---------|--------|------|

Zoom

Browse...
Item Comments...
Comments...

Class  ET                         DBS        2250

Available Number...

| Next Task | Ctrl +T |
| Previous Task | |

Class  Next Step    Ctrl +A   Workplace

Set Task Priority

| Low | Ctrl + L |
| Medium | Ctrl + D |
| High | Crtl + H |

Display Current Task
Delete Current Task

Views
Actions

○  
◉  Audit
○  Graduate

FIG. 17C

1790

Application Program

1791

"Format" Stored Procedure

1792

Application Program

1793

"Insert" Stored Procedure

1794

Application Program

1795

Success?

No → Return To User 1796

Yes

"Trigger Event" Function Stored Procedure 1797

FIG. 17D

**FIG. 18**

## SmartStream 2.0

File    Edit    Options  Setting    Window    Help

### Class Registration

Class  [ SC101 ]        Student: DBS DBS

Class Description : Security Administration

┌─ Credit Status ──────────────┐
│   ○   Undergraduate          │
│   ◉   Audit                  │
│   ○   Graduate               │
└──────────────────────────────┘

1950

FIG. 19

**SmartStream 2.0**

File    Edit    Mail    Browser    Agents    Window    Help

**Browser**

☐ DBS Home Drawer

320 — 🗁 Activity  Lists

☐ Management Reporter
☐ Product Support
☐ Query & Reporting
☐ Sample Class Registration
☐ Scheduler
☐ Security Group & User
☐ Security of Activity
☐ Server Administration
☐ Structure
☐ Workflow

🗁 Mail

330 — 🗁 To Do List                    310

335 — ☐ New To Do List

**To Do Category - New To Do List**

7    Activity Category (s) have been updated

[2]    9    Category Added.  Check Configuration

[1]    1    Select payment type for classes
       1    You are a new member of a workgroup
       6    You are now a Security Administrator

       760    770                    750

                              384

FIG. 20

FIG. 21

EP 0 793 184 A2

| SmartStream 2.0 | |
|---|---|

| File | Edit | Mail | Browser | Agents | Window | Help |
|---|---|---|---|---|---|---|

## Browser

☐ DBS Home Drawer

📂 Activity Lists

☐ Inter Q
☐ Management Reporter
☐ Product Support
☐ Query & Reporting
☐ Sample Class Registration
☐ Scheduler
☐ Security Group & User
☐ Security of Activity
☐ Server Administration
☐ Structure
☐ Workflow

📂 Mail

📂 To Do List

## To Do Category - New To Do List

9  Activity Category (s) have been updated

[2]  17  Category Added.  Check Configuration

[1]  1  Select payment type for classes

1  You are a new member of a workgroup

6  You are now a Security Administrator

FIG. 22A

EP 0 793 184 A2

| Activity Windows | | | | | |
|---|---|---|---|---|---|
| File | Edit | Options | Setting | Window | Help |

### Class Registration

Class:  ET 201

Student:  DBS

Class Description :  Ethics in the Workplace

Credit Status:  Graduate

Charges for this Class:  $40.00

Payment Type:
- ◯ Cash
- ◉ Scholarship
- ◯ Waiver
- ◯ Payment Not Selected

<u>2400</u>

FIG. 22B

Activity Window

| File | Edit | Options | Setting | Window | Help |

Zoom

Browse...

Item Comments...

Comments...

Class    ET                    DBS

Available Number...

Class        Next Task        Ctrl +T   Workplace

Previous Task

Next Step      Ctrl + A

2260

Set Task Priority

Display Current Task

Delete Current Task

Views

Actions

2250

1950

FIG. 22C

EP 0 793 184 A2

2310
GET LIST OF POSSIBLE
NEXT STEPS

2320
NUMBER OF NEXT STEPS — NONE FOUND

2315
EXIT

ONLY ONE NEXT STEP

MORE THAN ONE

2330
PRESENT LIST OF NEXT
STEP(S) TO THE USER

2340
NUMBER OF NEXT STEPS
SELECTED BY THE USER — NONE SELECTED

2345
EXIT

ONE OR MORE SELECTED

2350
GET THE TASK, COL ID
COL VAL, AND FOLDER

2360
YES — ANOTHER TASK
SELECTED? — NO

2370
PASS VALUES BACK TO
APPLICATION PROGRAM
AND EXIT

FIG. 23

EP 0 793 184 A2

```
┌──────────────────────────────────────────────────────────────────────┐
│ [ - ]                    Activity Window                        [ + ]  │
├──────────────────────────────────────────────────────────────────────┤
│        File     Edit    Options  Setting    Window     Help            │
├──────────────────────────────────────────────────────────────────────┤
│ ┌──────────────────────────────────────────────────────────────────┐  │
│ │ [ - ]                Class Payment [SC101]                  [ + ]  │  │
│ ├──────────────────────────────────────────────────────────────────┤  │
│ │                                                                    │  │
│ │           Class:          ┌─────────┐                              │  │
│ │                           │ SC101   │                              │  │
│ │                           └─────────┘                              │  │
│ │          Student:         ┌─────────┐                              │  │
│ │                           │  DBS    │                              │  │
│ │                           └─────────┘                              │  │
│ │     Class Description :      Security Administration               │  │
│ │                                                                    │  │
│ │        Credit Status:       Audit                                  │  │
│ │                                                                    │  │
│ │  Charges for this Class:    $50.00                                 │  │
│ │                                                                    │  │
│ │                           ┌──────────────────────────┐             │  │
│ │      Payment Type:        │  ●  Cash                 │             │  │
│ │                           │                          │             │  │
│ │                           │  ○  Scholarship          │             │  │
│ │                           │                          │             │  │
│ │                           │  ○  Waiver               │             │  │
│ │                           │                          │             │  │
│ │                           │  ○  Payment Not          │             │  │
│ │                           │     Selected             │             │  │
│ │                           └──────────────────────────┘             │  │
│ │                                                                    │  │
│ │                              2400                                  │  │
│ │                                                                    │  │
│ ├──────────────────────────────────────────────────────────────────┤  │
│ │ [◄ ]                                                        [ ►]   │  │
│ └──────────────────────────────────────────────────────────────────┘  │
└──────────────────────────────────────────────────────────────────────┘
```

FIG. 24

| File | Edit | Options | Setting | Window | Help |
|------|------|---------|---------|--------|------|

SC101]

Zoom

Browse...
Item Comments...
Comments...

Class:

2560

Available Number...

Studer    Next Task    Ctrl + T

Previous Task

Class Description    Next Step    Ctrl +A    ration

Set Task Priority

Credit Sta    Display Current Task

Charges for this Cl    Delete Current Task    2250

Views

Payment T    Actions

○ Scholarship

○ Waiver

○ Payment Not
   Selected

FIG. 25

EP 0 793 184 A2

99

**FIG. 26A**

**FROM FIG 26A**

2660

FIND THE "NEXT TASK" →→ NOT FOUND

2665

EXIT

FOUND

2670

YES ←— WORKGROUP TASK? —→ NO

2685

UPDATE TASK STATUS
TO BE VIEWED

2675

REASIGN TASK TO USER

NOT
FAILED

2690

GET ALL TASK VALUES

NOT
FAILED

FAILED

FAILED

2699

PASS VALUE BACK TO APPLI-
CATION PROGRAM AND EXIT

2680

TAKEN - TRY AGAIN

# FIG. 26B

EP 0 793 184 A2

| Activity Window |
|---|

File    Edit    Options    Setting    Window    Help

## Class Payment [ET201]

Class:              | ET201 |

Student:            | DBS |

Class Description :        Ethics in the Workplace

Credit Status:             Graduate

Charges for this Class:    $40.00

Payment Type:

⊙ Cash

○ Scholarship

○ Waiver

● Payment Not
  Selected

2400

FIG. 27

SmartStream 2.0

File    Edit    Mail    Browser    Agents    Window    Help

Browser

DBS Home Drawer

Activity Lists

Inter Q
Management Reporter
Product Support
Query & Reporting
Sample Class Registration
Scheduler
Security Group & User
Security of Activity
Server Administration
Structure
Workflow

Mail

To Do List

To Do Category - New To Do List

    7   Activity Category (s) have been updated

[2]  15  Category Added.  Check Configuration

[1]   8     Select payment type for classes
      1     You are a new member of a workgroup
      6     You are now a Security Administrator

384

FIG. 28

Activity Window

File    Edit    Mail    Browser    Agents    Window    Help

Workflow - Workbench [pam 0500]

Activity: | pam 0500 |    Class Registration   2900

pam 0500: Class Registration

pamsan2ine: User registration for class

FIG. 29

**Activity Window**

File　　Edit　　Mail　　Browser　　Agents　　Window　　Help

**Workflow - Workbench [pam 0500]**

Activity: | pam 0500 |　　　　Class Registration　　2900

pam 0500: Class Registration

pansan2ine: U | Zoom To Activity　　　　3000
Zoom to Event
Zoom To Activity and Events
Zoom to Step and Assignments

FIG. 30

## Activity Window

| File | Edit | Mail | Browser | Agents | Window | Help |
|------|------|------|---------|--------|--------|------|

### Step and Assignment - [Untitled]

Event: pamsan2ine          User registration for class

Next Step: [                    ]          3100

To Do Category: [                    ]

☒ Enabled          ☐ User Defined

☐ No Duplicate Tasks

Step Entity ID: [                              ]

Assignment

Assigned To: [                    ]          ☒ Enabled

User: [                    ]          ☐ Track History

Workgroup: [                    ]          ☒ Assignment over

FIG. 31

Activity Window

| File | Edit | Mail | Browser | Agents | Window | Help |

Step and Assignment - [pamsan2ine] [pam0510]

Event: pamsan2ine          User registration for class

Next Step: pam0510          3100

To Do Category:

☒ Enabled          ☐ User Defined

☐ No Duplicate Tasks

Step Entity ID:

**Assignment**

Assigned To:          ☒ Enabled

User:          ☐ Track History

Workgroup:          ☒ Assignment over

FIG. 32

EP 0 793 184 A2

Activity Window

File    Edit    Options    Browser    Settings    Window    Help

Zoom

Ste| Browse...                          |n2ine] [pam0510]

Item Comments...

Ev| Comments...                    User registration for class

Available Number...

Next St| Next Task        Ctrl +T

Previous Task            2250

To Do Categ| Next Step      Ctrl +A

Set Task Priority

Display Current Task         User Defined

Delete Current Task

Views

Actions

Step Entry ID:

Assignment

Assigned To: [                    ]          ⊠ Enabled

User: [                    ]          ☐ Track History

Workgroup: [                    ]          ⊠ Assignment over

FIG. 33

**Activity Window**

File   Edit   Options   Browser   Settings   Window   Help

**To Do Category - pam00025**

To Do Category: | pam00025

System Priority: | 100

Default Category Test: | Select payment type for class

☐ User Defined

3400

FIG. 34

EP 0 793 184 A2

EP 0 793 184 A2

**Activity Window**

File    Edit    Mail    Browser    Agents    Window    Help

**Step and Assignment -[pamsan2ine] [pam0510]**

Event: | pamsan2ine | User registration for class

Next Step: | pam0510 | Class Payment

To Do Category: | pam00025 | Select payment type for class

☒ Enabled        ☐ User Defined

☒ No Duplicate Task

Step Entity ID: | |

Assignment

Assigned To: | Sender |    ☒ Enabled

User: | |    ☐ Track History

Workgroup: | Registration |    ☒ Assignment Over

FIG. 35

**Activity Window**

File     Edit     Mail     Browser     Agents     Window     Help

---

**Workflow Workbench - pam0500**

Activity | pam0500 | Class Registration [English]

☐ pam 0500: Class Registration [English]       <u>2900</u>

☐ pamsan2ine: User registration for class. [English]

☐ pam 0510: Class Payment [English] [Select payment type for class. [English]

☐ Assign to Workgroup: REGISTRATION

☐ pamsan2ine: Class payment type selected

☐ pam0520: Registration Approval [Approval class Registration]

☐ Assign To User RSD

☐ pamsan2ine: Class registration approved

☐ pam0210 To Do Information [EN] [Registration Continuation}

☐ Assign To Workgroup REGISTRATION

Zoom Activities

FIG. 36

## Preferences

| File | Edit | Mail | Browser | Agents | Window | Help |

**SmartStream General**

**SmartStream Workflow**

**Inter Q**

☒ Refresh Task Counts Every     5   Minutes

☒ Notify Me of New Tasks

☒      Notify with message box

☒      Notify with          5   Beeps

☒      Suppress Own Task Notification

☒ Retrieve Next Task After Updated

☒ Assign To Delete Completed Task After Update

_3700_

[ START ]    [ CANCEL ]    [ HELP ]

FIG. 37

SmartStream 2.0

File   Edit   Mail   Browser   Agents   Window   Help

Browser

To Do Category - New To Do List

DBS Home Drawer

Activity Lists

Mail

To Do List

New To Do List

My Urgent To Do Tasks

Workgroup To Do Lists

10   Activity Category (s) have been updated

18   Category Added Check Configuration

1    Database Login has been added

0    Select payment type for class

6    You are now a Security Administrator

[2]

Task Details

Refresh

384

FIG. 38A

SmartStream 2.0

| File | Edit | Mail | Browser | Agents | Window | Help |

Copy...
Move...
To D| Link...
[2] 1 Select payment type for clas| Rename...
Delete
385
Collapse All

Drawer Privileges...

Customize Desktop...
Save Desktop New
Customize Activity List...

| ✓ | Medium | ET | | BS | |
| ✓ | Medium | SC101 | | DBS | |

Workgroup: REGISTRATION          Statue: Processed ✓
From: DBS                        From Activity: Class Registration
Original Owner: DBS      [user]  Create Time: Nov 24 1993 10:25 AM

FIG. 38B

---

SmartStream 2.0

| File | Edit | Mail | Browser | Agents | Window | Help |

---

**Browser**

☐ DBS Home Drawer

📄 Activity Lists

☐ Inter Q
☐ Management Reporter
☐ Product Support
☐ Query & Reporting
☐ Sample Class Registration
☐ Scheduler
☐ Security Group & User
☐ Security of Activity
☐ Server Administration
☐ Structure
☐ Workflow

📄 Mail

📄 To Do List

---

**To Do Category - New To Do List**

     9   Activity Category (s) have been updated

[2]  17   Category Added.  Check Configuration

[1]   1    Select payment type for classes
      1    You are a new member of a
           Workgroup
      6    You are now a Security Administrator

              384

---

FIG. 39

EP 0 793 184 A2

| To Do Information | |
|---|---|

File    Edit    Mail    Browser    Agents    Window    Help

To Do List:  New to Do List          <u>4000</u>

To Do Category:  You are a new member of a Workgroup

Original Owner:  DBS

Create Time:  Nov. 24, 1993  9:49:48:000AM

From User: DBS DBS

From Activity:  Workgroup

| Workgroup 10 | User |
|---|---|
| REGISTRATION | DBS |

START      CANCEL      HELP

FIG. 40

LOAD STORED
PROCEDURES ⎤ 4101

CREATE LOGICAL
SERVER NAMES ⎤ 4102

CREATE INSTANCE OF
ARPC DATABASE ⎤ 4103

REGISTER
INSTANCE OF ARPC
DATABASE ⎤ 4104

ADD ENTRIES INTO
NETWORK ACCESS
TABLE FOR SERVER ⎤ 4105

CREATE SYBASE USER
ACCOUNTS FOR USERS ⎤ 4106

STOP

FIG. 41

INSTALL SYBASE
REPLICATION SERVER — 4201

CREATE REPLICATION
SERVER AND LOG
TRANSFER MANAGER
ON PRIMARY SERVER — 4202

CREATE DBSREPLICATE
USER ON PRIMARY
SERVER — 4203

CREATE REPLICATION
DEFINITIONS FOR
REPLICATED TABLES — 4204

STOP

FIG. 42

BUILD DATABASES AND OBJECTS ON SUBSCRIPTION MACHINE — 4301

CREATE DBSREPLICATE USER ON SUBSCRIPTION SERVER — 4302

SET UP SECURITY — 4303

CREATE SUBSCRIPTIONS WITH OPTIONS FOR INITIAL DATA COPY — 4304

UPDATE TSDX — 4305

CREATE USER ACCOUNTS — 4306

STOP

FIG. 43

REMOVE USERS AND WORKGROUPS
FROM SERVER — 4401

REMOVE ALL APPLICATION DATA AND
APPLICATIONS FROM SERVER — 4402

BEGIN DEMATERIALIZATION

UPDATE TSDX — 4403a

IS ARPC QUEUE
ON
DEMATERIALIZED
SERVER EMPTY? — 4403b

NO

DISALLOW
DEMATERIALIZATION — 4404

STOP

YES

DOES ARPC QUEUE ON
PRIMARY SERVER CONTAIN
UPDATES ROUTED TO
DEMATERIALIZED SERVER? — 4403c

YES

NO

REMOVE ALL DATABASES ON
DEMATERIALIZED SERVER — 4403d

STOP

FIG. 44

FIG. 45

FIG. 46A

FIG. 46B

FIG. 47

```
┌─────────────────────────────────┐
│  SET UP WIJ_NEXT_SERVERNO ON     │  4801
│      PRIMARY SERVER              │
└─────────────────────────────────┘
              │
              ▼
┌─────────────────────────────────┐
│    SET UP WIJ_SERVERNO ON        │  4802
│      PRIMARY SERVER              │
└─────────────────────────────────┘
              │
              ▼
          ( STOP )
```

```
┌─────────────────────────────────┐
│  SET UP WIJ_SERVERNO.SERVERNO    │  4803
│     TO CONTAIN THE SERVER        │
│    UNIQUE SEQUENCE NUMBER        │
└─────────────────────────────────┘
              │
              ▼
┌─────────────────────────────────┐
│            ADD TO                │  4804
│  WIJ_NEXT_SERVERNO.NEXT_SERVERNO │
└─────────────────────────────────┘
              │
              ▼
┌─────────────────────────────────┐
│    SET UP WIJ_SEQNO.SEQNO ON     │  4805
│        NEW SERVER                │
└─────────────────────────────────┘
              │
              ▼
          ( STOP )
```

```
┌─────────────────────────────────┐
│  SET USER_CONFIG.NEXT_SEQ_NO AND │  4806
│  USER_CONFIG. LAST_SEQ_NO TO Ø   │
└─────────────────────────────────┘
              │
              ▼
          ( STOP )
```

FIG. 48

FIG. 49

EP 0 793 184 A2

```
┌────────────────────────────┐
│     GET USER TO LOG OFF     │ 5001
└────────────────────────────┘
              │
              ▼
┌────────────────────────────┐
│   DISABLE USER SO THEY CAN'T│ 5002
│         RE-LOG IN           │
└────────────────────────────┘
              │
              ▼
┌────────────────────────────┐
│ UPDATE USER MASTER TABLE TO │ 5003
│    POINT TO NEW SERVER      │
│ UPDATE USER_CONFIG. ON BOTH │
│     NEW AND OLD SERVER      │
└────────────────────────────┘
              │
              ▼
┌────────────────────────────┐
│ READ THROUGH AND COPY EACH  │ 5004
│ RECORD IN EACH TABLE (EXCEPT│
│ MESSAGE QUEUE) FROM SOURCE  │
│    TO DESINATION SERVER     │
└────────────────────────────┘
              │
              ▼
┌────────────────────────────┐
│ MOVE EACH MESSAGE IN MESSAGE│ 5005
│  QUEUE FROM SOURCE TO       │
│    DESTINATION SERVER       │
└────────────────────────────┘
              │
              ▼
┌────────────────────────────┐
│       RE-ENABLE USER        │ 5006
└────────────────────────────┘
              │
              ▼
┌────────────────────────────┐
│ HAVE USER LOG INTO NEW SERVER│ 5007
└────────────────────────────┘
              │
              ▼
┌────────────────────────────┐
│ DELETE USER'S DATA FROM OLD │ 5008
│          SERVER             │
└────────────────────────────┘
```

FIG. 50

127

DELETE ALL THE USER'S DATA
FROM NEW SERVER EXCEPT
FOR MESSAGE QUEUE

5101

START OVER FROM STEP 5004
FIG. 50

5102

FIG. 51

UPDATE WORKGROUP MASTER TO
POINT TO NEW SERVER

UPDATE WORKGROUP
CONFIGURATION TABLE ON BOTH
NEW AND OLD SERVERS

5201

MOVE EACH MESSAGE IN
MESSAGE QUEUE FROM SOURCE
TO DESTINATION SERVER

5202

FIG. 52